# FASCICULE DE BREVET EUROPEEN

(11) **EP 2 435 183 B1**
(45) Date de publication et mention de la délivrance du brevet: **24.11.2021**
(21) Numéro de dépôt: 10727017.5
(22) Date de dépôt: 28.05.2010
(51) Int. Cl.: B01J 31/22, B01D 53/86, B01D 53/94, B01J 23/745

(54) **UTILISATION D'UN SOLIDE HYBRIDE CRISTALLIN POREUX COMME CATALYSEUR DE RÉDUCTION D'OXYDES D'AZOTE ET DISPOSITIFS**
VERWENDUNG EINES PORÖSEN KRISTALLINEN HYBRIDFESTSTOFFS ALS STICKSTOFFOXIDREDUKTIONSKATALYSATOR UND VORRICHTUNGEN
USE OF A POROUS CRYSTALLINE HYBRID SOLID AS A NITROGEN OXIDE REDUCTION CATALYST AND DEVICES

(30) Priorité: 28.05.2009 FR 0902587
(43) Date de publication de la demande: 04.04.2012
(73) Titulaire: Centre National de la Recherche Scientifique, 75016 Paris (FR); Université de Caen Basse-Normandie, 14032 Caen Cedex (FR); Ensi Caen, 14050 Caen Cedex 4 (FR); KRICT (Korea Research Institute of Chemical Technology), Daejon 305-600 (KR)
(72) Inventeur: VIMONT, Alexandre, 14810 Merville-Franceville (FR); HORCAJADA CORTES, Patricia, 92370 Chaville (FR); HWANG, Yong Kyu, Daejeon 305-720 (KR); FEREY, Gérard, 75014 Paris (FR); DATURI, Marco, 14610 Epron (FR); CHANG, Jong-San, Daejeon 301-151 (KR); SERRE, Christian, 78370 Plaisir (FR); YOON, Ji Woong, Seoul 151-855 (KR)
(74) Mandataire: Novagraaf Technologies
(86) Numéro de dépôt international: PCT/FR2010/000402
(87) Numéro de publication internationale: WO 2010/136677

(56) Documents cités:
- EP-A- 1 070 538
- WO-A-2008/020218
- WO-A-2008/066293
- WO-A-2009/133278
- US-B1- 6 624 318
- HORCAJADA PATRICIA ET AL: "Synthesis and catalytic properties of MIL - 100 ( Fe ), an iron(III) carboxylate with large pores" CHEMICAL COMMUNICATIONS - CHEMCOM, ROYAL SOCIETY OF CHEMISTRY, GB, no. 27, 1 janvier 2007 (2007-01-01), pages 2820-2822, XP002476454 ISSN: 1359-7345 [extrait le 2007-05-15] cité dans la demande
- FLETCHER ET AL: "Flexibility in metal-organic framework materials: Impact on sorption properties" JOURNAL OF SOLID STATE CHEMISTRY, ORLANDO, FL, US, vol. 178, no. 8, 1 août 2005 (2005-08-01), pages 2491-2510, XP005027299 ISSN: 0022-4596
- SUNG C Y ET AL: "DFT Study of deNOx Reactions in the Gas Phase: Mimicking the Reaction Mechanism over BaNaY Zeolites" JOURNAL OF PHYSICAL CHEMISTRY A, vol. 113, no. 24, 21 mai 2009 (2009-05-21) , pages 6730-6739, XP002573488
- BAUER S ET AL: "High-Throughput Assisted Rationalization of the Formation of Metal Organic Frameworks in the Iron(III) Aminoterephthalate Solvothermal System" INORGANIC CHEMISTRY, vol. 47, no. 17, 6 août 2008 (2008-08-06), pages 7568-7576, XP002573489
- JASMINA HAFIZOVIC CAVKA ET AL: "A New Zirconium Inorganic Building Brick Forming Metal Organic Frameworks with Exceptional Stability" JOURNAL OF THE AMERICAN CHEMICAL SOCIETY, AMERICAN CHEMICAL SOCIETY, NEW YORK, USA, vol. 130, no. 42, 26 septembre 2008 (2008-09-26), pages 13850-13851, XP002536712 ISSN: 0002-7863
- XIAO B ET AL: "Chemically blockable transformation and ultraselective low-pressure gas adsorption in a non-porous metal organic framework" NATURE CHEMISTRY, vol. 1, no. 4, 22 juin 2009 (2009-06-22), pages 289-294, XP001536762
- None

## Description

### Domaine technique

La présente invention se rapporte à l'utilisation de solides constitués de réseau métal-organique ou « Metal-Organic Framework » (MOF), comme catalyseur de réduction d'oxydes d'azote.

Les oxydes d'azote concernés sont le monoxyde d'azote (NO) et le dioxyde d'azote (NO₂), collectivement notés NOx, ainsi que le protoxyde d'azote (N₂O), le trioxyde d'azote (N₂O₃) et le tétraoxyde de diazote (N₂O₄).

Les solides MOF de la présente invention sont avantageusement capables d'éliminer les oxydes d'azote d'un effluent liquide ou gazeux, par exemple de l'eau, des gaz d'échappement d'un véhicule, d'une usine, d'un atelier, d'un laboratoire, de produits stockés, de bouches d'aération urbaines, etc.

La catalyse « DeNOx » est un enjeu majeur pour nos sociétés. Elle permet de diminuer voire d'éviter les conséquences sur le plan de la santé publique des gaz toxiques NOx issus de l'activité humaine.
La présente invention concerne une nouvelle famille de catalyseurs DeNOx qui présente l'immense avantage de transformer les NOx même à température ambiante et en l'absence d'espèces réductrices, ce qui constitue un progrès majeur dans ce domaine.

Les références entre crochets [X] renvoient à la liste des références à la fin des exemples.

### État de la technique

Les réseaux métal-organique ou « Metal-Organic Framework » (MOF) sont des polymères de coordination de charpente hybride inorganique-organique comprenant des ions métalliques et des ligands organiques coordinés aux ions métalliques. Ces matériaux sont organisés en réseau mono-, bi- ou tridimensionnels où les clusters métalliques sont reliés entre eux par des ligands espaceurs de façon périodique. Ces matériaux ont une structure cristalline, sont le plus souvent poreux et sont utilisés dans de nombreuses applications industrielles telles que le stockage de gaz, l'adsorption de liquides, la séparation de liquides ou de gaz, la catalyse, etc.

Suite à la seconde guerre mondiale et parallèlement à l'essor des trente glorieuses, l'automobile s'est rapidement imposée comme le premier moyen de locomotion des pays industrialisés. Sous l'effet de la croissance économique, le parc automobile est toujours en constante augmentation. En France, le nombre de véhicules particuliers est passé de 16,7 millions en 1975 à environ 36 millions fin 2005. A l'échelle mondial, principalement dû à l'émergence des pays en voie de développement, il est aussi prévu que celui-ci sera multiplié par 2 à l'horizon 2030, comme cela apparaît dans le document « Définition et implications du concept de voiture propre », sur www.senat.fr/rap/r05-125/r05-125.html [1].

Cette mobilité accrue à l'échelle planétaire n'est malheureusement pas sans impact sur l'environnement et la santé. Les moteurs thermiques (Diesel, Essence et GPL) sont notamment à l'origine d'une part non négligeable de la pollution atmosphérique. Les principaux polluants émis sont les oxydes de carbone (CO et CO₂), les composés organiques volatils (COV), les hydrocarbures imbrûlés, ainsi que les oxydes d'azote. Sous ce nom on entend regrouper essentiellement le monoxyde d'azote (NO) et le dioxyde d'azote (NO₂), auxquels s'ajoutent en moindre dose le protoxyde d'azote (N₂O), le trioxyde d'azote (N₂O₃) et le tétraoxyde de diazote (N₂O₄). Les composés analysés par les réseaux de surveillance sont uniquement le NO et le NO₂ dont la somme est regroupée sous le terme NOx.

Aujourd'hui, de nombreuses études ont permis de mettre en évidence les effets néfastes occasionnés et de sensibiliser les populations. On trouve par exemple une de ces études sur www.doctissimo.fr/html/sante/mag_2001/mag0817/dossier/sa_4404_polluti on_effets_sante.htm, « Pollution : Quels effets sur la santé ? » [2]. Selon l'Organisation Mondiale de la Santé, environ 3 millions de personnes meurent chaque année sous l'effet de la pollution atmosphérique.

Les oxydes d'azote (NOx) sont émis principalement par les véhicules automobiles et l'industrie. Ils sont formés en chambre de combustion par une réaction en chaîne à haute température entre l'oxygène, l'azote de l'air et les radicaux hydroxyles, comme décrit dans le document P. Degobert, Automobile et Pollution, Editions Technip, Paris (1992) « réaction de Zeldovich » [3]). Ces gaz, toxiques pour la santé, comme décrit dans Samoli E et al., Eur. Respir. J., 27 (2006) 1129 ; Peters A et al., Epidemiology (Cambridge, Mass.), (2000 Jan) Vol. 11, No. 1, pp. 11 ; et Arden Pope C et al., Circulation, 109 (2004) 71 [4, 5, 6] et nuisibles à l'environnement sont en particulier responsables de la formation du brouillard photochimique, de l'ozone troposphérique et d'une partie des pluies acides. Ils sont de plus en plus présents dans l'atmosphère des villes et donc surveillés [3].

Si d'une part de nombreux efforts ont été faits pour éliminer ces polluants, en utilisant des systèmes de réduction des NOx aux sources d'émission (véhicules, cheminées, etc.), des concentrations croissantes d'oxydes d'azote sont d'autre part signalées dans le villes, ainsi que le décrit le document Gouriou F et al., Atmospheric Environment, 38 (2004) 2831 [7]. Cela est dû à l'utilisation croissante de moteurs Diesel et moteurs à charge stratifiée (« lean burn engine » ou « à mélange pauvre »), moins polluants à l'origine et moins coûteux en termes de carburant, mais fonctionnant à des mélanges de combustion très riches en oxygène, favorisant donc la production d'oxydes d'azote.

De plus, l'utilisation massive de catalyseurs à base de métaux nobles dans les systèmes de post-combustion, afin d'éliminer CO, hydrocarbures imbrûlés et suies des émissions des véhicules, a davantage augmenté la teneur en NOx dans l'air des grandes agglomérations, aux abord des axes routiers et, surtout, dans les habitacles des voitures, comme décrit dans Son B et al., Environmental Research, 94 (2004) 291 ; et Praml G et al., International Archives of Occupational and Environmental Health, 73 (2000) 209 [8, 9].

La prise de conscience des autorités sur les nuisances engendrées par ces différentes émissions dans l'atmosphère les a conduit à établir des normes visant à réduire ces rejets. Les premières directives européennes sont apparues en 1970, puis renforcées et régulièrement révisées par les normes EURO. Aujourd'hui, la commission propose les normes EURO V et VI dont les valeurs sont supposées entrer en vigueur au 1er septembre 2009 pour la première et 5 ans plus tard pour la suivante (voir tableau A ci-dessous : Réglementation européenne relative aux émissions des véhicules neufs. Valeurs en g / km ; données ADEME publiées sur le site www.ademe.fr [10])

EURO 5 met principalement l'accent sur les émissions de particules des échappements Diesel, qui rendront indispensable l'utilisation de filtres sur ces véhicules, alors que pour la norme suivante ce seront surtout les oxydes d'azote qui devront être réduits. Ce qui est dû au fait qu'aucune technologie ne garantit aujourd'hui une action efficace pour réduire les NOx aux valeurs préconisées pour EURO 6. On espère qu'à échéance 2014 des progrès auront été faits. Cette dernière directive est alors toujours à l'étude par la communauté européenne.

**Tableau A : Réglementation européenne relative aux émissions des véhicules neufs. Valeurs en g / km**

| | **ESSENCE** | | | | **DIESEL** | | | |
|---|---|---|---|---|---|---|---|---|
| | **CO** | **HC** | **NOₓ** | **HC+NOₓ** | **CO** | **NOₓ** | **HC+NOₓ** | **Particules** |
| **Euro 1 (1992)** | 2,72 | - | - | 0,97 | 2.72 | - | 0,97 | 0,14 |
| **Euro 2 (1996)** | 2,20 | - | - | 0,5 | 1,00 | - | 0,90 | 0,10 |
| **Euro 3 (2000)** | 2,30 | 0,20 | 0,15 | - | 0,64 | 0,50 | 0,56 | 0,05 |
| **Euro 4 (2005)** | 1,00 | 0.10 | 0,08 | - | 0,50 | 0,25 | 0,30 | 0,025 |
| **Euro 5 (2009)** | 1,00 | 0,075 | 0,06 | - | 0,50 | 0,18 | 0,23 | 0,005 |
| **Euro 6 (2014)** | | | | - | 0,50 | 0,008 | 0,17 | 0,005 |

Le problème se pose de manière relativement différente selon que l'on considère les véhicules à allumage commandé, c'est à dire à essence, ou à injection indirecte telles que les motorisations Diesel.

Fonctionnant en large excès d'air, ces derniers sont plus économiques que les moteurs à essence, qui eux nécessitent des proportions air / carburant stoechiométriques : 1 gramme de carburant pour 14,7 grammes d'air pour l'essence contre environ 30 grammes pour le Diesel. Ces conditions fortement oxydantes du Diesel, lui permettent d'avoir des émissions plus faibles en CO et hydrocarbures. De plus, les NOx s'y forment en moindre proportion du fait d'une plus faible température de combustion. Cependant les véhicules Diesel produisent des quantités significatives de particules, au contraire de ceux à essence.

Depuis le début des années 80, des progrès en matière d'émissions polluantes, à l'exception du CO₂ , ont été réalisés (voir par exemple Miyata H et al., J. Chem. Soc., Faraday Trans., 91 (1995) 149 [11]. Ils sont liés à différents facteurs tels que l'amélioration des réglages moteurs, une meilleure qualité d'essence (en 1989, apparition de l'essence sans plomb en France / élimination progressive du soufre), ainsi qu'à l'utilisation des premiers convertisseurs catalytiques.

Plus polluants à l'origine, les efforts ont tout d'abord été orientés vers les véhicules à essence. Les premiers convertisseurs catalytiques sont apparus dès 1975, comme reporté notamment dans Shelef M et al., Catal. Today, 62 (2000) 35 [12] et, depuis le début des années 90, ils équipent tout le parc automobile occidental, sous l'appellation de catalyseur trois voies (« three-way-catalyst » ou TWC), car ils permettent de réaliser simultanément l'oxydation du CO et des hydrocarbures en CO₂, ainsi que la réduction des NOx, comme décrit dans Farrauto RJ et al., Catal. Today, 51 (1999) 351 [13].

Pour ce qui est des motorisations Diesel, leur niveau d'émission de polluants globalement plus faible leur a permis de passer les normes européennes de 1993 au prix de simples réglages moteurs. Néanmoins, la législation devenant plus drastique avec la norme EURO 3, ils ont dû être équipés de catalyseur deux voies réduisant les émissions de CO et d'hydrocarbures, mais pas celles des oxydes d'azote. Cependant, depuis 2005 les autorités pointent du doigt les émissions d'oxyde d'azote. Or, si les flux gazeux fortement oxydants des moteurs Diesel permettent aisément l'oxydation catalytique des polluants réducteurs, ils rendent très compliquée la réduction des oxydes d'azote dans un tel milieu.

La catalyse « trois voies », opérante dans le cas des véhicules à essence est inapplicable en milieu fortement oxydant, car elle nécessite une stœchiométrie entre les agents oxydants et réducteurs qui ferait perdre tout intérêt aux moteurs à gasoil, notoirement plus limités en consommation. De plus, la fenêtre de température pour le fonctionnement des catalyseurs TWC, adaptée pour les véhicules à essence, est également trop haute par rapport à la température des effluents Diesel.

Différentes stratégies ont été mises en place pour faire face à cette problématique, cependant à ce jour, aucune technologie n'est capable de répondre correctement à ce problème qui représente un défi important pour de nombreux scientifiques, comme décrit dans Jobson E, Top. Catal., 28 (2004) 191 [14]. Ces stratégies sont: 1. La réduction catalytique sélective des NOx (SCR) ; 2. Le piégeage des oxydes d'azote : procédé NOx-trap (ou NSR) ; et 3. La décomposition directe

### 1. Réduction catalytique sélective des NOx (SCR)

Comme nous l'avons souligné précédemment, la faible teneur en agents réducteurs dans les échappements des véhicules Diesel et lean burn rend difficile la conversion des NOx en azote. C'est pourquoi, certains chercheurs ont envisagés d'additionner un ou plusieurs réducteurs dans le mélange de post traitement, en présence d'un catalyseur adéquat pour promouvoir cette réaction. Les réducteurs peuvent être du CO, associé ou non à de l'hydrogène, des hydrocarbures ou encore de l'ammoniac (NH₃ formé in situ à partir d'urée).

Réduction catalytique par CO ou H₂ : l'utilisation de deux réducteurs tels que CO et H₂, déjà présents dans les gaz d'échappements, a suscité un intérêt tout particulier. Notamment la réaction entre NO et CO, qui sont tous les deux indésirables dans les échappements, est tout de suite venue à l'esprit des chercheurs : NO + CO → CO₂ + ½ N₂. L'hydrogène quant à lui peut provenir en particulier des hydrocarbures ou d'une réaction de gaz à l'eau au niveau même du catalyseur. Dans les deux cas, les catalyseurs à base de métaux nobles sont parmi les plus actifs. De nombreux oxydes métalliques (en particulier les pérovskites) ainsi que des zéolithes échangées par des métaux de transition ont également été étudiés, comme décrit dans Pârvulescu V.I et al., Catal. Today, 46 (1998) 233 [15].

La plupart des mécanismes proposés se résument à la dissociation du NO, suivie par la réaction entre O_{ads} avec CO ou l'hydrogène pour former CO₂ et H₂O. Cependant ces réactions n'ont rien de sélectif et des produits de réduction secondaires indésirables sont formés. L'utilisation de l'hydrogène sur différents oxydes métalliques révèle notamment une production souvent importante de NH₃, comme décrit dans Shelef M et al., Ind. Eng. Chem. Prod. Res. Dev., 13 (1974) 80 [16]. Les études de Burch sur Pt/SiO₂ ou Pt/Al₂O₃ reportées dans Burch R et al., Appl. Catal. B, 23 (1999) 115 [17] donnent des résultats intéressants dans la réaction NO/H₂, mais dans les conditions réelles, et particulièrement à basse température en présence de vapeur d'eau, il constate la formation de N₂O. De plus, comme dans le cas de la décomposition, la forte teneur en oxygène rencontrée dans les échappements Diesel inhibe la réaction. Ce type d'application n'est donc pas envisageable en conditions Diesel.

Réduction catalytique sélective par les hydrocarbures : la RCS du NO par les hydrocarbures présents en sortie des moteurs Diesel et lean burn est une voie intéressante pour éliminer les oxydes d'azote. Cependant, la faible teneur de cet agent réducteur dans les échappements (environ 2000 ppm d'équivalent carbone), ainsi que la forte concentration en oxygène, représentent un réel challenge pour ce type de procédé. Comme pour les études présentées précédemment, un grand nombre de matériaux catalytiques a aussi été testé, mais aucune solution satisfaisante n'a été trouvée à ce jour.

Dès 1990, Held et al., SAE paper n° 900496, (1990) [18] ainsi que Iwamoto, Proc. Meet. Catal. Technol. Renoval of NO, Tokyo, (1990) 17 [19] ont séparément découvert que les alcanes, aussi bien que les alcènes, sont capables de réduire l'oxyde d'azote sur une zéolithe Cu-ZSM-5, non seulement en présence d'oxygène, mais aussi qu'en excès d'oxygène cette réaction est favorisée, au moins en ce qui concerne les températures d'émission Diesel. Busca et al., tel qu'indiqué dans J. Catal., 214 (2003) 179 et Appl. Catal. B : Environ., 71 (2007) 216 [20, 21] ont également étudié divers matériaux, en présence notamment de méthane. La réduction est optimale vers 573 K ; au delà de cette température, l'oxydation de l'hydrocarbure est favorisée au détriment de la réduction de NO. Le taux optimal d'échange du cuivre sur la zéolithe ZSM-5 est proche des 100% (Sato S et al., Appl. Catal., 70 (1991) L1 [22]), ce qui permet d'avoir une activité de réduction 5 fois plus importante que sur HZSM-5. La nature de l'agent réducteur ainsi que sa concentration ont aussi été étudiés. En effet, si l'éthène, le propane, le propène ou encore le butane mènent à une réduction en azote même en présence d'eau, l'hydrogène, le monoxyde de carbone ou le méthane réagissent essentiellement avec l'oxygène.

L'ajout de Pt sur ZSM-5, permet d'obtenir de bons résultats, notamment en présence d'eau sans aucune désactivation, contrairement à Cu-ZSM-5 ou Fe-MOR (Hirabayashi H et al., Chem. Lett., (1992) 2235 [23]). Néanmoins cet ajout de Pt entraîne la formation de N₂O en quantités importantes. Hamada et al. (Appl.Catal., 64 (1990) L1 et Catal. Lett., 6 (1990) 239 [24, 25]) ont aussi trouvé, très peu de temps après les premières découvertes sur ces matériaux, que les zéolithes protonées et les alumines sont également actives pour cette réaction, mais les températures nécessaires pour atteindre une sélectivité satisfaisante sont beaucoup trop élevées et le coût des zéolithes trop élevé.

De nombreuses études ont été réalisées sur les métaux nobles supportés sur oxydes métalliques, en particulier sur le platine. Burch et al. ont notamment étudié une série de matériaux catalytiques composés de Pt déposé sur un support Al₂O₃, de teneur variable en Pt et préparés à partir de différents précurseurs. Les résultats révèlent une interdépendance entre la quantité de métal, la température du maximum de conversion de NO et le niveau d'activité comme décrit dans Burch R et al., Appl. Catal. B, 4 (1994) 65 [26]. Pour un précurseur de Pt donné, lorsque la teneur en métal introduit augmente, ils ont constaté une diminution de la température correspondant au maximum de conversion des NOx ainsi qu'une augmentation de l'activité correspondante. Cependant, la sélectivité en azote de ces matériaux n'est pas totale : aux basses températures, des quantités importantes de N₂O (40%) sont aussi produites. Burch a complété ses études sur Pt/Al₂O₃ avec Watling (Burch et al., Appl. Catal. B, 11 (1997) 207 [27]) en introduisant individuellement différents éléments : K, Cs, Mg, Ca, Ti, Co, Cu, Mo, La, Ce, via l'introduction de sels de nitrates ou d'acétates. Seuls Ti et Mo semblent apporter un léger effet positif, alors que tous les autres entraînent une baisse d'activité de Pt/Al₂O₃. Des précurseurs à base d'autres métaux nobles ont également été testés, par exemple Ag, Au, Pd et Rh, mais les résultats ne sont guère plus concluants, avec cependant une légère amélioration avec Ag. Ainsi, aucun de ces promoteurs ne permet d'améliorer sensiblement la sélectivité en N₂ du catalyseur Pt/Al₂O₃.

D'autres études sur les métaux nobles supportés sur alumine ont été reportées par Obuchi et al., App. Catal. B: Environ., 2 (1993) 71 [28]. Elles ont montré que pour un réducteur donné il existe bien une relation entre l'activité du catalyseur et la nature du métal noble. Pour ce qui est de l'iridium (Ir) et du palladium (Pd), ils ne donnent pas de conversion supérieure à 25%, alors que le rhodium (Rh), le ruthénium (Ru) ainsi que le platine (Pt) permettent d'atteindre des valeurs bien supérieures. Un maximum de conversion d'environ 60% est obtenu à relativement basse température (523 K) sur le Pt, alors que ce même maximum est atteint à 593 K, soit 320°C, sur les autres métaux nobles, par exemple Rh et Ru. Cependant, la sélectivité en azote est très différente entre ces métaux : elle n'est que de 32% pour le Pt à 523 K, soit 250°C, contre environ 80% à 593 K sur les autres (Bamwenda G.R et al., Appl. Catal. B : Environ., 6 (1995) 311 [29]). Parmi ces différents métaux supportés sur alumine, le Rh apparaît comme le plus sélectif en azote.

Le coût de ces métaux nobles et l'impact sur l'environnement en terme de déchets générés sont cependant rédhibitoires pour une application laboratoire, industrielle et automobile.

L'importance du choix du réducteur a aussi été mise en évidence à partir de données obtenues par Bourges et al. Catalysis and automotive Pollution Control IV, Stud. Surf. Sci. Catal., 116 (1998) 213 [30], ainsi que par Burch et Ottery Appl. Catal. B, 9 (1996) L19 [31]. Ceci est bien visible avec le toluène qui induit une bonne sélectivité en N₂ sans former de N₂O. Le toluène est cependant très toxique.

Plusieurs mécanismes, que nous ne détaillerons pas ici, ont été proposés pour expliquer la réduction catalytique des oxydes d'azote sur ces matériaux. Au cours de ces travaux, l'équipe de Burch [26] a mis en évidence le rôle crucial de la réduction du Pt en surface. Sur Pt/Al₂O₃ complètement réduit, très peu de NOx se désorbent sous forme de N₂O, car la dissociation de NO sur les particules réduites entraîne préférentiellement la recombinaison en N₂. Alors que sur une surface oxydée, la majorité des NOx s'adsorbe et se désorbe sans dissociation. De plus, l'utilisation des alcènes, contrairement au CO permet potentiellement d'éliminer plus d'atomes d'oxygène en surface, 9 pour le propène si la combustion est complète contre seulement 1 pour le CO, permettant de fixer puis de dissocier le NO. Lorsque la température est augmentée, l'adsorption et la dissociation de NO sont facilitées ainsi que la mobilité du N_{ads} permettant une recombinaison en N₂ plus aisée. Par contre, pour les basses températures les espèces dissociées réagissent avec NO pour former N₂O. Ces résultats ne sont pas satisfaisants.

D'autres chercheurs supposent le passage par des intermédiaires de type CₓH_{y}O_{z}N, pouvant être des espèces nitro, nitrites ou carbonyles pour Tanaka et al., Appl. Catal. B : Environ., 4 (1994) L1. [32] ou encore isocyanates ou cyanure pour Bamwenda et al. [29].

Les oxydes métalliques simples tels que Al₂O₃, SiO₂-Al₂O₃, TiO₂, ZrO₂ ou encore MgO, à l'exception de la silice seule, sont actifs pour la réduction catalytique sélective des oxydes d'azote par les hydrocarbures en environnement oxydant. Leurs performances peuvent aussi être améliorées en ajoutant un ou plusieurs métaux de transition. Un grand nombre d'études ont été entreprises dans ce sens et reportées en littérature.

Par exemple, l'ajout de Cu sur alumine a notamment permis d'améliorer les performances de cet oxyde, en abaissant la température du maximum de conversion tout en augmentant le pourcentage d'activité, comme reporté par Torikai Y et al., Catal. Lett., 9 (1991) 91 [33]. Des résultats similaires sur cet oxyde ont aussi été constatés par ajout de Co ou de Fe, ainsi que sur un matériau mixte SiO₂-Al₂O₃. Hamada et al. ont aussi comparé les activités de plusieurs oxydes métalliques (Cu, Co, Ni, Mn, Fe) supportés sur alumine ou silice (Hamada H et al., Appl.Catal., 75 (1991) L1 [34], Inaba M et al., Proc. 1st Int. Cong. On Environ. Catal., (1995) 327 [35]) et constaté que les catalyseurs à base de silice sont moins actifs que ceux contenant de l'alumine. L'activité de ces derniers est dépendante de la technique de préparation ainsi que du traitement thermique. De plus, les catalyseurs contenant des aluminates se révèlent encore meilleurs. Enfin, ils suggèrent que l'oxydation du NO en NO₂ est la première étape du mécanisme de réduction sur ce type de catalyseurs.

Les travaux de Miyadera sur plusieurs oxydes à base de métaux de transition (Cu, Co, Ag, V, Cr) supportés sur alumine décrits dans Miyadera T, Appl. Catal. B, 2 (1993) 199 [36], montrent quant à eux que l'Ag est le plus réactif dans les conditions Diesel. Il permet d'obtenir à 673 K, une conversion d'environ 80%. Sur ce matériau (Ag/Al₂O₃) Shimizu et al. ont également étudié l'influence de la nature de l'hydrocarbure (Shimizu K et al., Appl. Catal. B: Environ., 25 (2000) 239 [37]) : la température d'activation diminue avec la longueur de la chaîne carbonée, avec une conversion totale de NO en N₂ à 623 K avec 750 ppm de n-octane et 1000 ppm de NO pour 10% d'oxygène et 2% d'eau. Avec ces catalyseurs, des composés tels que l'éthanol ou l'acétone sont plus efficaces que le propène comme agent réducteur, notamment à des températures plus basses (Hamada H et al., Appl. Catal. A : General, 88 (1992) L1 [38]). Cependant, l'ajout d'alcool pour une application automobile nécessite l'ajout d'un réservoir, peu pratique et surtout peu économique. En outre, tous ces métaux sont toxiques et ils posent des problèmes importants pour l'environnement et le recyclage des matériaux utilisé.

La majorité de ces systèmes catalytiques à base d'oxyde, utilisant les alcanes ou les alcènes comme agent réducteur, subissent cependant une baisse significative de leur activité en présence d'eau et de SO₂, contrairement à ceux qui utilisent des alcools. Il est donc nécessaire de les remplacer fréquemment, ce qui est compliqué et coûteux. Tabata et al. ont observé que l'ajout d'étain à l'alumine améliore la résistance de ces catalyseurs en présence de SO₂ mais également d'eau. De plus, Haneda et al. Catal. Lett., 55 (1998) 47 [39] envisagent au contraire un effet promoteur de l'eau pour la réduction de NO en présence de propène sur In₂O₃/Ga₂O₃/Al₂O₃. Cet effet s'expliquerait par le fait que l'eau entraînerait l'élimination des dépôts carbonés à la surface du catalyseur. Ces solutions ne résolvant cependant pas tous les problèmes rencontrés dans ces systèmes.

La réduction catalytique par l'ammoniac (NH₃) est dite sélective, contrairement à celle utilisant le CO ou H₂, car le réducteur (NH₃) réagit préférentiellement avec le NO, malgré la présence d'oxygène en excès.

Les matériaux les plus actifs pour cette réaction sont les oxydes à base de vanadate et éventuellement de molybdate et de tungstate supportés sur titane (Busca G et al., Appl. Catal. B: Environ., 18 (1998) 1 [40] et Catal. Today, 107-108 (2005) 139 [41]). Les zéolithes échangées par des métaux de transition, les métaux nobles ou le charbon actif présentent aussi une activité [15]. Les équations bilan des réactions classiques de réduction des NOx par NH₃ sont reportées ci-dessous, mais il existe aussi des réactions parallèles menant à l'oxydation de NH₃ en NO ou N₂O [18].

4 NO + 4 NH₃ + O₂ → 4 N₂ + 6 H₂O

2 NO₂ + 4 NH₃ + O₂ → 3 N₂ + 6 H₂O

NO + NO₂ + 2 NH₃ → 2 N₂ + 3 H₂O

Depuis plusieurs années déjà, cette méthode d'élimination des oxydes d'azote par l'utilisation d'ammoniac présente, bien que coûteuse, des résultats très encourageants à l'échelle industrielle, c'est-à-dire 90% d'efficacité lorsque les gaz sont situés dans la fenêtre de température du catalyseur : entre 473 K et 773 K, soit environ 200 à 500°C. Elle est opérante et mise en place dans des installations fixes, telles que les usines de production d'acide nitrique, les centrales thermiques ou encore dans les incinérateurs. Mais elle pose divers problèmes quant à son application sur des émissions présentant des températures des gaz de l'ordre de 393 à 423 K, soit environ 120 à 150°C, par exemple dans les domaines des cimenteries et verreries, qui nécessitent donc d'être réchauffés, ce qui entraine des dépenses énergétique additionnelle importantes, ainsi que pour ce qui concerne l'automobile ou autres sources mobiles. Les catalyseurs présentent en effet une importante instabilité thermique et l'injection d'ammoniac est difficile à maîtriser : insuffisances dans le flux ou surplus, avec fuites conséquentes. Ces inconvénients sont très problématiques et n'ont pas encore trouvé de solution.

De nombreuses études plus ou moins avancées sont actuellement en cours pour essayer d'adapter ce procédé aux véhicules Diesel. Aucune ne se montre prometteuse pour l'instant. Le réducteur envisagé n'est pas de l'ammoniac mais une solution aqueuse d'urée (NH₂CONH₂) inodore et non toxique, qui injectée à l'échappement va libérer de l'ammoniac par une réaction d'hydrolyse.

Dans un dispositif de réduction catalytique sélective des NOx, utilisant l'ammoniac formé à partir de l'urée comme réducteur, le catalyseur d'oxydation placé en amont permet d'augmenter le rapport NO₂ / NO des gaz d'échappements et ainsi d'accroître l'efficacité de conversion notamment à basse température, en tenant compte du fait que la réaction de NO₂ avec NH₃ est plus rapide que la réaction de NO avec NH₃ ; néanmoins la présence de NO reste indispensable. Lors de différents travaux, un ratio optimal entre NO et NO₂ a en effet été déterminé afin d'augmenter l'activité et la sélectivité en azote de cette réaction de SCR (Heck R.M, Catal. Today, 53 (1999) 519 Koebel M et al., Catal. Today, 53 (1999) 519 [43], Richter M et al., J. Catal., 206 (2002) 98 [44]). De plus un catalyseur de « clean up » nécessite d'être placé en aval de ce dispositif, permettant de traiter les éventuels rejets d'ammoniac excédentaires, notamment pendant les phases transitoires. En effet, l'utilisation de ce procédé peut conduire à un relargage d'ammoniac.

La mise au point du système pour une application véhicule va nécessiter de calibrer très précisément la quantité d'urée injectée en fonction de la quantité de NOx émis par les moteur, qui dépend elle-même de la température d'échappement et des caractéristiques du catalyseur utilisé. Cette mise au point s'annonce donc très complexe et au résultat incertain. A ce titre, la présence du catalyseur de nettoyage (« clean up ») offre une flexibilité supplémentaire et permet d'atteindre des taux de conversion des NOx plus élevés sans réémission d'ammoniac dans l'atmosphère. Mais cela engendre un coût supplémentaire et un dispositif plus compliqué.

En absence d'oxygène, la réduction de NO en présence de NH₃ est aussi possible mais beaucoup plus lente et ne se produit pas en mélange pauvre.

6 NO + 4 NH₃ → 5 N₂ + 6 H₂O

Par contre Kato et al. J. Phys. Chem., 85 (1981) 4099 [45] ont montré qu'avec un rapport équimolaire entre NO et NO₂, la vitesse de réaction est considérablement augmentée (SCR rapide)

NO + NO₂ + 2 NH₃ → 2 N₂ + 3 H₂O

Ainsi, il est préférable d'avoir un mélange stœchiométrique de NO et NO₂ et d'éviter surtout un surcroît de NO, qui réagit moins rapidement avec l'ammoniac. Cependant en fonction des conditions opératoires, des réactions non désirées consommant de l'ammoniac peuvent se produire, notamment son oxydation en azote au-delà de 673 K, comme indiqué par Richter et al. [44] et Satterfield C.H, "Heterogenous Catalysis in Industrial Practice" Second édition. McGraw-Hill (1991) [46], ou son oxydation en NO ou NO₂ :

4 NH₃ + 3 O₂ → 2 N₂ + 6 H₂O (pour T > 673 K)

4 NH₃ + 5 O₂ → 4 NO + 6 H₂O

4 NH₃ + 7 O₂ → 4 NO₂ + 6 H₂O

4 NH₃ + 4 NO + 3O₂ → 4 N₂O + 6 H₂O

Différents mécanismes ont été publiés pour expliquer les phénomènes observés : les travaux de Busca et al. [40] font le bilan de différentes études avec des catalyseurs au vanadium supporté sur des oxydes métalliques.

Ce concept très performant, initialement prévu et employé sur des installations fixes, du fait de la stabilité thermique ainsi que des vitesses spatiales, ne semblait pas il y a encore quelques années applicable aux sources mobiles. En effet, l'utilisation de produits toxiques embarqués tels que l'ammoniac et le vanadium n'est pas sans poser de problème ; sans compter la faible stabilité thermique des supports à base de titane. Les avancées technologiques, dont l'éloignement du catalyseur SCR du moteur, ayant comme conséquence une plus faible température des gaz à traiter, ainsi que l'utilisation d'urée comme réactif de départ ont en partie répondu à ces inquiétudes. Ainsi depuis peu, les poids lourds commencent à être équipés de ce dispositif pour réduire leurs émissions de composés azotés.

Cependant il reste difficilement applicable sur les automobiles qui ont, à la différence des camions, des motorisations qui changent en permanence de régime et donc, où les quantités de NOx émises sont très variables durant ces phénomènes transitoires. Des perspectives d'améliorations sont encore possibles grâce à la mise en place en amont d'un système très précis permettant de contrôler les émissions de NOx du moteur, et d'envoyer ainsi la quantité d'urée adéquate pour éviter d'émettre du NH₃ dans l'atmosphère.

Néanmoins, même si ces améliorations voient le jour, le coût de la mise en place d'un tel dispositif sera probablement un obstacle majeur. Il faudra en effet ajouter aux véhicules un réservoir supplémentaire d'une vingtaine de litres et mettre en place un système de distribution d'urée, nécessaire au bon fonctionnement de ce système. Le gel de la solution d'urée est aussi un obstacle mineur qu'il faut gérer pour des applications dans des climats froids. Mais surtout, le fonctionnement est totalement défaillant à moins de 473 K, soit environ 200°C.

### 2. Piégeage des oxydes d'azote : procédé NOx-trap (ou NSR)

Le piégeage des NOx qui permet d'atteindre des taux d'efficacité comparables à ceux de la SCR à l'urée, sans présenter l'inconvénient d'embarquer un réducteur supplémentaire, représente une réelle alternative énergétiquement efficace et respectueuse de l'environnement pour le traitement des oxydes d'azote et suscite actuellement de nombreux développements.

Le nouveau type de convertisseur catalytique dit NOx-trap ou « piège à NOx » (ou NSR) est apparu au début des années 90 à l'initiative de la société Toyota (Toyota Patent EP 573 672A1 (1992) [47], Myioshi N et al., SAE Technical Papers Series No. 950809, 1995 [48]). Les matériaux utilisés sont généralement composés d'un support à base d'alumine, de cérine, voire de zircone sur lesquels sont successivement déposés un oxyde d'alcalin ou d'alcalino-terreux (couramment Ba ou Sr) jouant le rôle d'adsorbant, ainsi qu'un ou plusieurs métaux précieux (Pt / Pd / Rh).

Ce système à la particularité de fonctionner alternativement sous atmosphère oxydante puis réductrice. En effet, pour pallier au surplus de carburant qu'occasionnerait une réduction continue des oxydes d'azote en environnement riche en oxygène, il a été décidé de concentrer tout d'abord les oxydes d'azote sur le matériau avant de les réduire en azote lors d'une injection ponctuelle de carburant.
- Durant la majeure partie du temps, sous flux pauvre en agents réducteurs, les oxydes d'azote sont oxydés en nitrates, stockés sur l'adsorbant au fur et à mesure de leur sortie du moteur.
- Puis périodiquement, lors de la phase riche, une quantité plus importante de réducteurs, correspondant à un pic de carburant, est injectée. Cela entraîne ainsi la décomposition des espèces stockées sur l'adsorbant, puis la réduction des NOx en azote sur les sites métalliques voisins.

Le déstockage et la réduction des oxydes d'azote nécessitent donc un fonctionnement à une richesse du mélange air / carburant (λ) inférieure ou égale à 1, inhabituelle pour un moteur Diesel. Ce fonctionnement est obtenu par modification des réglages moteur, notamment du débit d'air, du phasage et de la durée des injections, etc.

L'objectif des développements en cours est d'optimiser ces basculements de richesse, afin d'atteindre le meilleur compromis NOx / surconsommation de carburant. Pour ce faire, de nombreux paramètres sont à prendre en considération, notamment les matériaux utilisés pour catalyser les réactions mises en jeu. Le catalyseur doit en effet présenter des propriétés optimales dans les conditions d'échappements Diesel, afin de permettre un bon stockage des oxydes d'azote ainsi qu'une bonne régénération sous flux riche, limitant ainsi la consommation de carburant.

Suite à la mise au point par Toyota du premier catalyseur NOx-trap performant, de formulation : Pt-Rh/BaO/Al₂O₃, de nombreuses améliorations ont été apportées. Ce procédé est actuellement validé et opérationnel dans certains pays, notamment au Japon, où les carburants présentent de très faibles teneurs en soufre. En effet, la présence de soufre entraîne la formation de sulfates, qui entrent directement en compétition avec les nitrates pour les mêmes sites de stockage et qui, de plus, saturent progressivement le matériau.

Plus récemment, la société Daimler Benz (Krutzsch B et al., SAE Technical Papers Series N° 982592 (1998) [49]; Brevet Allemand N°4319 294 (1994) [50]) a mis au point une variante non catalytique de ce procédé, appelée « Selective NOx recirculation » (SNR). Elle conserve le principe de fonctionnement en alternance présenté précédemment. Mais les NOx produits lors de la décomposition des espèces stockées sous flux pauvre ne sont pas dans ce cas réduits sur les métaux nobles, mais renvoyés dans la chambre de combustion afin d'être éliminés : l'équilibre thermodynamique 2 NO = N₂ + O₂, fonction de la température de combustion, assure que la majorité des oxydes d'azote soient réduits.

Les études sur le procédé NOx-trap sont déjà bien avancées et de nombreux travaux ont permis de comprendre et de mettre en avant certains paramètres et mécanismes qui régissent l'activité des matériaux utilisés.

L'optimisation de l'ensemble du système aussi bien au niveau du moteur que du matériau reste cependant indispensable pour atteindre des efficacités de réduction répondant aux prochaines normes, tout en minimisant la surconsommation de carburant engendrée par ce concept. L'introduction de ce procédé dans la plupart des pays européens nécessite aussi de résoudre les problèmes liés au soufre, même si de nombreux progrès en matière de désulfuration des carburants ont déjà été réalisées, notamment par la possibilité d'obtenir des carburants à la pompe ayant une teneur en soufre inférieure à 10 ppm.

### 3. Décomposition directe

Le processus de décomposition directe est la façon la plus simple de transformer les NOx en N₂ et O₂. De plus, le fait de ne pas ajouter d'agents réducteurs tels que CO, H₂ ou des hydrocarbures empêche la formation de polluants secondaires tels que CO, CO₂ ou NH₃, sauf N₂O, ainsi que des épargnes considérables en termes d'utilisation de carburant en post-combustion et d'ingénierie de procédé. Sous pression et température ambiantes le NO est instable, sa réaction de décomposition, ainsi que celle de NO₂, est thermodynamiquement favorable (Glick H et al., J. Chem. Eng. Prog. Ser., 27 (1971) 850 [51]). Cependant, d'un point de vue cinétique elle est inhibée par une énergie d'activation de NO beaucoup trop importante, de l'ordre de 364 kJ mol⁻¹, la rendant métastable :

NO → ½ N₂ + ½ O₂ Δ_{f}G° = - 86 kJ mol⁻¹

Un catalyseur permettant d'abaisser cette énergie d'activation sans ajout de co-réactif est donc indispensable (Fritz A et al., Appl. Catal. B, 13 (1997) 1 [52], Gomez-Garcia M.A et al., Environment International 31 (2005) 445 [53]).

De nombreux matériaux ont été testés pour catalyser cette réaction de décomposition ([15, 52] Iwamoto et al., Catal. Today, 10 (1991) 57 [54]), tels que les métaux nobles, les oxydes métalliques ou encore les zéolithes.

Il en ressort que quel que soit le catalyseur utilisé, l'oxygène empoisonne les matériaux, entraînant ainsi une forte inhibition de la réaction.

Parmi les métaux nobles, le Pt est le plus actif, il a de ce fait été le plus étudié [52, 54]. Le mécanisme de dissociation est le suivant (Brevet Français n°98 05363 [55]) :

NO _{ads} → N _{ads} + O _{ads}

2 N _{ads} → N₂

2 O _{ads} → O₂

Cependant la désorption de l'oxygène est très limitée. Ainsi, en dessous de 773 K, soit environ 500°C, l'oxygène adsorbé empoisonne la surface. De plus, les études révèlent que quelle que soit la température, la réactivité est négligeable en présence de 5% d'oxygène en phase gaz.

Cette technique est donc inapplicable dans les échappements Diesel ou « lean burn » qui présentent une teneur en O₂ avoisinant les 10%, ou dans les émissions des cheminées, ayant des concentrations d'oxygène proche de 20%, correspondant à la teneur atmosphérique.

Pour ce qui est des oxydes métalliques, ils présentent la même limitation due à l'étape de désorption de O₂. Selon Hamada et al. cette inhibition pourrait être amoindrie en choisissant un promoteur adéquat (Hamada et al. Chem. Lett., 1991, 1069. [56]). Ainsi, l'introduction de Ag par précipitation ou co-précipitation dans un catalyseur tel que Ag-Co₂O₃ permet d'augmenter à la fois l'activité et la résistance à l'empoisonnement par l'oxygène.

Néanmoins, le composé mixte Ag/Co de rapport 0,05, qui est le plus actif, voit son activité divisée par deux en présence de 5% de O₂ à 773 K, alors que Co₂O₃ n'a quant à lui aucune activité dans ce cas. Cette augmentation observée avec de l'argent pourrait être due à la faible affinité de celui-ci pour O₂. Plus de précisions sur le fonctionnement de ces oxydes métalliques peuvent se trouver dans les travaux de Winter, qui a effectué une étude complète sur une quarantaine de matériaux (Winter E.R.S, J. Catal., 22 (1971) 158 [57]). Par ce travail, il a été montré que la réaction de décomposition de NO possède de fortes similitudes avec celle de N₂O, en particulier, la première étape d'adsorption de NO sur deux sites de vacances anioniques adjacents. L'étude cinétique a de plus révélé une forte inhibition de la réaction sur ces solides par l'oxygène. Les paramètres et la vitesse de décomposition de NO sont largement dépendant de l'étape de désorption de l'oxygène. Les auteurs ont également déterminé les énergies d'activation donnant : CuO > Rh₂O₃ > Sm₂O₃ > SrO comme les oxydes les plus actifs.

La majorité des études sur la décomposition de NO ont été réalisées sur les catalyseurs Pt supporté ou bimétalliques ou alliage. Les études cinétiques de cette réaction sur ces types de catalyseurs avec observations de paramètres tels que la pression partielle de NO et de O₂ ont permis de mettre en évidence le mécanisme suivant (généralement accepté) : une première étape d'adsorption de NO et la dissociation simultanée de cette molécule en azote et oxygène adsorbés. Puis, désorption des ces atomes qui libèrent ainsi les sites pour une nouvelle adsorption. La désorption de l'oxygène est une étape dépendant fortement de la température. Sous 773 K, elle est difficile. Et avec un taux de couverture en oxygène de la surface du catalyseur de plus en plus important, l'activité décroît jusqu'à obtenir un catalyseur complètement inactif.

Amirnazmi et coll. J. Catal., 30 (1973) 55 [58] ont montré que la décomposition est d'ordre 1 vis-à-vis de NO et d'ordre négatif par rapport à O₂ ; la réaction est donc empoissonnée par l'oxygène. Ceci s'explique par une réduction impossible du Pt sous flux oxydant qui est alors inactif pour la décomposition.

D'autre part M. Sato, Surf. Sci., 95 (1980) 269 [59] évoquent que W à l'état réduit est assez actif pour la décomposition de NO mais qu'il est difficile d'obtenir des cations à bas état d'oxydation quand le métal est bien dispersé et isolé sur la surface d'une alumine. De même, plus récemment, A. M. Sica et al., J. Mol. Cat. A: Chem., 137 (1999) 287 [60] ont réalisé la préparation par réaction photochimique du complexe Pd-W/γAl₂O₃ et montré que celle-ci supprime l'acidité de Lewis de l'alumine et que l'interaction résultante entre Pd et W modifie les propriétés de chimisorption de NO par rapport à celles observées sur les catalyseurs monométalliques Pd et W. En conséquence, le catalyseur bimétallique présente une augmentation de l'activité de décomposition de NO [60]. Enfin dans le même ordre d'idée, une forte interaction entre le palladium et le vanadium a été mise en évidence dans le catalyseur Pd-VOx/γAl₂O₃ par Neyertz et coll.. La réductibilité de VOx est alors accrue et plus de sites V⁴⁺ sont formés. Ces espèces semblent rendre le Pd plus actif dans la décomposition de NO comme décrit dans C. Neyertz et al, Catal. Today, 57 (2000) 255 [61].

Les oxydes de type pérovskite ont également été étudiés pour cette réaction car des travaux ont montré que ces solides de part leurs défauts de structure permettent une désorption plus aisée des oxygènes de cœur. Un autre avantage est la stabilité de ces catalyseurs. Cependant, ils ne présentent des activités satisfaisantes que pour des températures supérieures à 900 K, soit 627°C, ce qui les condamne à les rendre inutilisables pour un emploi automobile.

Les catalyseurs les plus actifs pour cette décomposition directe restent les zéolithes au cuivre de type Cu-ZSM-5, particulièrement étudiées par l'équipe d'Iwamoto [54] (Iwamoto M et al., J. Chem. Soc., Faraday Trans. 1, 77 (1981) 1629) [62]. Du fait de leur propriétés d'adsorption-désorption d'O₂ (Iwamoto M et al., J. Chem. Soc., Chem. Commun., (1972) 615 [63]), elles sont moins inhibées par celui-ci.

Cependant, leur activité en présence d'une quantité importante d'oxygène reste insuffisante, de plus elles sont particulièrement instables en conditions réelles, en particulier en présence de vapeur d'eau et à températures élevées, pouvant même parfois entraîner l'effondrement de la structure.

Le document EP1070538 (publié le 24 janvier 2001) décrit des méthodes de séparation et de purification de gaz comme les oxydes d'azote, au moyen de MOF ; les MOF sont ici utilisés en tant qu'adsorbant. Le matériau MOF est décrit pour son effet d'adsorption, et seul le Cu-BTC est illustré dans les exemples.

Le document WO2009133278 (publié le 5 novembre 2009) décrit des MOF permettant l'adsorption de gaz d'intérêt biologique, comme l'oxyde d'azote, ainsi que des méthodes de relargage d'oxyde d'azote dans une solution ou dans l'air. Le seul effet des MOF décrit dans ce document est un effet d'adsorption/désorption d'oxyde d'azote.

Il existe donc un réel besoin d'un catalyseur alternatif ne présentant pas les très nombreux inconvénients de ceux de l'art antérieur, notamment ceux précités, et présentant notamment un fort pouvoir catalytique DeNOx, une activité à basse température, préférentiellement à température ambiante, une activité en absence de réducteurs, une très bonne cyclabilité, un faible coût et très bonne stabilité thermique et chimique dans les conditions d'utilisation.

De plus, il existe un réel besoin d'un dispositif permettant d'éliminer les oxydes d'azote sans présenter les inconvénients des dispositifs de l'art antérieur, notamment ceux précités.

### Exposé de l'invention

La présente invention a précisément pour but de répondre à ces besoins et inconvénients de l'art antérieur en utilisant des MOF particuliers comme catalyseur de réduction d'oxyde d'azote. **<page 23a-23b>**

Les inventeurs ont en effet découvert de manière inattendue, que le solide MOF défini ci-dessus, utilisé en tant que catalyseur, surmonte l'ensemble des problèmes précités et inconvénients de l'art antérieur.

Une partie très importante des activités de recherche des inventeurs de la présente a été et est centrée sur l'étude de catalyseurs pour la dépollution. Depuis le début des années 90, ils effectuent des recherches dans le domaine de l'élimination des NOx : plusieurs familles de catalyseurs et procédés ont été étudiés par eux : zéolithes, métaux nobles supportés, oxydes métalliques, SCR, NOx-trap, etc., et continuent d'être analysés via une méthodologie de spectroscopie infra-rouge (IR) in situ et operando décrite notamment dans les documents T. Lesage et al., Phys. Chem. Chem. Phys. 5 (2003) 4435 [64] ; M. Daturi et al., Phys. Chem. Chem. Phys., 3 (2001) 252 [65] et P. Bazin et al., Stud. Surf. Sci. Catal., 171 (2007) 97 [66].

Un premier objet de l'invention se rapporte à l'utilisation d'un solide MOF cristallin poreux constitué d'une succession tridimensionnelle de motifs choisis dans le groupe comprenant :
- Fe₃OX[C₆H₃-(CO₂)₃]₂

   et
- Fe₆O₂X₂[C₁₂H₆N₂-(CO₂)₄]₃
dans laquelle :
- X est un anion choisi dans le groupe comprenant OH⁻, Cl⁻, F⁻, comme catalyseur de réduction d'oxyde d'azote,
ledit solide MOF cristallin poreux ayant des pores dont la taille est de 0,4 à 6 nm, ladite réduction d'oxyde d'azote étant effectuée sans utilisation d'un réducteur.

Avantageusement, dans l'utilisation selon l'invention, le solide peut comprendre un pourcentage massique de fer en phase sèche de 5 à 50%.

Avantageusement, dans l'utilisation selon l'invention, le solide peut avoir une capacité de charge en gaz de 0,5 à 50 mmol de gaz par gramme de solide sec.

Avantageusement, dans l'utilisation selon l'invention, au moins 1 à 5 mmol de gaz par gramme de solide sec peut se coordiner avec le fer.

Avantageusement, le solide peut avoir une structure rigide qui se gonfle ou se contracte avec une amplitude allant de 0 à 10%.

Avantageusement, le solide peut avoir un volume poreux de 0,5 à 4 cm³/g.

Avantageusement, le solide Fe₃OX[C₆H₃-(CO₂)₃]₂ peut avoir une structure rigide, une structure rigide étant une structure qui se gonfle ou se contracte avec une amplitude allant de 0 à 10%.

Avantageusement, dans l'utilisation de l'invention, l'oxyde d'azote peut être sous forme NO ou NO₂ ou N₂O ou d'un mélange de deux ou des trois de ceux-ci.

Avantageusement, l'utilisation peut comprendre une étape de mise en contact dudit solide MOF avec l'oxyde d'azote à réduire.

Avantageusement, l'utilisation peut comprendre avant l'étape de mise en contact, une étape d'activation du solide MOF par chauffage sous vide ou sous atmosphère réductible ou neutre.

Avantageusement, dans l'étape d'activation, le chauffage peut être réalisé à une température de 150 à 280°C.

Avantageusement, la mise en contact peut être réalisée en présence d'oxygène et/ou d'eau.

L'utilisation selon l'invention peut être réalisée dans un procédé d'élimination d'oxyde d'azote d'un milieu. Avantageusement, le milieu peut être un effluent liquide ou gazeux. Avantageusement, l'effluent peut provenir d'une combustion d'hydrocarbures ou de l'oxydation de composés azotés. Avantageusement, l'effluent peut être choisi parmi un effluent d'un véhicule, d'un bateau, d'une usine, d'un atelier, d'un laboratoire, de produits stockés, de bouches d'aération urbaines.

Avantageusement, selon l'utilisation de l'invention, le solide MOF peut être sous une forme choisie parmi des nanoparticules, une poudre, des galets, des granules, un revêtement.>

Grâce à cette longue expérience, à des techniques de caractérisation à la pointe et à un partenariat étendu et constant avec plusieurs fabricants de matériaux catalytiques et constructeurs automobiles, les inventeurs ont acquis des compétences dans le domaine de l'élimination des NOx reconnues mondialement. Pendant ces 15 dernières années leurs recherches fondamentales et appliquées ont abouti à la description de différents mécanismes catalytiques et au dépôt de plusieurs brevets, en engendrant une culture de la compréhension de l'acte catalytique et du mode de fonctionnement des catalyseurs qui a permis de parvenir à une définition théorique du catalyseur par excellence, capable d'atteindre les limites imposées par la thermodynamique et jamais atteintes auparavant.

Hors, ils ont constaté que cette nouvelle classe de matériaux, les MOF définis ci-dessus et dessous et utilisés dans la présente invention, a permis de manière tout a fait inattendue de concrétiser enfin cette approche conceptuelle et de trouver finalement ce que de nombreuses équipes scientifiques dans le monde recherchent ardemment depuis deux décennies : un catalyseur capable de décomposer de manière surprenante les oxydes d'azote à basse température, y compris sans l'utilisation de réducteurs, coûteux et polluants. L'aboutissement des recherches des présents inventeurs pour arriver à la présente invention, au delà des implications sociétaire et environnementales évidentes, constitue une vraie consécration en tant que plus grands experts (« leaders ») indiscutés dans la catalyse de dépollution. En outre, la perspective d'applications de la présente invention en séparation en catalyse DeNOx à partir de ces MOF constitue un axe innovateur très important en terme d'applications dans un domaine d'intérêt publique pour ces matériaux. Cette thématique, très riche en applications, présente un intérêt fondamental pour le présent et pour l'avenir.

Comme indiqué ci-dessus, on entend dans la présente par « catalyseur de réduction d'oxyde(s) d'azote », un catalyseur d'oxydoréduction provoquant la réduction chimique d'oxyde(s) d'azote. En d'autres termes un catalyseur de décomposition catalytique réductrice d'oxyde(s) d'azote, c'est-à-dire de décomposition d'oxyde(s) d'azote par transformation chimique.

On entend, dans la présente, par oxyde d'azote le monoxyde d'azote (NO) et le dioxyde d'azote (NO₂), collectivement notés NOx, ainsi que le protoxyde d'azote (N₂O), le trioxyde d'azote (N₂O₃) et le tétraoxyde de diazote (N₂O₄). Il peut s'agir de l'un de ces gaz ou d'un mélange de ceux-ci. L'oxyde d'azote tel qu'il est défini dans la présente peut être seul ou combiné à d'autres gaz, par exemple ceux de l'atmosphère ou de tout effluent gazeux ou liquide issus de bâtiments dans lesquels de l'oxyde d'azote peut être généré.

On entend par « ligand espaceur », un ligand (incluant par exemple les espèces neutres et les ions) coordiné à au moins deux métaux, participant à l'éloignement entre ces métaux et à la formation d'espaces vides ou pores. Le ligand espaceur peut comprendre 1 à 6 groupements carboxylates, tels que définis précédemment, qui peuvent être monodentates ou bidentates, c'est-à-dire comprendre un ou deux points d'attachement au métal. Les points d'attachement au métal sont représentés par le sigle # dans les formules. Lorsque la structure d'une fonction A comporte deux points d'attachement indiqués par le signe « # », cela signifie que la coordination au métal peut se faire par l'un, l'autre ou les deux points d'attachement.

On entend par « alkyle », un radical carboné linéaire, ramifié ou cyclique, saturé, comprenant 1 à 12 atomes de carbone, par exemple 1 à 10 atomes de carbone, par exemple 1 à 8 atomes de carbone, par exemple 1 à 6 atomes de carbone.

On entend par « alcène », un radical carboné, présentant au moins une double liaison carbone-carbone.

On entend par « alcényle », un groupe fonctionnel carboné insaturé linéaire, ramifié ou cyclique, contenant au moins une double liaison carbone-carbone, comprenant 2 à 12 atomes de carbone, par exemple 2 à 10 atomes de carbone, par exemple 2 à 8 atomes de carbone, par exemple 2 à 6 atomes de carbone.

On entend par « alcyne », un radical carboné présentant au moins une triple liaison carbone-carbone.

On entend par « alcynyle », un groupe fonctionnel carboné insaturé linéaire, ramifié ou cyclique, contenant au moins une triple liaison carbone-carbone, comprenant 2 à 12 atomes de carbone, par exemple 2 à 10 atomes de carbone, par exemple 2 à 8 atomes de carbone, par exemple 2 à 6 atomes de carbone.

On entend par « aryle », un système aromatique comprenant au moins un cycle satisfaisant la règle d'aromaticité de Hückel. Ledit aryle est éventuellement substitué et peut comprendre de 6 à 50 atomes de carbone, par exemple 6 à 20 atomes de carbone, par exemple 6 à 10 atomes de carbone.

On entend par « hétéroaryle », un système comprenant au moins un cycle aromatique de 5 à 50 chaînons parmi lesquels au moins un chaînon du cycle aromatique est un hétéroatome, notamment choisi dans le groupe comprenant le soufre, l'oxygène, l'azote, le bore. Ledit hétéroaryle est éventuellement substitué et peut comprendre de 1 à 50 atomes de carbone, de préférence 1 à 20 atomes de carbone, de préférence 3 à 10 atomes de carbone.

On entend par « cycloalkyle », un radical carboné cyclique, saturé ou insaturé, éventuellement substitué, qui peut comprendre 3 à 20 atomes de carbone, de préférence 3 à 10 atomes de carbone.

On entend par « haloalkyle », un radical alkyle tel que défini précédemment, ledit système alkyle comprenant au moins un halogène.

On entend par « hétérocycle », un radical carboné cyclique comprenant au moins un hétéroatome, saturé ou insaturé, éventuellement substitué, et qui peut comprendre 2 à 20 atomes de carbone, de préférence 5 à 20 atomes de carbone, de préférence 5 à 10 atomes de carbone. L'hétéroatome peut être par exemple choisi dans le groupe comprenant le soufre, l'oxygène, l'azote, le bore.

On entend par « alkoxy », « aryloxy », « hétéroalkoxy » et « hétéroaryloxy », respectivement un radical alkyle, aryle, hétéroalkyle et hétéroaryle liés à un atome d'oxygène.

On entend par « alkylthio », « arylthio », « hétéroalkylthio » et « hétéroarylthio », respectivement un radical alkyle, aryle, hétéroalkyle et hétéroaryle liés à un atome de soufre.

La structure cristalline particulière des solides MOF procure à ces matériaux des propriétés spécifiques.

Il est déjà connu que le métal M^{z+} peut représenter le Fe trivalent octaédrique avec z égal à 3. Dans ce mode de réalisation, le Fe présente un nombre de coordination de 6.

Par le nombre coordination, on entend le nombre de liaisons qu'un cation forme avec des anions.

Les ions métalliques peuvent être isolés ou regroupés en « clusters » métalliques. Les solides MOF peuvent par exemple être construits à partir de chaînes d'octaèdres ou de trimères d'octaèdres.

On entend par « cluster métallique » un ensemble d'atomes contenant au moins deux ions métalliques liés par des liaisons ionocovalentes, soit directement par des anions, par exemple O²⁻, OH⁻, Cl⁻, soit par le ligand organique.

De plus, les solides MOF peuvent se présenter sous différentes formes ou « phases » compte tenu des diverses possibilités d'organisation et de connections des ligands à l'ion métallique ou au groupement métallique.

On entend par « phase » au sens de la présente invention une composition hybride comprenant au moins un métal et au moins un ligand organique possédant une structure cristalline définie.

L'organisation spatiale cristalline des solides de la présente invention est à la base des caractéristiques et propriétés particulières de ces matériaux. Elle régit notamment la taille des pores, qui a une influence sur la surface spécifique des matériaux et sur la diffusion des molécules gazeuses à l'intérieur de celui-ci. Elle régit également la densité des matériaux, celle-ci étant relativement faible, la proportion de métal dans ces matériaux, la stabilité des matériaux, la rigidité et la flexibilité des structures, etc.

En outre, la taille des pores peut être ajustée par le choix de ligands carboxyliques.

Le solide MOF selon l'invention, peut comprendre par exemple un pourcentage massique de Fe en phase sèche de 5 à 50%, par exemple de préférence de 18 à 31%.

Le pourcentage massique (%m ou wt%) est une unité de mesure utilisée en chimie et en métallurgie pour désigner la composition d'un mélange ou d'un alliage, c'est-à-dire les proportions de chaque composant dans le mélange. Cette unité est utilisée dans la présente. 1 %m d'un composant = 1g du composant pour 100 g de mélange ou encore 1 kg dudit composant pour 100 kg de mélange.

Les solides MOF de la présente invention présentent notamment l'avantage d'avoir une stabilité thermique jusqu'à une température de 350°C. Plus particulièrement, ces solides présentent une stabilité thermique de 120°C et 350°C.

Selon l'invention, le solide MOF a par exemple une taille de pores de 0,4 à 6 nm, de préférence de 0,5 à 5,2 nm, et de manière plus préférée de 0,5 à 3,4 nm.

Selon l'invention, le solide MOF peut avoir une capacité de charge en gaz de 0,5 à 50 mmol de gaz par gramme de solide sec.

Le solide MOF généralement décrit peut avoir par exemple une surface spécifique (BET) de 5 à 6000 m²/g, de préférence de 5 à 4500 m²/g.

Le solide MOF généralement décrit peut avoir par exemple un volume poreux de 0 à 4 cm³/g, de préférence de 0,05 à 2 cm³/g. Le volume poreux signifie le volume accessible pour les molécules de gaz.

Dans les solides MOF généralement décrits, au moins une partie du ou des gaz base de Lewis se coordine avec M. Par exemple, au moins 1 à 5 mmol de gaz par gramme de solide sec se coordine avec M. La partie du ou des gaz qui ne se coordine pas avec M peut remplir avantageusement l'espace libre dans les pores.

Le solide MOF généralement décrit peut se présenter sous la forme d'une structure robuste, qui a une charpente rigide et ne se contracte que très peu lorsque les pores se vident de leur contenu qui peut être, par exemple, du solvant, de l'acide carboxylique non coordiné, etc. Il peut également se présenter sous la forme d'une structure flexible, qui peut se gonfler et se dégonfler faisant varier l'ouverture des pores en fonction de la nature des molécules adsorbées qui peuvent être, par exemple, des solvants et/ou des gaz.

On entend par « structure rigide », des structures qui se gonflent ou se contractent que très faiblement, c'est-à-dire avec une amplitude jusqu'à 10%. En particulier, le solide MOF selon l'invention, peut avoir une structure rigide qui se gonfle ou se contracte avec une amplitude allant de 0 à 10%. Les structures rigides peuvent par exemple être construites à base de chaînes ou de trimères d'octaèdres. Le solide MOF généralement décrit de structure rigide peut avoir un pourcentage massique de M en phase sèche de 5 à 50%, de préférence de 18 à 31%. Avantageusement, M peut-être représenter le fer. Le solide MOF de structure rigide selon l'invention a une taille de pores de 0,4 à 6 nm, en particulier de 0,5 à 5,2 nm, plus particulièrement de 0,5 à 3,4 nm. Le solide MOF de structure rigide selon l'invention peut avoir un volume poreux de 0,5 à 4 cm³/g, en particulier de 0,05 à 2 cm³/g.

On entend par « structure flexible », des structures qui se gonflent ou se contractent avec une grande amplitude, notamment avec une amplitude supérieure à 10%, de préférence supérieure à 50%.

Il est décrit et connu que le solide MOF de structure flexible peut avoir un pourcentage massique de M en phase sèche de 5 à 40%, de préférence de 18 à 31%. Egalement, M peut-être représenter le fer.

Par exemple, le solide MOF de structure flexible peut avoir une taille de pores de 0,4 à 6 nm, en particulier de 0,5 à 5,2 nm, et plus particulièrement de 0,5 à 1,6 nm.

Par exemple, le solide MOF de structure flexible peut avoir un volume poreux de 0 à 3 cm³/g, en particulier de 0 à 2 cm³/g.

En outre, les inventeurs ont mis en évidence expérimentalement que l'amplitude de la flexibilité dépend de la nature du ligand et du solvant utilisé, comme décrit dans la partie « Exemples » ci-dessous.

Il est décrit et connu que, quelle que soit la structure, le solide MOF possède par exemple une quantité de centres métalliques M insaturés de 0,5 à 7 mmol/g de solide, par exemple de 1 à 3 mmol/g, en particulier de 1,3 à 3,65 mmol/g de solide.

Différents matériaux MOF ont été élaborés par les inventeurs à l'Institut Lavoisier de Versailles nommées « MIL » (pour « Matériau Institut Lavoisier »). L'appellation « MIL » de ces structures est suivie d'un nombre arbitraire n donnée par les inventeurs pour identifier les différents solides.

Dans le cadre de la présente invention, les inventeurs ont mis en évidence que des solides MOF comprennent une succession tridimensionnelle de motifs choisis dans le groupe comprenant : ―

Fe₃OX[C₆H₃-(CO₂)₃]₂ et

Fe₆O₂X₂[C₁₂H₆N₂-(CO₂)₄]₃

dans laquelle X est un anion choisi dans le groupe comprenant OH⁻, Cl⁻, F^{-.}

Des exemples de MOF utilisables sont donnés dans le tableaux B ci-dessous :

**Tableau B**

| **Phase** | **Composition** | **Sites métalliques (mmol.g⁻¹)**** | **Réseau** |
|---|---|---|---|
| **MIL-100** (trimésate)² | Fe₃OX[C₆H₃-(CO₂)₃]₂.nH₂O | 3,65 | rigide |
| **MIL-127** (3,3'-5,5'-azobenzenetetra carboxylate) | Fe₆O₂X₂[C₁₂H₆N₂-(CO₂)₄]₃.nH₂O | 2,72 | rigide |
| ** : calculs présentés faits avec X=F. | | | |

Des protocoles de synthèse de ces différents composés sont décrits par exemple dans le document suivant:
- Synthèse de MIL-100 décrite par exemple dans Horcajada P et al., Chem Comm, 2007, 2820 : Synthesis and catalytic properties of MIL-100(Fe), an iron(lll) carboxylate with large pore [70].

Ce document décrit la synthèse de solides isostructuraux. D'autres exemples de protocoles de fabrication de MOF présentés dans le tableau ci-dessus sont fournis dans la partie « Exemples » ci-dessous.

La préparation de solides MOF tels que définis dans la présente invention, peut être réallisée par tout procédé connu de l'homme du métier. Elle peut être réalisée par exemple par voie solvothermale ou hydrothermale, par synthèse micro-ondes, ultrasonique ou par broyage mécanique.

Il peut s'agir par exemple d'un procédé comprenant l'étape réactionnelle suivante :
(i) mélanger dans un solvant polaire :
   - au moins une solution comprenant au moins un précurseur inorganique métallique se présentant sous la forme de métal M, d'un sel métallique de M ou d'un complexe de coordination comprenant un ion métallique de M, M étant tel que défini ci-dessus,
   - au moins un ligand L' comprenant un radical R comportant q groupements *-C(=O)-R³, où
      - q et R sont tels que définis précédemment,
      - * désigne le point d'attachement du groupement avec le radical R,
      - R³ est choisi dans le groupe comprenant un OH, un OY, avec Y est un cation alcalin, un halogène, un radical -OR⁴, - O-C(=O)R⁴, -NR⁴R^{4'}, où R⁴ et R^{4'} sont des radicaux alkyles en C₁₋₁₂,
   pour obtenir un matériau MOF.

Quelque soit le procédé utilisé, selon l'invention, les précurseurs de M pour la fabrication des solides MOF peuvent être :
- des sels métalliques, par exemple des nitrates, chlorures, sulfates, acétates, oxalates de M,
- des alcoxydes,
- des assemblages polymétalliques (ou « clusters ») oxo ou hydroxo,
- des complexes organométalliques
- une poudre métallique
- ou tout autre précurseur approprié.

Quelque soit le procédé utilisé, selon l'invention, le temps de préparation peut varier par exemple entre 1 minute jusqu'à plusieurs semaines, idéalement entre 1 minute et 72 heures.

Quelque soit le procédé utilisé, selon l'invention, la température de préparation être par exemple de 0°C à 220°C, idéalement de 20°C à 180°C.

La préparation de matériaux MOF peut être de préférence réalisée en présence d'énergie qui peut être apportée par exemple par le chauffage, comme par exemple des conditions hydrothermales ou solvothermales, mais également par micro-ondes, par ultrasons, par broyage, par un procédé faisant intervenir un fluide supercritique, etc. Les protocoles correspondants sont ceux connus de l'homme du métier. Des exemples non limitatifs de protocoles utilisables pour les conditions hydrothermales ou solvothermales sont décrits par exemple dans K. Byrapsa, et al., « Handbook of hydrothermal technology », Noyes Publications, Parkridge, New Jersey USA, William Andrew Publishing, LLC, Norwich NY USA, 2001 [73]. Pour la synthèse par voie micro-ondes, des exemples non limitatifs de protocoles utilisables sont décrits par exemple dans G. Tompsett et al. ChemPhysChem. 2006, 7, 296 [74]; S.-E. Parket al., Catal. Survey Asia 2004, 8, 91 [75]. ; C. S. Cundy, Collect. Czech. Chem. Commum. 1998, 63, 1699 [76]; S. H. Jhung, J.-H. Lee, J.-S. Chang, Bull. Kor. Chem. Soc. 2005, 26, 880 [77]. Les conditions en présence d'un broyeur à cylindre peuvent par exemple se référer aux publications Pichon, Cryst. Eng. Comm. 8, 2006, 211-214 [78].; D. Braga, Angew. Chem. Int. Ed. 45, 2006, 142-246 [79].; D. Braga, Dalton Trans., 2006, 1249-1263 [80]. Les conditions hydrothermales ou solvothermales, dont les températures de réactions peuvent varier entre 0 et 220°C, sont généralement effectuées dans des récipients en verre (ou en plastique) lorsque la température est inférieure à la température d'ébullition du solvant. Lorsque la température est supérieure ou lorsque la réaction s'effectue en présence de fluor, des corps en téflon insérés dans des bombes métalliques sont employés [73].

Les solvants utilisés sont généralement polaires. Notamment les solvants suivants peuvent être utilisés : l'eau, les alcools, le diméthylformamide, le diméthylsulfoxide, l'acétonitrile, le tétrahydrofurane, le diéthylformamide, le chloroforme, le cyclohexane, l'acétone, le cyanobenzène, le dichlorométhane, le nitrobenzène, l'éthylèneglycol, le diméthylacétamide ou des mélanges de ces solvants.

Un ou plusieurs co-solvants peuvent également être ajoutés à n'importe quelle étape de la synthèse pour une meilleure solubilisation des composés du mélange. Il peut s'agir notamment d'acides monocarboxyliques, tels que l'acide acétique, l'acide formique, l'acide benzoïque, etc.

Un ou plusieurs additifs peuvent également être ajoutés au cours de la synthèse afin de moduler le pH du mélange. Ces additifs peuvent être choisis par exemple parmi les acides minéraux ou organiques ou les bases minérales ou organiques. À titre d'exemple, l'additif peut être choisi dans le groupe comprenant : HF, HCI, HNO₃, H₂SO₄, NaOH, KOH, la lutidine, l'éthylamine, la méthylamine, l'ammoniac, l'urée, l'EDTA, la tripropylamine, la pyridine.

De préférence, l'étape réactionnelle (i) peut être réalisée suivant au moins une des conditions réactionnelles suivantes :
- avec une température de réaction de 0°C à 220°C, de préférence de 50 à 150°C ;
- avec une vitesse d'agitation de 0 à 1000 rpm (ou rotation par minute), de préférence de 0 à 500 rpm ;
- avec un temps de réaction de 1 minute à 144 heures, de préférence de 1 minute à 15 heures ;
- avec un pH de 0 à 7, de préférence de 1 à 5 ;
- avec l'addition d'au moins un co-solvant au solvant, au précurseur, au ligand ou au mélange de ceux-ci, ledit co-solvant étant choisi dans le groupe comprenant l'acide acétique, l'acide formique, l'acide benzoïque ;
- en présence d'un solvant choisi dans le groupe comprenant l'eau, les alcools R^{S}―OH où R^{S} est un radical alkyle en C₁ à C₆ linéaire ou ramifié, et le benzylalcool où l'alcool est R^{S}―OH où R^{S} est un radical alkyle en C₁ à C₆ linéaire ou ramifié, le diméthyl- et le diéthyl-formamide, diméthylsulfoxide, l'acétonitrile, le tétrahydrofurane, le diéthylformamide, le chloroforme, le cyclohexane, l'acétone, le cyanobenzène, le dichlorométhane, le nitrobenzène, l'éthylèneglycol, le diméthylacétamide, l'alcool benzoïque ou un mélange de ces solvants, miscibles ou non ;
- dans un milieu supercritique, par exemple dans le CO₂ supercritique ;
- sous micro-ondes et/ou sous ultrasons ;
- dans des conditions d'électrolyse électrochimique ;
- dans des conditions utilisant un broyeur, par exemple à cylindres ou à billes ou boulets ;
- dans un flux gazeux.

Selon l'invention, un agent de modification de surface peut être ajouté pendant ou après la synthèse des solides MOF. Cet agent de modification de surface peut être choisis dans le groupe comprenant des polyéthylèneglycols (PEG), polyvinylpyrrolidones, l'acide 2,3 dihydroxobenzoique ou un mélange de ceux-ci. Celui-ci peut être greffé ou déposé à la surface des solides, par exemple adsorbé en surface ou lié par liaison covalente, par liaison hydrogène, par liaison de Van der Waals, par interaction électrostatique. L'agent de modification de surface peut également être incorporé par enchevêtrement lors de la fabrication des solides MOF [81, 82].

De manière tout à fait surprenante, les MOFs poreux définis ci-dessus, c'est à dire à base de fer(III) permettent de catalyser, y compris à basse température, c'est à dire à des températures inférieures à 200°C, la réduction des oxydes d'azote sans utiliser de réducteur, alors que l'utilisation de réducteurs est indispensable avec les catalyseurs de l'art antérieur.

Ainsi, selon l'invention, des molécules gazeuses toxiques NOx interagissent de manière spécifique avec les centres métalliques accessibles des solides MOF, préalablement réduits ou non, ce qui permet de les transformer, à basse température, c'est à dire inférieure à 200°C, même en l'absence d'espèces réductrices, et éventuellement en présence d'oxygène et/ou éventuellement d'eau, en espèces non toxiques N₂ et O₂ , ou moins toxiques telles que N₂O.

Conformément à la présente invention, l'utilisation peut comprendre une étape de mise en contact dudit solide MOF avec l'oxyde d'azote à réduire. C'est cette mise en contact qui provoque la catalyse d'oxydation de l'oxyde d'azote en gaz non polluants, par exemple N₂ et O₂.

Pour cette mise en contact, le solide MOF peut être utilisé directement ou être activé avant son utilisation. Il est activé notamment lorsque le MOF ne peut pas ou pas assez, notamment de part son nombre d'oxydation et/ou la quantité de solide MOF actifs et/ou la présence d'impuretés, réduire l'oxyde d'azote.

Conformément à la présente invention, l'étape de mise en contact peut donc être précédée d'une étape d'activation du solide MOF, par exemple par chauffage sous vide ou sous atmosphère réductrice ou neutre. Selon l'invention, l'étape d'activation par chauffage peut être réalisée à une température de 30 à 350°C, par exemple de 150 à 280°C, de préférence de 50 à 250°C. Cette étape d'activation peut être réalisée pendant toute durée appropriée pour obtenir le résultat escompté. La durée dépend notamment de la nature même du matériau et de la température d'activation. Généralement, aux températures précitées, cette durée d'activation peut être de 30 à 1440 minutes, par exemple de 60 à 720 minutes. Il s'agit en pratique d'activer les centres métalliques en les rendant accessibles afin qu'ils réduisent l'oxyde d'azote, par exemple en des espèces chimiques non polluantes. L'activation peut également être réalisée sous flux de NOx.

Des protocoles utilisables pour l'activation sont par exemple :
- Sous vide primaire ou secondaire de 13,33 Pa à 13,33×10⁻⁵ Pa (soit 10⁻¹ à 10⁻⁶ Torr) à température constante ou variable, de 30 à 400°C, de préférence de 50 à 280°C, pendant une durée de 1 à 100 heures, de préférence 2 à 16 heures.
- Sous flux de gaz neutre, par exemple hélium, azote, argon, etc. à température constante ou variable, entre 30 et 400°C, de préférence entre 50 et 280°C, pendant une durée de 1 à 100 heures, de préférence 2 à 16 heures.
- En mélange NOx à température constante ou variable, de 30 à 400°C, de préférence de 50 à 280°C, pendant une durée de 1 à 100 heures, de préférence 2 à 16 heures.

L'activation peut être réalisée de manière contrôlée afin de faire interagir le MOF avec les espèces NOx afin de décomposer ces dernières. Ce contrôle peut être effectué par spectroscopie infra-rouge, en suivant la modification des spectres des échantillons au cours du processus d'activation, jusqu'à obtenir le spectre d'un échantillon activé.

La mise en contact elle-même peut être effectuée de manière passive ou active. Par « passive », on entend contact naturel de l'atmosphère ou de l'effluent comprenant les oxydes d'azote avec le solide MOF. Par « active » on entend une mise en contact forcée ou prolongée, notamment dans un dispositif approprié par exemple pour confiner l'effluent à traiter.

La mise en contact peut être effectuée pendant un temps de contact ou durée de mise en contact qui peut être modifié(e) suivant l'utilisation faite de la présente invention. Par exemple, un temps de contact de l'effluent à traiter de moins de 2 minutes est suffisant, par exemple de 0,03 à 0,72 secondes, par exemple de 0,1 à 0,50 secondes. Ce temps de contact dépend notamment de la teneur de l'oxyde d'azote de l'effluent à traiter, de la surface de mise en contact de l'effluent avec le solide MOF utilisé pour la catalyse, de la nature même du MOF utilisé, de la nature de l'effluent, des conditions de la mise en contact, par exemple température et pression et du but poursuivi par la mise en œuvre de la présente invention. En mesurant par exemple la teneur en oxyde d'azote restant dans un effluent traité par une mise en œuvre de la présente invention, on peut aisément régler le temps de mise en contact de l'effluent avec le catalyseur de façon à réduire au minimum la teneur en oxyde d'azote dans l'effluent traité. L'objectif dans le traitement d'un effluent étant bien sûr d'éliminer l'oxyde d'azote.

Dans l'utilisation de la présente invention, la mise en contact peut être réalisée avantageusement en présente d'oxygène et/ou d'eau. La catalyse DeNOx est en effet améliorée dans ces conditions. Par exemple, une quantité d'oxygène de 0,1% à 20%, par exemple de 1% à 10%, et/ou une quantité d'eau de 0,1% à 10%, par exemple de 1% à 4%, peuvent être utilisées.

L'utilisation de la présente invention trouve de nombreuses applications, notamment dans tout procédé d'élimination ou de transformation d'oxyde d'azote, que se soit pour des besoins expérimentaux, industriels, de respect de l'environnement et/ou de dépollution. Elle trouve encore une application dans la recherche, dans tout procédé chimique de catalyse, pour des applications spatiales, etc.

Dans la présente, on utilise de manière équivalente les termes « milieu(x) » et « effluent(s) ». Selon l'invention, le milieu en question peut être un effluent liquide ou gazeux. L'effluent peut provenir par exemple d'une combustion d'hydrocarbures ou de l'oxydation de composés azotés. Il peut s'agir par exemple d'un effluent choisi parmi de l'eau, un effluent d'un véhicule, d'un train, d'un bateau, par exemple un gaz d'échappement, un effluent liquide ou gazeux d'une usine, d'un atelier, d'un laboratoire, de produits stockés, de cargaisons, de bouches d'aération, notamment urbaines, d'une climatisation, d'un purificateur d'air, de produits chimiques comprenant des composés azotés répandus dans l'eau et/ou dans le sol, notamment des engrais, décharges, évacuations, etc.

L'oxyde d'azote peut être seul ou présent parmi d'autres gaz, par exemple parmi d'autres gaz issus de combustions, par exemple d'hydrocarbures ; par exemple parmi les gaz de l'atmosphère, dans ce cas les autres gaz sont notamment O₂, N₂ et CO₂ ; par exemple encore, parmi les gaz d'échappement d'un véhicule, d'un train, d'un bateau, de gaines d'aération et/ou ventilation de bâtiments industriels, de parkings, de tunnels, de transports sous terrains, d'habitations, de laboratoires, etc.

Le solide MOF utilisé peut être sous toute forme appropriée, notamment pour faciliter son contact avec l'effluent duquel l'oxyde d'azote doit être réduit ou éliminé et pour faciliter son utilisation dans l'application visée. Les méthodes de fabrication présentées dans la présente et les documents cités permettent par exemple, pour certaines, d'obtenir des nanoparticules. Ces matériaux forment un réseau poreux régulier. De manière générale, le solide MOF utilisé dans la présente invention peut être par exemple sous une forme choisie parmi des nanoparticules, une poudre, des galets, des granules, des pastilles, un revêtement.

Selon l'invention, lorsque le solide MOF est utilisé sous forme de revêtement, il peut être appliqué sur une surface plane ou non, lisse ou non. Afin d'optimiser les contacts entre l'effluent et le solide MOF, la surface est de préférence non plane et non lisse. La surface peut être choisie par exemple dans le groupe comprenant une surface striée, un nid d'abeille, une grille, une mousse organique ou minérale, un filtre, un mur d'un bâtiment, des conduites de ventilation et/ou d'aération, etc.

Le solide MOF peut être appliqué sur tout type de surface convenant ou adapté à l'utilisation selon la présente invention. Il peut s'agir par exemple d'une surface choisie parmi une surface en papier, en verre, en céramique, en carbure de silicium, en carton, en papier, en métal, par exemple de l'inox, en béton, en bois, en plastique, etc.

Pour appliquer le solide MOF sur une surface, selon la présente invention, on peut utiliser toute technique et tout matériau approprié.

On peut utiliser par exemple le MOF seul, c'est à dire appliqué seul sur la surface. On peut également appliquer un revêtement adhésif sur la surface avant d'appliquer le solide MOF. On peut également mélanger le MOF avec un liant, l'ensemble MOF et liant mélangés étant appliqué sur la surface.

Selon l'invention, on peut utiliser un MOF seul ou un mélange de MOFs tels que définis dans la présente. De la même manière, on peut utiliser le MOF seul ou le mélange de MOFs en mélange avec d'autres matériaux, ces autres matériaux pouvant être par exemple de simples matériaux support de ce MOF ou de ce mélange de MOFs ou des matériaux qui sont eux mêmes des catalyseurs d'oxydes d'azote comme ceux décrits dans l'art antérieur, par exemple ci-dessus, ou encore, par exemple, des matériaux catalyseurs d'autres réactions chimiques, par exemple de décomposition d'autres gaz toxiques. Ainsi, quand on mentionne dans la présente la « décomposition d'oxydes d'azote sans l'utilisation de réducteurs autres que les MOFs » on défini l'activité ou la capacité propre des MOFs selon la présente invention, cette activité pouvant se manifester avec un matériau constitué de MOF ou d'un mélange de MOFs, ou d'un matériau comprenant un MOF, c'est à dire un MOF et un matériau différent d'un MOF, que cet autre matériau ait ou non une activité catalytique et que cette activité soit identique ou différente de celle des MOFs décrite dans la présente.

Le solide MOF peut se trouver avantageusement, dès sa fabrication, sous forme d'un sol colloïdal qui peut facilement être déposé sous forme d'une couche mince, homogène, flexible et transparente sur une surface, telle que définie ci-dessus. Ceci est très avantageux pour les applications de la présente invention.

De préférence, lorsqu'il est utilisé, l'adhésif ou le liant est choisi pour être compatible avec le MOF, c'est-à-dire, notamment, qu'il n'altère pas le MOF lui même et/ou le pouvoir catalytique du solide MOF.

Comme adhésif, on peut utiliser par exemple un adhésif choisi dans le groupe comprenant un polymère naturel, un polymère synthétique, une argile, une zéolithe, une résine naturelle, une résine synthétique, une glue, une émulsion adhésive, un ciment, un béton ou un mélange de deux ou plus de ces adhésifs.

Comme liant on peut utiliser par exemple de l'alumine, de la silice ou un mélange d'alumine et de silice.

La proportion de liant ou d'adhésif utilisée est une proportion permettant l'application souhaitée sur la surface. Cette proportion est aisément déterminable par l'homme du métier.

Selon l'invention, pour l'application du solide MOF sur une surface, on peut utiliser toute technique appropriée notamment avec le MOF choisi et la nature et la taille de la surface à revêtir. Il peut s'agir par exemple d'une des techniques suivantes : simple dépôt, par exemple dépôt chimique en solution (« chemical solution deposition » ou « CSD ») ; dépôt à la tournette (« spin coating ») ; par trempage (« dip coating ») ; par pulvérisation (« spray coating ») ; par enduction ; par enduction laminaire ; ou toute autre technique connue de l'homme du métier.

L'épaisseur de solide MOF sur la surface peut être toute épaisseur appropriée pour la mise en œuvre de la présente invention. Il n'est pas nécessaire que cette épaisseur soit importante, dans la mesure ou la réaction de catalyse est surfacique. En général, une épaisseur de 0,01 à 100 micromètres, par exemple de 40 à 1000 nm, par exemple de 40 à 200 nm convient pour mettre en œuvre la présente invention.

Les solides MOF décrits dans la présente et utilisés dans la présente invention ont avantageusement un fonctionnement catalytique, c'est-à-dire qu'ils reviennent à leur état initial après avoir effectué un cycle catalytique, notamment de décomposition, élimination ou réduction d'oxyde d'azote, sans détérioration ou modification du MOF, à basse température et sans utilisation de réducteurs. Leur durée de vie dans l'utilisation de la présente invention est donc remarquable, contrairement aux catalyseurs de l'art antérieur, et particulièrement appropriée aux applications visées dans la présente.

Lorsque la présente invention est mise en œuvre dans un dispositif, la forme du solide MOF est choisie pour permettre audit dispositif de favoriser, de préférence optimiser, le contact entre l'effluent à traiter et le solide MOF. Le dispositif lui-même est de préférence constitué pour favoriser, de préférence optimiser, le contact entre l'effluent et le solide MOF. Le dispositif permet de préférence de mettre en contact le solide MOF avec l'effluent pour oxyder, voir éliminer l'oxyde d'azote qu'il contient.

Un dispositif d'élimination d'oxyde d'azote, n'appartenant pas à l'invention, ledit dispositif comprenant un solide MOF tel qu'il est défini ci-dessus, et des moyens permettant de mettre en contact ledit solide MOF avec l'oxyde d'azote, sont décrits à titre illustratif.

Par exemple, les moyens permettant de mettre en contact le solide MOF avec l'oxyde d'azote peuvent être des moyens permettant de mettre en contact le solide MOF avec un effluent liquide ou gazeux comprenant ledit oxyde d'azote. L'effluent peut être comme défini ci-dessus. Le solide MOF peut être sous une forme comme définie ci-dessus. Le dispositif permet alors, par exemple, d'éliminer l'oxyde d'azote de l'effluent par simple contact avec le MOF qu'il contient.

Le dispositif illustratif décrit peut être sous la forme d'un pot catalytique d'un véhicule, sous la forme d'un dispositif de filtrage et/ou dépollution des effluents issus d'un bâtiment, parking, tunnel, usines, laboratoires, usines d'incinération, usines de raffinage d'hydrocarbures, etc. et tout autre exemple cité ou non dans la présente.

Lorsque la présente invention est mise en œuvre dans un dispositif formant un pot catalytique, ce dernier peut être constitué par exemple d'un monolithe en métal ou en céramique ou en tout autre matériau approprié, par exemple structuré en « nid d'abeilles », qui contient sur ses parois le MOF selon la présente invention, le monolithe étant protégé par un carter en inox. Le monolithe peut être composé par exemple de fin canaux longitudinaux séparés par des minces parois. Le MOF de la phase active peut être déposée sur le support en céramique ou en métal par exemple par imprégnation, par exemple par un méthode dite d'enduction (« wash-coating »). La phase active peut former une fine couche, par exemple de 0,5 à 200 µm sur les parois internes des canaux.

Les différents types de monolithes qui existent actuellement dans le commerce sont utilisables pour mettre en œuvre la présente invention. Pour les pots catalytiques, les modèles à 90 ou plus souvent 60 canaux par cm² (c'est-à-dire 600 ou plus souvent 400 cpsi) peuvent être par exemple utilisés. Dans ce cas les canaux ont une taille d'environ 1 mm et les parois des épaisseurs d'environ 0,15 mm.

Il est décrit que pour l'application des MOF's en élimination des NOx émis par les véhicules, la fonction De-NOx du pot catalytique peut également être séparée du reste d'une ligne de dépollution préexistante. Un module monolithique enduit de catalyseurs MOF conformément à la présente invention peut par exemple être rajouté, notamment en fin de ligne, où les gaz d'échappement sont moins chauds. Dans cet exemple, il y a avantageusement une double finalité : ne pas atteindre la température limite de stabilité de la structure hybride du MOF et se situer dans la zone de performances maximales de mise en oeuvre de l'invention. De plus, cette position permet au dispositif illustratif décrit d'éliminer les oxydes d'azote produits par le moteur et, en outre, le cas échéant, par les éléments oxydants d'un catalyseur d'oxydation et/ou d'un filtre à particules. Une position avantageuse du dispositif illustratif décrit peut être par exemple le silencieux, où la température des gaz d'échappement est moindre.

La présente invention permet de manière générale d'éliminer des polluants tels que les oxydes d'azote, issus de la combustion d'hydrocarbures, de charbon, de combustibles issus de la biomasse, en présence d'air ou de l'oxydation de composés azotés, émis par des véhicules, des usines, des ateliers, des produits stockés, etc., de manière efficace, à moindre coût et sans l'utilisation de réducteurs.

La présente invention, ainsi que le dispositif de décomposition ou élimination d'oxydes d'azote illustratif décrit, peuvent être utilisés sur des sources stationnaires d'oxyde d'azote, par exemple les industries chimiques, par exemple de production d'acide nitrique, d'engrais ou d'autres produits azotés, les unités de raffinage et de transformation des produits pétroliers, les usines de transformation, les unités de sidérurgie, les usines agroalimentaires, les centrales de production d'énergie électrique via la combustion, les verreries, les cimenteries, les incinérateurs, par exemple de déchets ménagers et/ou industriels et/ou hospitaliers, les unités de génération ou co-génération de la chaleur, y compris les chaudières des habitations, les bâtiments privés ou public, les collectivités, les hôpitaux, les écoles, les maisons de retraite, etc., les ateliers et les cuisines.

La présente invention, ainsi que le dispositif de décomposition ou élimination d'oxydes d'azote illustratif décrit, s'appliquent également à des sources mobiles, par exemple les véhicules possédant un moteur thermique ou un système hybride doté d'une unité thermique, notamment à essence, diesel, gaz, alcool, charbon, biocarburants, les avions, les voitures, les camions, les tracteurs, les engins agricoles, les machines industrielles, les véhicules utilitaires, les trains non-électriques, les bateaux à moteur de toutes taille, dimensions et utilisations.

La présente invention, ainsi que le dispositif de décomposition ou élimination d'oxydes d'azote illustratif décrit, s'appliquent également aux systèmes de ventilation et/ou de climatisation, afin de purifier l'air en entrée de ces systèmes et/ou en sortie de ces systèmes. Ils s'appliquent aux systèmes de ventilation et/ou climatisation de bâtiments publiques ou privés, habitations, collectivités, bureaux, usines, industries, ateliers, centres de soins, hôpitaux, écoles, centres de formation, centres de recherche, casernes, hôtels, centres commerciaux, stades, cinémas, théâtres, parkings, véhicules, bateaux, trains, avions, etc.

Un autre avantage de la présente invention est que les solides MOF, notamment ceux qui sont présentés ci-dessus, peuvent être recyclés après avoir été utilisés comme catalyseurs conformément à la présente invention, par exemple au cas où ils subissent des détériorations, suite à leur utilisation, à l'usure, notamment par le temps, la présence de poisons dans les gaz à traiter, etc., par exemple aussi, tout simplement pour les recycler.

Ainsi, par exemple lorsqu'ils ont été utilisés dans un filtre permettant d'éliminer les oxydes d'azote d'un effluent, gazeux ou liquide, ou lorsqu'ils ont simplement été mélangés à un effluent duquel on a ainsi éliminé l'oxyde d'azote, les MOF peuvent être récupérés, puis dégradés de façon à en récupérer leurs constituants, par exemple pour fabriquer de nouveaux MOF ou d'autres matériaux. La récupération peut se faire par simple décantation ou filtration d'un effluent liquide dans lequel se trouve le MOF, ou par récupération du MOF qui est présent dans un dispositif d'élimination d'oxyde d'azote. Pour la dégradation du solide MOF récupéré, par exemple, on peut utiliser une solution aqueuse acide, de préférence fort, par exemple HCI, par exemple 1 à 5M, éventuellement avec un chauffage, par exemple de 30 à 100°C. Sur un solide MOF avec pour métal M, par exemple, cela permet de faire précipiter M, par exemple Fe, et de récupérer ainsi la partie métallique du MOF. Un exemple de recyclage d'un MOF est donné ci-dessous. Les composants du solide hybride poreux (MOF) exemplifié ci-dessus sont récupérés après catalyse d'élimination d'oxyde d'azote. L'utilisation de la présente invention présente donc un caractère écologique certain qui s'inscrit parfaitement dans le courant actuel de protection de l'environnement et de développement durable.

Un autre avantage est que les solides MOF, notamment ceux qui sont présentés ci-dessus, peuvent être récupérés après avoir été utilisés comme catalyseurs conformément à la présente invention.

Ainsi, par exemple lorsque les solides MOF sont utilisés dans un filtre permettant d'éliminer les oxydes d'azote d'un effluent, gazeux ou liquide, ou lorsqu'ils ont simplement été mélangés à un effluent duquel on a ainsi éliminé l'oxyde d'azote, ils peuvent être « empoisonnés » par des espèces chimiques comme des composés soufrés, des hydrocarbures lourds, des suies, etc. La régénération consiste à retirer ces espèces chimiques des MOF. Cette régénération peut être réalisée par exemple par simple chauffage sous vide ou sous flux de gaz inerte, par exemple N₂, Ar, Ne, etc. Dans les cas où les impuretés seraient plus stablement coordinées, cette régénération peut être réalisée par exemple par suspension dans de l'alcool, par exemple dans du méthanol, de l'éthanol, du propanol ou tout autre alcool approprié ou un mélange de deux ou plusieurs de ces alcools, éventuellement en chauffant, par exemple à une température de 50 à 100°C, par exemple de 70 à 90°C, pendant une durée permettant la régénération du MOF, par exemple de 15 minutes à 5 heures, par exemple de 1 à 3 heures, par exemple pendant 2 heures. Cette régénération peut également être réalisée par exemple au moyen d'un flux de vapeur d'eau, de préférence supporté par un gaz inerte, de préférence à une température de 80 à 100°C, par exemple de 15 minutes à 5 heures, par exemple de 1 à 3 heures, par exemple pendant 2 heures. Cette dernière méthode permet avantageusement de traiter le MOF lorsqu'il est placé dans un dispositif pour son utilisation conforme à la présente invention, sans avoir à démonter le dispositif. Là encore, l'utilisation de la présente invention montre un caractère écologique certain qui s'inscrit parfaitement dans le courant actuel de protection de l'environnement.

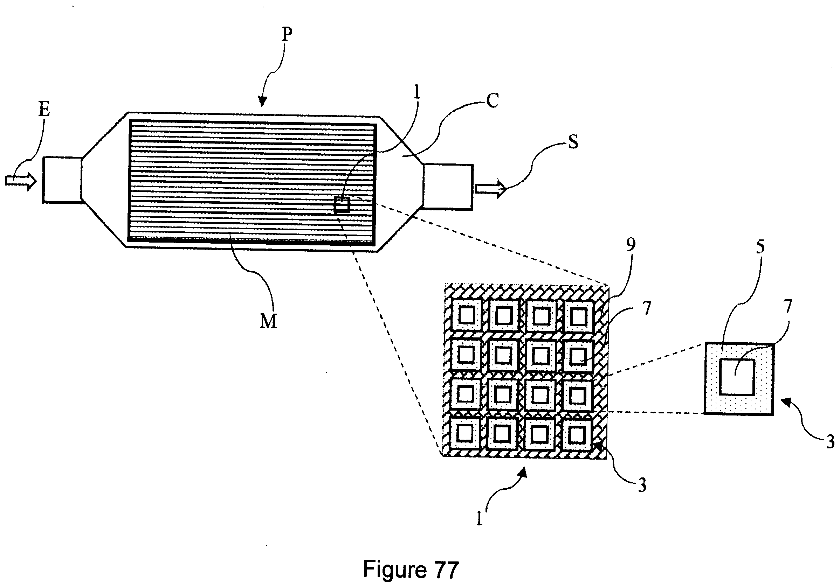

D'autres avantages pourront encore apparaître à l'homme du métier à la lecture des exemples ci-dessous, illustrés par les figures annexées, donnés à titre illustratifs et non limitatif. Les figures 77-81, et les exemples 21-25 sont décrits à titres illustratif et n'appartiennent pas à l'invention.

### Brève description des figures

- La figure 1 représente un diffractogramme RX (Lamda Cu = 1,5406 angströms) du solide MIL-100(Fe).
- La figure 2 représente un isotherme d'adsorption d'azote à 77 K du solide MIL-100 (Po=1 atm) déshydraté.
- La figure 3 représente une analyse thermogravimétrique (sous air, avec une vitesse de chauffe de 2°C/minute) du composé MIL-100(Fe).
- La figure 4 représente la structure du solide MIL-100(Fe). (a) : trimère d'octaèdre et ligand trimésique ; (b) : supertétraèdre ; (c) : structure 3d schématique ; (d) : les deux types de cages mésoporeuses.
- La figure 5 représente à gauche : l'évolution du taux de fer(II) dans le MIL-100(Fe) en fonction de la température d'activation sous vide par spectroscopie Mössbauer ; droite : la thermodiffraction RX sous vide du solide MIL-100(Fe) (λ_{Cu}=1.5406 Å).
- La figure 6 est un schéma récapitulatif de l'activation du solide MIL-100(Fe).
- La figure 7 représente un graphique d'une étude de force acide de Brønsted des groupements -OH de différentes espèces greffées sur l'échantillon MIL-100(Cr) analysé par IR après adsorption de CO : corrélation entre le déplacement ν(OH), les valeurs de H0 et la position ν(CO).
- La figure 45 représente un diffractogramme de rayons X du 3,3',5,5'-azobenzenetetracarboxylate de fer (MIL-127(Fe)) (λCu=1,5406Å)
- La figure 46 représente l'analyse thermogravimétrique du 3,3',5,5'-azobenzenetetracarboxylate de fer sous air (vitesse de chauffe de 2°C/min).
- La figure 47 représente un isotherme d'adsorption d'azote du 3,3',5,5'-azobenzenetetracarboxylate de fer (P0=1atmosphère).
- La figure 55 représente une quantité de sites Fer insaturés présents dans le MIL-100 Fe activé sous vide à différentes températures.
- La figure 56 représente à titre illustratif une vue schématique du phénomène de respiration (gonflement et contraction) dans les solides MIL-88A, MIL-88B, MIL-88C, MIL-88D et MIL-89, aucun d'entre eux n'appartient à l'invention. L'amplitude de gonflement entre formes sèches (en haut) et formes ouvertes (en bas) est représentée en % en bas de la figure.
- La figure 57 représente à titre illustratif un schéma explicatif de la flexibilité dans les phases hybrides MIL-53 (a) et MIL-88 (b et c), aucun d'entre eux n'appartient à l'invention.
- La figure 58 représente, à titre illutratif, en haut, une étude de la réversibilité du gonflement du solide MIL-88A, n'appartient pas à l'invention, par diffraction des RX (λ~1.79Å), en bas, des diffractogrammes RX du solide MIL-88A en présence de solvants (λ~1.5406Å).
- La figure 59 est un graphique présentant les résultats expérimentaux de la conversion des NOx en N₂ et N₂O en présence d'eau sur l'échantillon MIL-100 (Fe) en fonction de la température, après une activation sous Ar sec à 250°C pendant 3 heures, à l'état stationnaire, après saturation de l'étape de stockage.
- La figure 60 est un graphique présentant les résultats expérimentaux de la conversion des NOx en N₂ et N₂O en présence d'oxygène sur l'échantillon MIL-100 (Fe) en fonction de la température, après une activation sous Ar sec à 250°C pendant 3 heures, à l'état stationnaire, après saturation de l'étape de stockage.
- La figure 61 montre les spectres IR de différence des espèces adsorbées sur la surface de l'échantillon MIL-100 (Fe) sous un flux réactionnel de 500 ppm NO + 10% O₂ dans l'argon, en fonction de la température et à l'équilibre (état stationnaire), après une activation sous Ar sec à 250°C pendant 3 heures.
- La figure 62 est un graphique présentant les résultats expérimentaux de la conversion des NOx en N₂ et N₂O en présence d'eau et d'oxygène sur l'échantillon MIL-100 (Fe) en fonction de la température, après une activation sous Ar sec à 250°C pendant 3 heures, à l'état stationnaire, après saturation de l'étape de stockage.
- La figure 63 est un graphique montrant des résultats expérimentaux de conversion de 900 ppm de NO (avec ou sans oxygène et eau) à 30°C, après un pré-traitement de l'échantillon MIL-100 (Fe) à 250°C pendant 6 heures, à des vitesses spatiales comprises entre 5000 et 20000 h⁻¹.
- La figure 64A est un graphique montrant des résultats expérimentaux de conversion de 900 ppm de NO, en présence ou en absence d'oxygène, à 30°C, sur un échantillon MIL-100 (Fe) après un pré-traitement de l'échantillon à 250°C pendant 6 heures, à des vitesses spatiales comprises entre 5000 et 20000 h⁻¹.
- La figure 64B représente le pourcentage de conversion de 900 ppm de NO sur différents échantillons au fer, à la vitesse spatiale de 20000 h⁻¹ dans une catalyse selon la présente invention.
- La figure 64C représente le pourcentage de conversion de 900 ppm de NO sur différents échantillons au fer, à la vitesse spatiale de 20000 h⁻¹ dans une catalyse selon la présente invention.
- La figure 65 est une représentation graphique du profil de concentration lors l'élimination des oxydes d'azote (concentration en ppm en oxyde d'azote en fonction du temps de réaction en min.).
- La figure 75 représente un diffractogramme aux rayons X (RX) du solide MIL-100(Fe) non fluoré ou N-MIL-100(Fe).
- La figure 76 représente un isotherme d'adsorption d'azote du solide MIL-100(Fe) non fluoré ou N-MIL-100(Fe) (P0=1 atmosphère).
- La figure 77 représente un schéma d'un premier exemple de dispositif illustratif convenant pour la mise en œuvre de la présente invention.
- La figure 78 représente un schéma d'un second exemple de dispositif illustratif convenant pour la mise en œuvre de la présente invention. Sur cette figure est également présentée une photographie d'une coupe transversale d'une partie du dispositif de cet exemple.
- La figure 79 représente schématiquement un dispositif illustratif selon la présente invention, inséré dans une ligne d'échappement d'un moteur (Mot).
- La figure 80 représente schématiquement un dispositif illustratif, inséré dans une ligne d'échappement sous la forme d'un pot catalytique.
- La figure 81 représente schématiquement un moteur à combustion ou thermique dans lequel un dispositif selon l'invention est intégré pour éliminer les oxydes d'azote des gaz d'échappement du moteur.

### EXEMPLES

### Exemple 1 : Synthèse et données sur des exemples de carboxylates de fer utilisables comme catalyseurs selon la présente invention

Cet exemple décrit la synthèse de divers carboxylates de métaux utilisables pour la mise en œuvre de la présente invention. Les solides obtenus ont ensuite été caractérisés selon les méthodes décrites ci-dessous.

L'analyse de la structure cristalline des solides carboxylates de fer a été effectuée par diffraction des rayons X (RX) à l'aide d'un diffractomètre Siemens D5000 (radiation CuKα λ_{Cu}=1,5406 Å, *mode θ-2θ),* à température ambiante à l'air. Les diagrammes sont représentés soit en distances angulaires (2θ, en degrés °) soit en distance inter-réticulaire (d, en Å ou Angström).

La caractérisation de la porosité (surface spécifique Langmuir et volume de pore) des solides a été mesurée par l'adsorption d'azote à 77 K avec un appareil Micromeretics ASAP-2010. Les solides ont été préalablement déshydratés à 150°C sous vide primaire pendant une nuit. L'isotherme d'adsorption d'azote par les solides est donnée par une courbe représentant le volume d'azote adsorbé V (en cm³/g) en fonction du rapport de la pression P sur la pression de référence P₀=1 atm.

L'analyse thermogravimétrique a été effectuée sous atmosphère d'air à l'aide d'un appareil Modèle TA-instrument 2050 . La vitesse de chauffe était de 2°C/minute. La courbe résultant de l'analyse thermogravimétrique des solides représente la perte de masse Pm (en %) en fonction de la température T (en °C).

L'analyse élémentaire des solides a été effectuée par le Service Central d'Analyse du CNRS de Vernaison :
Analyse organique :
   Microanalyses C,H,N,O,S dans les produits pharmaceutiques, les polymères et d'une façon générale les produits de synthèse, par détections coulométrique, catharométrique ou cellule infrarouge.
Analyse inorganique:
   Les principales techniques d'analyse mises en œuvre dans ces exemples sont les suivantes :
   - ICP-AES (« Inductive Coupled Plasma - Atomic Emission Spectroscopy » ou « Spectrométrie d'émission atomique par plasma à couplage inductif ») avec différents types de détecteurs ;
   - ICP-MS (« Inductively Coupled Plasma-Mass Spectrometry » ou « Spectrométrie de masse par Plasma à couplage inductif ») avec des spectromètres de masse quadripolaires ou à secteur magnétique ;
   - CVAAS (« Cold-Vapor Atomic Absorption Spectroscopy » ou « Spectroscopie d'absorption atomique à vapeur froide ») ;
   - Couplage ICP / MS / HPLC (« Inductively Coupled Plasma / Mass Spectrometry / High Performance Liquid Chromatography » ou « Chromatographie liquide Haute Performance / Spectrométrie de Masse par Plasma à Couplage Inductif ») ;
   - Fluorescence X ;
   - Traitements d'échantillons par voie humide, par voie sèche ou micro-ondes.

### a) MIL-100(Fe) ou Fe₃O[C₆H₃-(CO₂)₃]₂.X.nH₂O (X=F, Cl, OH)

Le carboxylate de fer MIL-100(Fe) a été synthétisé selon deux conditions: avec et sans acide fluorhydrique.

### Conditions de synthèse avec de l'acide fluorhydrigue :

56 mg de fer métallique en poudre (1 mmol, commercialisé par la société Riedel de Haen, 99%), 140 mg d'acide 1,3,5-benzenetricarboxylique ou acide trimésique (0,6 mmol, 1,3,5-BTC ; commercialisé par la société Aldrich, 99%) sont dispersés dans 5 mL d'eau distillée avec 0,6 mL d'acide nitrique 2M (commercialisé par la société VWR, 50%) et 0,4 mL d'acide fluorhydrique 5M (commercialisé par la société SDS, 50%). Le tout est placé dans un corps en Téflon de 23 ml mis dans une bombe métallique de la société PAAR et laissé pendant 6 jours à 150°C avec un palier de monté en température de 12 heures et un palier de descente en température de 24 heures. Le solide est récupéré par filtration.

Puis, le solide (200 mg) est suspendu dans 100 mL d'eau distillée à reflux sous agitation pendant 3h pour éliminer l'acide trimésique restant dans les pores. Le solide est ensuite récupéré par filtration à chaud.

Il est ensuite séché pendant une nuit à 100°C dans un four.

### Conditions de synthèse sans acide fluorhydrique :

0,27 g de FeCl₃.6H₂O (1 mmol, commercialisé par la société Alfa Aesar, 98%), 140 mg (0,6 mmol) d'acide 1,3,5-benzenetricarboxylique (1,3,5-BTC ; commercialisé par la société Aldrich, 99%) sont dispersés dans 5 mL de l'eau distillée. Le tout est laissé dans un corps en Téflon de 23 mL mis dans une Bombe métallique PAAR pendant 3 jours à 130°C. Le solide est ensuite filtré et lavé avec de l'acétone.

Le solide (200 mg) est ensuite suspendu dans 100 mL d'eau distillée à reflux sous agitation pendant 3h pour éliminer l'acide trimésique restant dans les pores. Le solide est ensuite récupéré par filtration à chaud.

Il est ensuite séché pendant une nuit à 100°C dans un four.

### Données caractéristiques du solide carboxylate de fer MIL-100(Fe) :

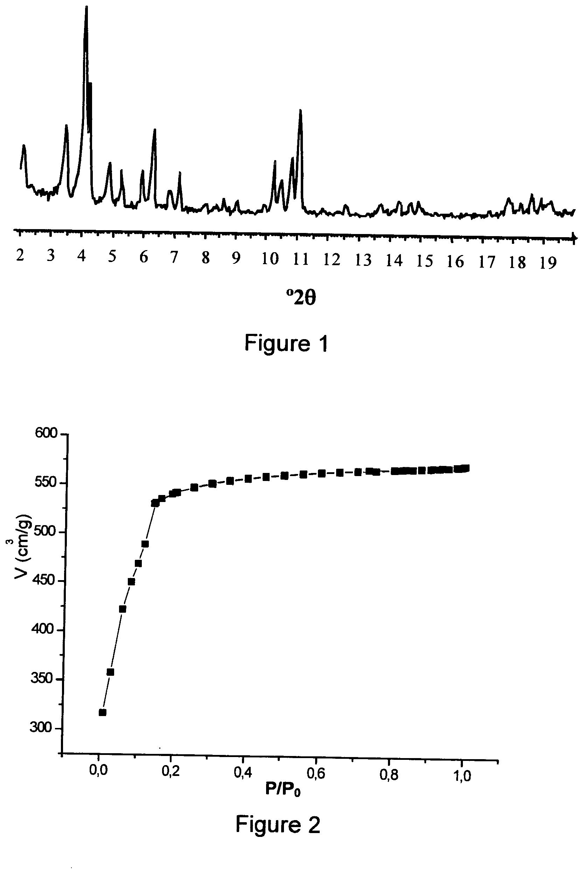

L'analyse de la structure cristalline du solide MIL-100(Fe) par diffraction des rayons X donne le diffractogramme RX représenté en figure 1.

Les caractéristiques de la structure cristalline sont les suivantes :
- le groupe d'espace est Fd-3m (n°227).
- les paramètres de maille sont : a=73,1 Å ; volume de la maille V=393000 Å³.

L'isotherme d'absorption d'azote à 77 K du solide MIL-100(Fe) (à la pression P₀=1 atm) est donnée en figure 2. La surface (Langmuir) spécifique de ce solide est proche de 2900 m².g⁻¹.

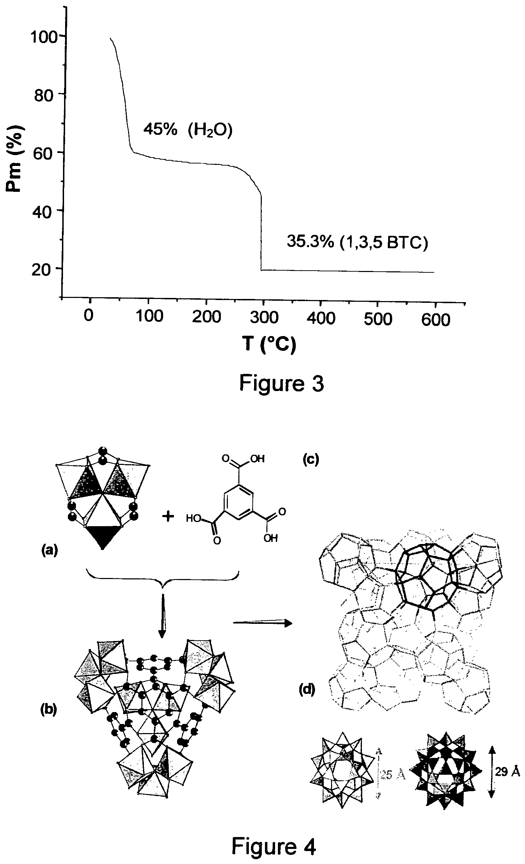

La courbe résultant de l'analyse thermogravimétrique du composé MIL-100(Fe) est donné en figure 3. Ce diagramme représente la perte de masse Pm (en %) en fonction de la température T (en °C).

**Tableau 1 : analyse élémentaire du solide MIL-100(Fe) ou Fe₃O[C₆H₃-(CO₂)₃]₂.X.nH2O dans le cas où X=F**

| Elément (% massique) | % Fer | % Carbone | % Fluor |
|---|---|---|---|
| MIL-100(Fe) | 13,8 | 23,5 | 1,3 |

Le solide MIL-100, avec Fe ou Cr, a été fabriqué comme dans les documents [70, 83]. Il est constitué de trimères d'octaèdres de fer ou de chrome, suivant la synthèse avec Fe ou Cr, relié par des acides trimésiques qui s'associent pour former des supertétraèdres hybrides. Le tout conduit ainsi à une structure mésoporeuse cristallisée, dont les cages de dimensions libres 25 et 29 Å, sont accessibles par des fenêtres microporeuses (figure 4). Le volume poreux résultant est très important, proche de 1,2 g.cm⁻³ pour une surface spécifique BET de 2200 m².g⁻¹.

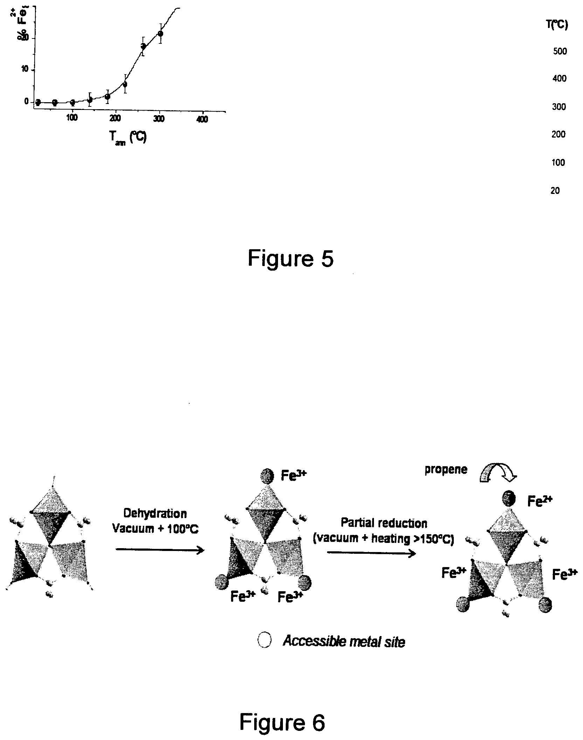

La particularité de ce solide est la stabilité de sa structure après le départ de l'eau coordinnée sur les centres métalliques. Ce phénomène est décrit dans A. Vimont, et al. J. Am. Chem. Soc., 2006, 128, 3218-3227: First characterization of acid sites in a new chromium(III) dicarboxylate with giant pores [84]. L'eau est facilement évacuée par chauffage sous vide et laisse place à des centres métalliques insaturés et accessibles (métal en coordinence cinq). Par ailleurs, lorsque la température d'activation sous vide dépasse les 150°C, une réduction partielle du fer(III) en fer(II) se produit. Cette réduction se fait de manière croissante avec la température et ne déstabilise pas la structure avant 280°C, comme le montre la thermodiffractométrie RX sous vide (figure 5).

Le solide MIL-100(Fe) a pour composition Fe^{III}₃O(H₂O)₂F.{C₆H₃-(CO₂)₃}₂.nH₂O (n~14.5). Sa charpente est cationique avec un anion de compensation par trimère de fer. Ici, l'anion est un fluorure qui est coordinné sur le fer. La stabilité du MIL-100(Fe) à une réduction partielle du fer(III) en fer(II) pourrait s'expliquer par un départ de fluor conjugué à la réduction du fer. Ainsi, il est tout à fait raisonnable de penser qu'un fer(III) par trimère puisse être réduit en fer(II) en même temps qu'un départ des ions fluorures pour respecter l'électroneutralité. De retour à température ambiante, sous air, le solide se réoxyde avec une probable coordination d'anions OH sur le fer. Cette propriété a également été observée par les inventeurs sur le vanadium.

Cette propriété est fondamentale et unique à la connaissance des inventeurs dans le domaine des MOFs : la réduction d'un centre métallique sous vide insaturé tout en maintenant l'intégrité de la structure. Quelles en sont les conséquences ? Les centres métalliques insaturés fer(II) et fer (III) possédant un caractère accepteur d'électrons (acide de Lewis) et forment des complexes π avec des molécules possédant un caractère donneur d'électrons (base de Lewis), tel que des alcènes ou des alcynes ou des oxydes d'azote. La stabilisation des complexes ainsi formés peut être rationalisée d'après le modèle de Dewar-Chatt-Duncanson décrit dans J. Chatt and L. A. Duncanson, J. Chem. Soc., 1953, 2939-2947 (« Olefin co-ordination compounds. Part III. Infra-red spectra and structure: attempted preparation of acetylene complexes ») [85] en considérant d'une part la structure électronique de la double ou triple liaison carbone-carbone de l'oléfine et d'autre part des orbitales vacantes du site d'adsorption: la liaison entre l'alcène ou l'alcyne implique (i) une délocalisation des électrons des orbitales π liantes de l'hydrocarbure insaturé vers les orbitales vacantes du site d'adsorption (interaction donneur-accepteur par liaison σ) (ii) une délocalisation des électrons des orbitales d partiellement remplies du site d'adsorption vers les orbitales π* anti-liantes de l'hydrocarbure insaturé (liaison π). Le fer (II) possède un électron d supplémentaire par rapport au fer(III), ce qui renforce la liaison π avec l'hydrocarbure et accroît ainsi la stabilité du complexe formé. Ainsi, le MIL-100(Fe) partiellement réduit va pouvoir interagir plus fortement avec de telles molécules (figure 6). Des phénomènes similaires peuvent être envisagés entre les orbitales π de NO ou NO₂ et les orbitales d du fer, ainsi que des interactions de donation entre le doublet libre d'électrons sur l'azote de ces molécules et les orbitales d vides du fer.

Finalement, bien que le MIL-100 possède des centres métalliques insaturés (fer) qui sont des centres acides de Lewis, même si ceux-ci peuvent se transformer en acidité de Brønsted par coordination de molécules donneur de proton telles que l'eau (A. Vimont et al., Journal of Physical Chemistry C, 111 (2007), 383-388: Creation of Controlled Bronsted Acidity on a Zeotypic Mesoporous Chromium(III) Carboxylate by Grafting Water and Alcohol Molecules [86]), l'acidité mesurée par adsorption de CO n'est pas très forte et cela ne provoque sans doute pas de transformation des NOx en acide nitrique dans les pores.

En effet nos études préalables sur un système MIL-100(Cr) ont montré la présence d'un grand nombre de sites acides de Lewis [84]), qui sont transformés en sites acides de Brønsted par adsorption d'eau. L'ajout de petites doses calibrées de CO a confirmé l'existence de deux types de molécules d'eau de force acide similaire, globalement assez faible.

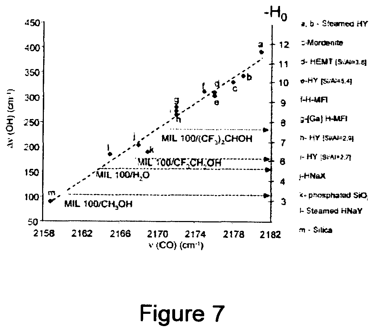

L'introduction d'alcools de basicité différente a précisé que la force des sites acides de Brønsted dépend de la nature de la molécule coordinnée et croit avec la basicité de l'espèce protique. Les résultats expérimentaux de cette introduction sont représentés sur la Figure 7 annexée.

### b) MIL-127(Fe) ou Fe₆O₂[C₁₂H₆N₂-(CO₂)₄]₃.X₂.nH₂O (X=F, Cl, OH)

Dans cet exemple, on fabrique la phase isotype de celle à l'indium publiée par Y. Liu et al., Angew. Chem. Int. Ed. 2007, 46, 3278-3283 [89].

### Synthèse du solide MIL-127(Fe) :

Le solide est récupéré par filtration et séché sous vide à 90°C.

118 mg (0,3 mmol) de Fe(ClO4)3.nH2O (Aldrich, 98%) et 119 mg (0,6 mmol) d'acide 3,3',5,5'-azobenzenetetracarboxylique (synthétisé selon le protocole de synthèse E décrit dans l'exemple 3 ci-dessous) sont dispersés dans 5 mL de Diméthylformamide (DMF, Aldrich, 99%) avec l'adition de 0.1 mL d'acide fluorhydrique 5M (HF, SDS 50%). Le mélange est laissé dans un corps en Téflon de 23 mL mis dans une Bombe métallique PAAR pendant 3 jours à 150°C avec un palier de montée de 1 heure. Le solide est récupéré par filtration.

Le solide est ensuite séché à 200°C sous vide primaire pendant 15 heures.

### Données caractéristiques du solide MIL-127(Fe) : 3,3',5,5'-azobenzenetetracarboxylate de fer

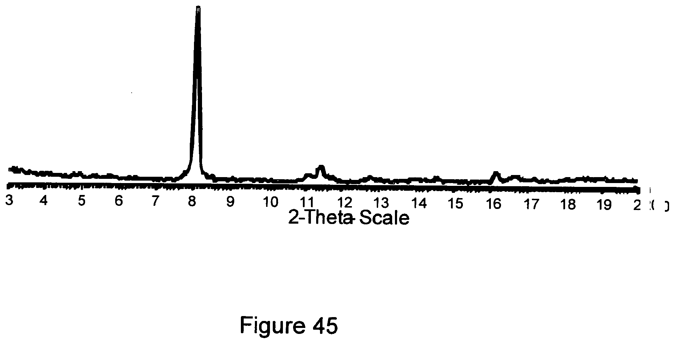

La figure 45 représente le diffractogramme RX du solide 3,3',5,5'-azobenzenetetracarboxylate de fer(III) brut de synthèse.

La phase, de symétrie cubique, est isostructurale de celle publiée par le groupe du Prof. Eddaoudi [89] à l'indium (groupe d'espace Pa3).

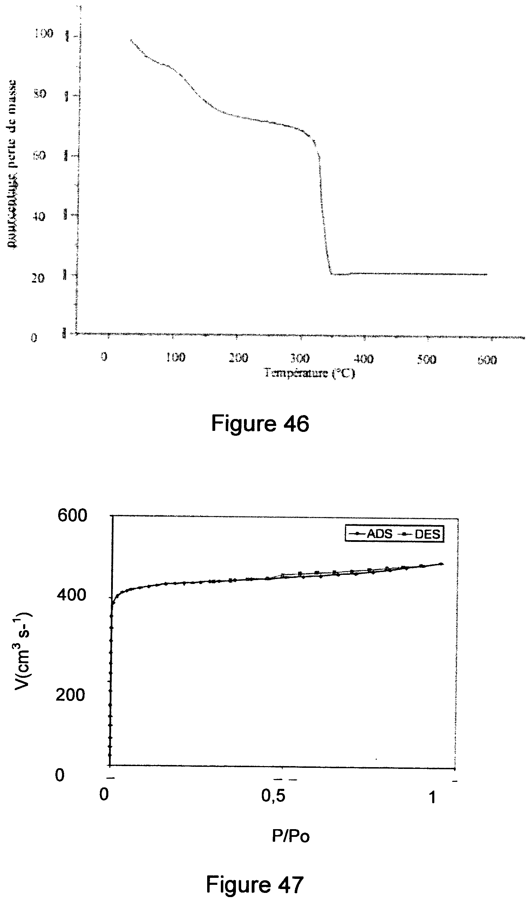

Les résultats de l'analyse thermogravimétrique du composé 3,3',5,5'-azobenzenetetracarboxilate de fer brut de synthèse (sous air, à une vitesse de chauffe de 2°C/minute) sont représentés en figure 46 (perte de masse Pm en fonction de la température T).

Les pertes de masse observées à des températures inférieures à 250°C correspondent au solvant (eau, diméthylformamide) présent dans les pores.

La décomposition du produit intervient vers 300°C pour conduire à de l'oxyde de fer(III).

Ce composé présente une surface accessible importante (Langmuir) (supérieure à 2000 m²/g) à l'azote à 77 K (figure 47). (Porosimétrie à l'azote appareil Microméritics ASAP 2010). La figure 47 représente un isotherme d'adsorption d'azote du 3,3',5,5'-azobenzenetetracarboxylate de fer (P₀=1atmosphère).

### Exemple 2 : Synthèse de l'acétate de fer(III) pour la fabrication de MOF utilisables dans la présente invention

L'acétate de fer(III), utilisé dans les exemples ci-dessous pour la synthèse des matériaux MOF selon l'invention, est synthétisé selon le protocole suivant. Cette synthèse peut se référer à la publication de Dziobkowski et al., Inorg. Chem., 1982, 21, 671 [87].

6,72 g de poudre de fer métallique (Riedel-de Haën, 99%), 64 mL d'eau déionisée et 33,6 mL d'acide perchlorique à 70 % dans l'eau (Riedel-de Haën) sont mélangés sous agitation magnétique et chauffés à 50°C pendant 3 heures. Après arrêt du chauffage, la solution est agitée pendant 12 heures. Le fer métallique résiduel est éliminé par décantation suivie d'un changement de récipient. 20,6 mL de solution de peroxyde d'hydrogène dans l'eau (commercialisé par la société Alfa Aesar, 35%) sont ajoutés goutte-à-goutte sous agitation, le tout étant maintenu dans un bain de glace à 0°C. On ajoute 19,7 g d'acétate de sodium (Aldrich, 99%) à la solution bleue sous agitation en maintenant la solution à 0-5°C. On laisse la solution s'évaporer pendant 3 jours sous la hotte dans un cristallisoir (Volume = 0,5 L) en verre. Finalement, les cristaux rouges d'acétate de fer sont récupérés par filtration et lavés très rapidement avec de l'eau déionisée glacée. Les cristaux sont ensuite séchés sous atmosphère d'air.

### Exemple 3 : Synthèse des ligands des MOFs utilisables dans la présente invention

### Synthèse E de l'acide 3,3',5,5'- azobenzenetetracarboxylique

15g d'acide 5-nitro isophthalique (commercialisé par la sociétéAldrich, 98%) et 50g de soude sont placés dans 225 mL d'eau distillée, et chauffés à 50°C sous agitation. 100g de glucose (Aldrich, 96%) dissout dans 150 mL d'eau sont ajoutés. Le mélange est agité 15 minutes, puis un bullage d'air est effectué pendant 3 heures, à température ambiante. Le sel de disodium est récupéré par filtration, lavé à l'éthanol, puis dissout à nouveau dans 120 mL d'eau. De l'acide chlorhydrique (commercialisé par la société Aldrich VWR, 37%) est ajouté jusqu'à obtenir un pH égal à 1.

### Exemple 4 : Synthèse de nanoparticules de MOF utilisables dans la présente invention

### MIL-100nano

La synthèse du MIL-100nano est effectuée en mélangeant du FeCl₃.6H₂O (1 mmol; Alfa Aesar, 98%) et de l'acide 1,3,5-benzenetricarboxylique (1,3,5-BTC ; 1 mmol; Aldrich, 95%) dans 3 mL d'eau distillée. Le mélange est placé dans une bombe PAAR à 100°C pendant 12h. Le produit est récupéré par centrifugation à 5000rpm (10 minutes).

200 mg du solide sont mis en suspension dans 100 mL d'eau distillée sous agitation et reflux pendant 3h pour éliminer l'acide restant dans les pores. Puis, le solide est récupéré par centrifugation à 5000rpm (10 minutes). La taille de particule mesurée par diffusion de lumière est 536 nm.

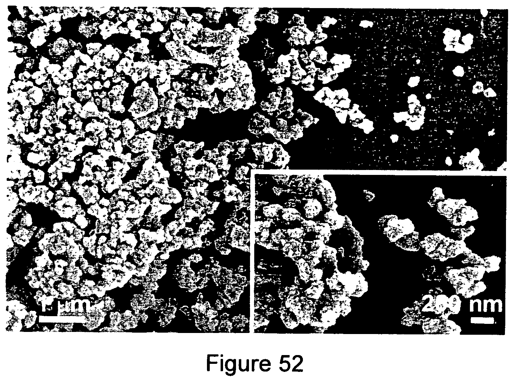

La microscopie électronique à balayage (MEB) du solide MIL-100nano est représentée en figure 52.

On peut observer sur les images de MEB une grande agrégation particulaire (Figure 52). Les nanoparticules sont plutôt sphériques, mais la taille reste difficile à déterminer compte tenu de la grande agrégation. On peut estimer une taille de 40-600 nm.

### Exemple 5 : : Détermination de la teneur en fer dans le solide MIL-100(Fe) utilisable dans la présente invention

### Préparation de l'échantillon :

Les échantillons sont pressés sous forme de disques auto-supportés. Le disque possède un diamètre de 1,6 cm et une masse de 13 à 20 milligrammes. La pression de pastillage est de l'ordre de 10⁹ Pa.

### Activation :

Afin de vider les pores du matériau (solvants, acides résiduels) et de libérer les sites de coordination du métal, l'activation du matériau MIL-100(Fe) a été effectuée par chauffage à 150°C sous vide secondaire, c'est-à-dire à 10⁻⁶ Pa, pendant 3 heures. Le solide résultant ne possède que du fer au degré d'oxydation +III.

### Réduction Fe³⁺/ Fe²⁺ :

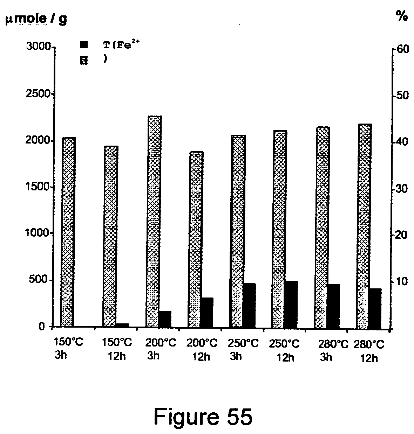

La réduction partielle du matériau MIL-100(Fe) a été effectuée par chauffage a 250°C sous vide résiduel (environ 10⁻³ Pa, soit environ 10⁻⁵ Torr) pendant 12 heures. La spectroscopie infrarouge a permis de quantifier la teneur relative en sites fer(II) coordinativement insaturés/sites fer(III) coordinativement insaturés autour de 20/80 % (Figure 55).

La figure 55 représente la quantité de sites Fer coordinativement insaturés présent dans le solide MIL-100(Fe) activé en fonction du traitement thermique effectué. Le solide MIL-100(Fe) est activé sous vide résiduel, c'est-à-dire environ 10⁻³ Pa, soit environ 10⁻⁵ Torr) à différentes températures et pendant différentes durées. T(Fe) représente la teneur en sites Fer coordinativement insaturés et T(Fe²⁺) représente la teneur en sites Fe²⁺ coordinativement insaturés (en µmole de sites insaturés par gramme de solide activé ou en % de sites Fer total).

Les quantités de sites Fer insaturés sont déterminées par adsorption de CO à 100K suivie par spectroscopie infrarouge. L'incertitude sur les valeurs est estimée à +/-10 %.

### Appareillages utilisés :

L'échantillon pastillé est placé dans une cellule infrarouge conçue au laboratoire. La cellule peut être métallique pour les études sous flux gazeux. La description de la cellule est donnée dans l'article T. Lesage et al, Phys. Chem. Chem. Phys. 5 (2003) 4435 [64]. Elle est en quartz pour les études sous vide ou à des pressions de gaz inférieures à la pression atmosphérique. La cellule, qui possède un four intégré pour le chauffage contrôlé des échantillons, est reliée à une rampe en verre qui permet de faire le vide et/ou d'introduire des gaz sur l'échantillon.

Les spectres infrarouges sont enregistrés grâce à un spectromètre infrarouge à transformée de Fourier de marque Nexus (marque déposée) ou Magna-550 (marque déposée) fabriqué par la société Thermo Fisher Scientific. Le spectromètre est équipée d'un détecteur infrarouge de type MCT/A. Les spectres infrarouges sont enregistrés avec une résolution de 4 cm⁻¹.

### Gaz utilisés :

Les gaz utilisés pour les expériences infrarouges sont de grandes purétés : monoxyde de carbone: fournisseur Alphagaz type N47 pureté (>99.997%) ; monoxyde d'azote : fournisseur Air Liquide, France pureté >99.9% ; helium, azote, argon : fournisseur Air Liquide, pureté >99.9%.

Tous les gaz sont préalablement séchés sur tamis moléculaire et/ou par piégeage cryogénique grâce à de l'azote liquide. Le monoxyde d'azote est purifié par distillation.

### Exemple 6 : Mise en évidence de la flexibilité de solides MOF utilisables dans la présente invention

La catégorie de solides hybrides flexibles à base de trimères de métaux de transition trivalents (Fe, Cr, V ; etc...) est dénommée MIL-88 (n'appartient pas à l'invention).

Ces composés sont typiquement construits à partir de trimères d'octaèdres de fer, c'est-à-dire trois atomes de fer connectés par un oxygène central et par six fonctions carboxylates connectant deux à deux les atomes de fer ; une molécule d'eau terminale, coordinée à chaque atome de fer vient ensuite compléter la coordinence octaédrique du métal.

Ces trimères sont ensuite reliés entre eux par des acides dicarboxyliques aliphatiques ou aromatiques pour former les solides MIL-88A, B, C, D et MIL-89 (-A pour acide fumarique, -B pour acide téréphthalique, -C pour acide 2,6-naphtalenedicarboxylique, -D pour acide 4,4'-biphényldicarboxylique et MIL-89 pour l'acide trans, trans muconique; aucun d'entre eux n'appartient à l'invention), comme décrit dans le document de Serre et al., Angew. Chem. Int. Ed. 2004, 43, 6286 [67]. D'autres analogues avec d'autres diacides carboxyliques ont également été synthétisés et sont nommés MIL-88E, F, G , etc (aucun d'entre eux n'appartient à l'invention).

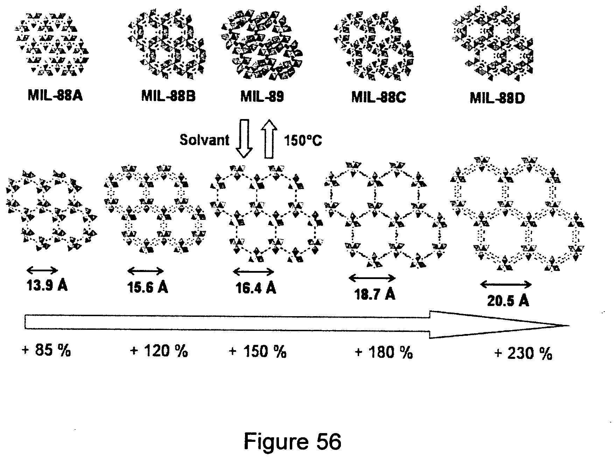

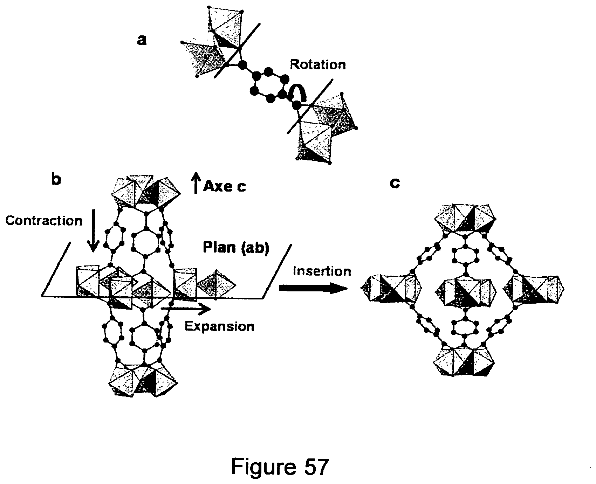

L'étude du comportement de ces solides par diffraction des RX, a permis d'établir que ces composés sont flexibles avec des amplitudes de « respiration » (c'est-à-dire de gonflement ou de contraction) considérables entre leur forme sèche et leur forme solvatée. Il en résulte des variations de volume de maille entre 85 et 230 % selon la nature de l'espaceur organique (figure 56), comme décrit dans le document Serre et al., Science, 2007, 315, 1828 [91]. Les inventeurs ont noté que les formes sèches ne sont pas poreuses avec une taille de pores (tunnels) à peu près identique quel que soit le ligand carboxylique utilisé. Par contre, le gonflement du solide hybride en phase liquide est fonction de la longueur de l'espaceur organique. Ainsi, la distance entre trimères dans la forme gonflée passe de 13,8 Å avec l'acide fumarique (MIL-88A) à 20,5 Å avec le ligand biphényl (MIL-88D). La taille des pores des formes gonflées varie ainsi entre 7 Å (MIL-88A) à 16 Å (MIL-88D). Le gonflement est réversible, comme le montre l'exemple du solide MIL-88A en présence d'eau dans la figure 57 et dépend également de la nature du solvant utilisé comme décrit dans le document Serre et al. J. Am. Chem. Soc., 2005, 127, 16273-16278 [92]. La « respiration » s'effectue de manière continue, sans rupture apparente de liaisons durant la respiration. Par ailleurs, de retour à température ambiante, le solide gonfle à nouveau par resolvatation, confirmant le caractère réversible de la respiration.

Si l'on regarde de près l'arrangement entre les trimères constitutifs de la structure, chaque trimère est relié à six autres trimères, trois en dessous et trois au dessus, par les dicarboxylates ce qui conduit à la formation de cages bipyramidales de trimères. Au sein de ces cages, la connexion entre trimères s'effectue uniquement selon l'axe c et l'absence de tout lien dans le plan (ab) est à l'origine de la flexibilité (figure 57).

**Tableau 2 :**

| **Solide** | **Condition** | **a(Å)** | **c(Å)** | **V(Å³)** | **Expansion de la maille** | **Taille de pore estimée** | **Solvant** |
|---|---|---|---|---|---|---|---|
| MIL-88A | 100°C | 9,6 | 14,8 | 1180 | > 80% | environ 6 Å | Eau |
| | 25°C | 11,1 | 14,5 | 1480 | | | |
| | Forme ouverte | 13,8 | 12,5 | 2100 | | | |
| MIL-88B | 100°C | 9,6 | 19,1 | 1500 | > 100% | environ 9 Å | Ethanol |
| | **25°C** | **11,0** | **19,0** | **2000** | | | |
| | Forme ouverte | 15,7 | 14,0 | 3100 | | | |
| MIL-88C | 100°C | 9,9 | 23,8 | 2020 | > 170% | environ 13 Å | Pyridine |
| | **25°C** | **10,2** | **23,6** | **2100** | | | |
| | Forme ouverte | 18,7 | 18,8 | 5600 | | | |
| MIL-88D | 100°C | 10,1 | 27,8 | 2480 | > 220% | environ 16 Å | Ethanol |
| | **25°C** | **12,1** | **27,5** | **3500** | | | |
| | Forme ouverte | 20,5 | 22,4 | 8100 | | | |

(Tous les MOFs du Tableau 2 sont mentionnés à titre d'illustration, n'appartient pas à l'invention)

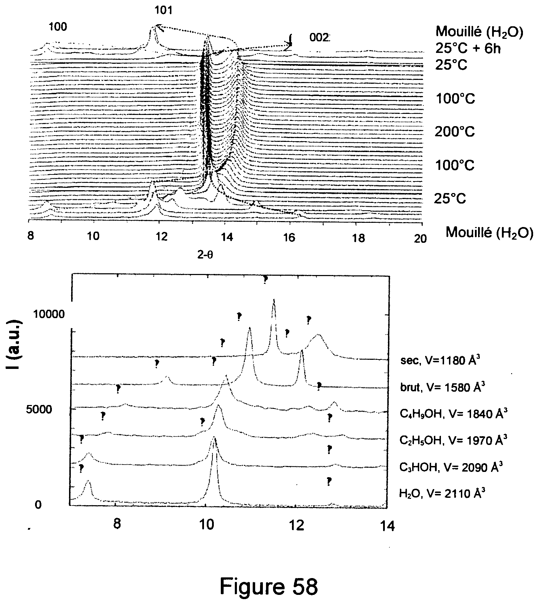

En effet, lorsque l'on insère un solvant dans le matériau, la cage se déforme avec un rapprochement des trimères selon l'axe c et un éloignement dans les directions a et b, ce qui provoque une augmentation globale du volume de la cage (figure 58). Finalement, la flexibilité de ces solides hybrides est remarquable, mais cependant comparable à celle de certains polymères. La principale différence concerne la cristallinité des solides hybrides, les polymères étant amorphes. Enfin, contrairement aux polymères, le gonflement se produit dans les solides hybrides de manière anisotrope.

**Tableau 3 : Structures « MIL » de quelques carboxylates de fer(III) illustratifs et MIL-100 selon l'invention.**

| **Nanosolide MIL-n** | **Fraction organique** | **Formule** |
|---|---|---|
| **MIL-88A** | Acide fumarique | Fe₃OX[O₂C-C₂H₂-CO₂]₃.nH₂O |
| **MIL-88B** | Acide téréphthalique | Fe₃OX[O₂C-C₆H₄-CO₂]₃.nH₂O |
| **MIL-89** | Acide muconique | Fe₃OCl[O₂C-C₄H₄-CO₂]₃.nH₂O |
| **MIL-100** | Acide 1,3,5-Benzene tricarboxylique (Acide 1,4-BTC) | Fe₃OX[C₆H₃-[CO₂]₃].nH₂O |
| **MIL-101** | Acide téréphthalique | Fe₃OX[O₂C-C₆H₄-CO₂]₃.nH₂O |

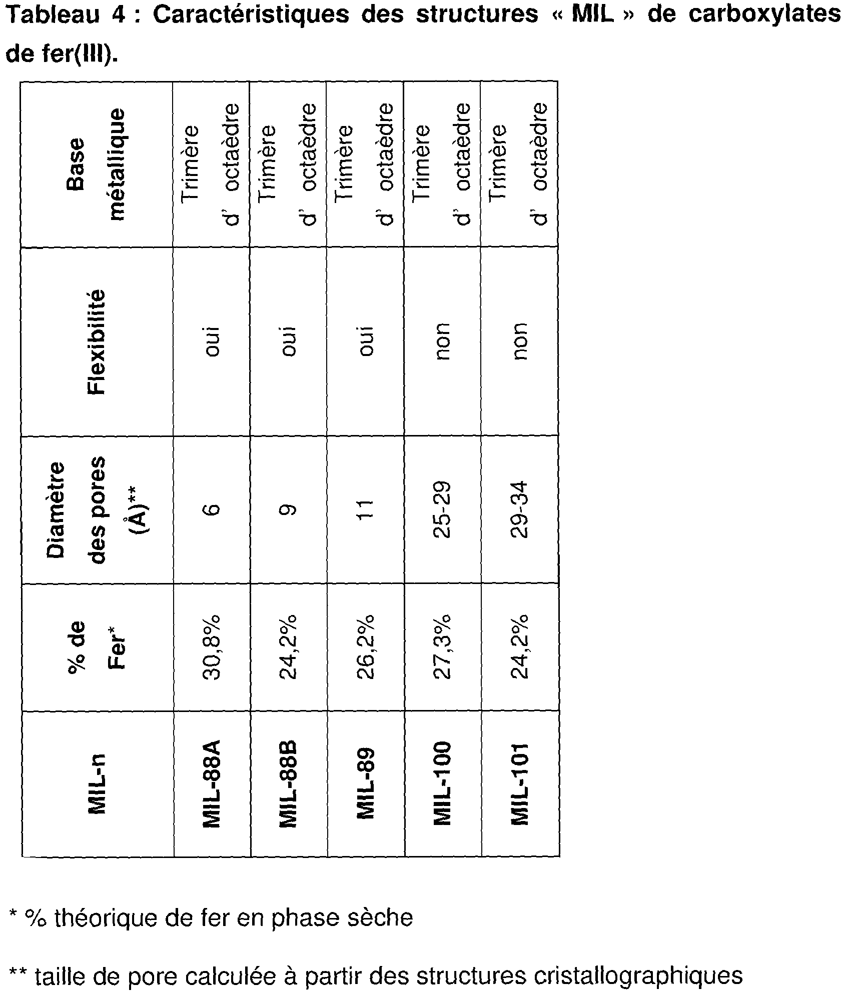

(Dans le Tableau 4, tous les MOFs sauf MIL-100 sont mentionnés seulement à titre d'illustration, n'appartiennent pas à l'invention)

### Exemple 7 : Réduction d'oxyde d'azote selon l'invention avec un MOF à base de carboxylate de Fer (MIL-100 (Fe)) et tests de température

Des tests de réduction d'oxyde d'azote ont été effectués sur un échantillon de MIL-100 (Fe) fluoré décrit dans l'exemple 1 mis sous forme d'une pastille autosupportée obtenue en pressant la poudre de l'échantillon entre deux miroirs en acier placés dans un cylindre avec piston, relié à une presse hydraulique. Le disque possède un diamètre de 1,3 cm et une masse variant de 13 à 20 milligrammes lors des expérimentations réalisées. La pression de pastillage est de l'ordre de 10⁹ Pa.

Comme pour l'exemple 5, l'échantillon pastillé est placé dans une cellule-réacteur infrarouge conçue au laboratoire ou dans une cellule-réacteur commerciale de marque Aabspec, modèle #CX positionnée dans un spectromètre FT-IR et reliée à un système d'introduction et analyse de phases gazeuses. La cellule est reliée à un système de conduites métalliques pour les études sous flux gazeux (banc gaz synthétique). La description du système utilisé est présentée dans l'article T. Lesage et al, Phys. Chem. Chem. Phys. 5 (2003) 4435 [64]. Les concentrations des gaz sont obtenues via des débitmètres massiques de marque Brooks, commandés électroniquement. Les effluents gazeux sont analysés par une microcellule infra-rouge gaz (de marque de commerce Nicolet, Thermo Scientific) et par un spectromètre de masse quadrupolaire Pfeiffer Omnistar reliés en ligne.

Les spectres infrarouges de la surface de l'échantillons et de la phase gaz sont enregistrés grâce à un spectromètre infrarouge à transformée de Fourier de marque Nexus (marque déposée) fabriqué par la société Nicolet, Thermo Scientific. Le spectromètre est équipée d'un détecteur infrarouge de type MCT/A. Les spectres infrarouges sont enregistrés avec une résolution de 4 cm⁻¹ après l'accumulation de 64 scans.

Les gaz utilisés pour les expériences infrarouges sont de grandes purétés : monoxyde de carbone: fournisseur Alphagaz type N47 pureté (>99.997%) ; monoxyde d'azote : fournisseur Air Liquide, France pureté >99.9% ; hélium, azote, argon : fournisseur Air Liquide, pureté >99.9%. Tous les gaz sont préalablement séchés sur tamis moléculaire. L'eau est introduite dans le mélange gazeux de façon contrôlée, via un saturateur thermostaté, où de la vapeur d'eau distillée est entraînée par un gaz vecteur (Ar).

La cellule contenant l'échantillon a été d'abord balayée par un flux d'argon sec à 25 mL/min pendant 3h à 250°C, refroidie ensuite jusqu'à température ambiante, toujours sous flux d'argon. Un mélange de 500 ppm de NO et 1% d'eau plus de l'argon comme gaz vecteur, à complément de 25mL/min au total, afin d'obtenir une vitesse spatiale volumique (VVH) de 100-150000 h⁻¹, représentative d'un échappement moteur, a été envoyé sur l'échantillon à 25°C, 100°C, 150°C, 200°C et 250°C.

A chaque palier de température, après une phase initiale d'absorption de NO sous forme de nitrosyles sur des cations Fe²⁺, le flux gazeux s'est stabilisé à une composition stationnaire (analysée par IR et par spectrométrie de masse).

L'expérience montre une conversion stable et catalytique de NO en N₂ de 2,8% à 25°C et de 1% à 100°C, ainsi que de NO en N₂O majoritairement, de 1,5 à 2%, à 250°C.

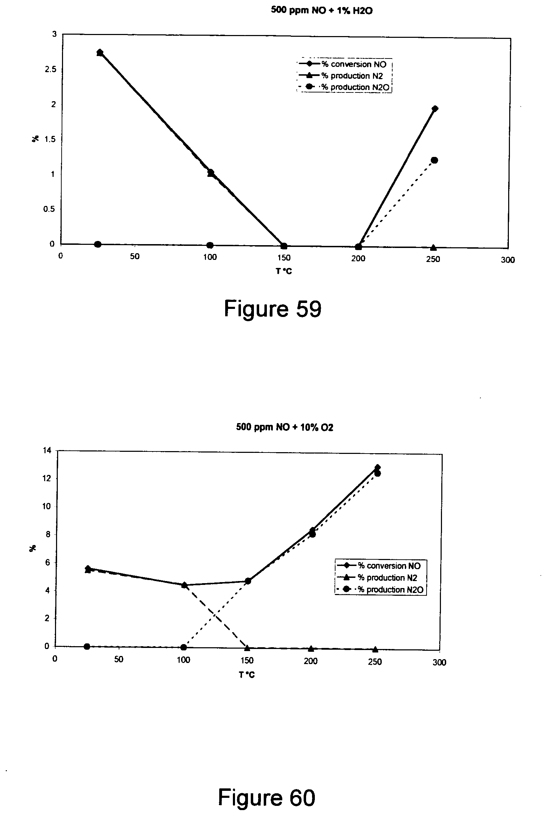

La figure 59 est un graphique présentant les résultats expérimentaux de l'évolution des NOx envoyés sur l'échantillon et de leur conversion en N₂ et N₂O en fonction de la température.

**Tableau 5 : Evolution des NOx stockés sur l'échantillon et conversion en N₂ et N₂O en fonction de la température sous un flux de 500 ppm de NO et 1% d'eau dans l'Ar**

| Température (°C) | Qté NOx stockés / g de catalyseur | % NO absent dans le flux de sortie | % N₂O (equivalent NO) | % N2 (equivalent NO) masse 28 |
|---|---|---|---|---|
| 25 | 69,80 | 2,75 | 0,00 | 2,74 |
| 100 | 59,99 | 1,05 | 0,00 | 1,03 |
| 150 | 31,14 | 0,00 | 0,00 | 0 |
| 200 | 24,06 | 0,00 | 0,00 | 0 |
| 250 | 21,02 | 1,99 | 1,25 | 0 |

Alternativement, sur un échantillon pré-traité comme dans le cas précédent, un mélange de 500 ppm de NO et 10% de dioxygène plus Ar comme gaz vecteur, à complément de 25mL/min au total a été envoyé à 25°C, 100°C, 150°C, 200°C et 250°C, dans les mêmes conditions que celles spécifiées ci-dessus.

A chaque palier de température, après une phase initiale d'absorption de NO sous forme de nitrosyles, le flux gazeux s'est stabilisé à une composition stationnaire analysés par IR et par spectrométrie de masse. L'expérience montre une conversion stable de NO en N₂ de 5,6% à 25°C et de 4,5% à 100°C, ainsi que de NO en N₂O de 4,8% à 150°C, de 8,5% à 200°C et de 13% à 250°C.

**Tableau 6 : Evolution des NOx stockés sur l'échantillon et conversion en N₂ et N₂O en fonction de la température sous un flux de 500 ppm de NO et 10% de O₂ dans l'Ar**

| Température (°C) | Qté NOx stockés / g de catalyseur | % NO absent dans le flux de sortie | % N₂O (equivalent NO) | % N2 (equivalent NO) masse 28 |
|---|---|---|---|---|
| 25 | 97,70 | 5,62 | 0,00 | 5,5 |
| 100 | 18,89 | 4,47 | 0,00 | 4,5 |
| 150 | 11,97 | 4,79 | 4,82 | 0 |
| 200 | 9,07 | 8,50 | 8,19 | 0 |
| 250 | 13,91 | 13,02 | 12,59 | 0 |

On remarquera ici que, dans les conditions utilisées à présent, la conversion de NO en N₂ est plus importante aux basses températures.

A plus haute températures, la réduction de NO est partielle et donne lieu à N₂O, avec des conversions d'environ 5%, 8,5% et 13% à 150°C, 200°C et 250°C respectivement.

La figure 60 est un graphique présentant les résultats expérimentaux de l'évolution des NOx envoyés sur l'échantillon et de leur conversion en N₂ et N₂O en fonction de la température.

En même temps, sur la surface, il est possible d'observer la présence majoritaire de mononitrosyles sur Fe²⁺, ainsi que de traces de mononitrosyles sur Fe³⁺ et/ou de dinitrosyles.

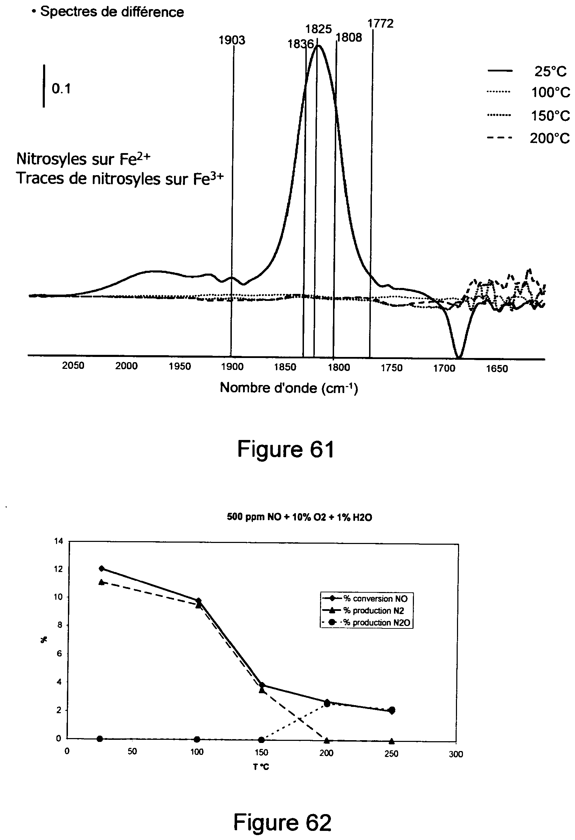

La figure 61 montre les spectres IR de différence des espèces adsorbées sur la surface de l'échantillon sous flux réactionnel de 500 ppm de NO et 10% de O₂ dans l'Ar.

### Exemple 8 : Réduction d'oxyde d'azote selon l'invention

Dans l'exemple suivant le flux contient 500 ppm NO, 10% **O₂** et 1% H₂O dans l'Ar et il est fait passer à travers le MOF utilisé dans l'exemple 7 de la température ambiante à 250°C, par paliers de 50°C, dans les même conditions expérimentales que pour l'exemple 7.

A part de faibles quantités de protoxyde d'azote à 200 et 250°C, aucune conversion de NO n'est observée ; la quantité de NO stocké sur la surface de l'échantillon est aussi basse et probablement sous forme de N₂O₄.

Lorsque l'échantillon est refroidi, la réduction catalytique sélective apparaît, présentant des valeurs d'environ 4% à 150°C, 10% à 100°C et 12% à 25°C.

Ces valeurs sont significatives et importantes, supérieures à celles obtenues par photocatalyse sur TiO₂, où la partie majeure du procédé est basée, en réalité, sur l'adsorption de NOx sous forme de nitrates sur le titane et son élimination successive par décomposition à haute température ou lavage avec formation d'acide nitrique, comme expliqué par exemple dans B.N. Shelimov et al., Journal of Photochemistry and Photobiology A-Chemistry, 195 (2008) 81 [93].

Les résultats expérimentaux de cet exemple sont montrés sur la figure 62 annexée et dans le tableau n°15 ci-dessous.

Sur la figure 62 on représente l'activité de l'échantillon MIL-100 (Fe) en réduction des NOx en fonction de la température, par paliers à 250°C, 200°C, 150°C, 100°C et 25°C. A chaque palier de température, après une phase initiale d'absorption de NO sous forme de nitrosyles, le flux gazeux s'est stabilisé à une composition stationnaire (analysés par IR et par spectrométrie de masse). L'expérience montre une conversion stable de NO en N₂O d'environ 2,2% à 250°C et de 2,6% à 200°C, ainsi que de NO en N₂ de 3,6% à 150°C, de 9,5% à 100°C et de 11,1% à 25°C, toujours en absence de réducteur.

**Tableau 7 : Evolution des NOx stockés sur l'échantillon et conversion en N₂ ou N₂O en fonction de la température, sous un flux de 500 ppm de NO, 1% d'eau et 10% de O₂ dans l'Ar**

| Température (°C) | Qté NOx stockés / g de catalyseur | % NO absent dans le flux de sortie | % N₂O (équivalent NO) | % N₂O (équivalent NO) masse 28 |
|---|---|---|---|---|
| 25 | 16,93 | 0,00 | / | / |
| 100 | 11,96 | 0,00 | / | / |
| 150 | 7,84 | 0,00 | / | / |
| 200 | 3,64 | 0,00 | / | / |
| 250 | 5,76 | 2,10 | 2,22 | 0 |
| 200 | 7,61 | 2,73 | 2,6 | 0,00 |
| 150 | 14,36 | 3,89 | 0 | 3,55 |
| 100 | 19,36 | 9,81 | 0 | 9,50 |
| 25 | 18,92 | 12,07 | 0 | 11,10 |

Après vérification, les inventeurs confirment que la structure du matériau est intègre après tout traitement sous flux réactionnel, tel que décrit ci-dessus.

Les inventeurs remarquent une fois de plus que la réduction de NO est obtenue en absence de réducteurs gazeux, a basse température, en présence de Fe²⁺ et en particulier de couples Fe²⁺ /Fe³⁺.

NO a un pouvoir réducteur sur les ions fer dans cette structure [93], ce qui crée des couples redox capables d'effectuer et entretenir la dissociation

2 NO → N₂ + O₂

La présence d'un oxydant tel que l'oxygène et/ou l'eau dans le flux réactionnel n'est pas négative pour la dissociation.

### Exemple 9 : Modification de la vitesse spatiale et de la composition des gaz

D'autres expériences ont été accomplies à des vitesses spatiales différentes, avec des teneurs en monoxyde d'azote, eau et oxygène différentes sur le matériau MOF testé dans l'exemple 8.

En diminuant la VVH entre 5000 et 20000 h⁻¹, ce matériau atteint des performances très supérieures, même à des concentrations de NO très importantes (900 ppm).

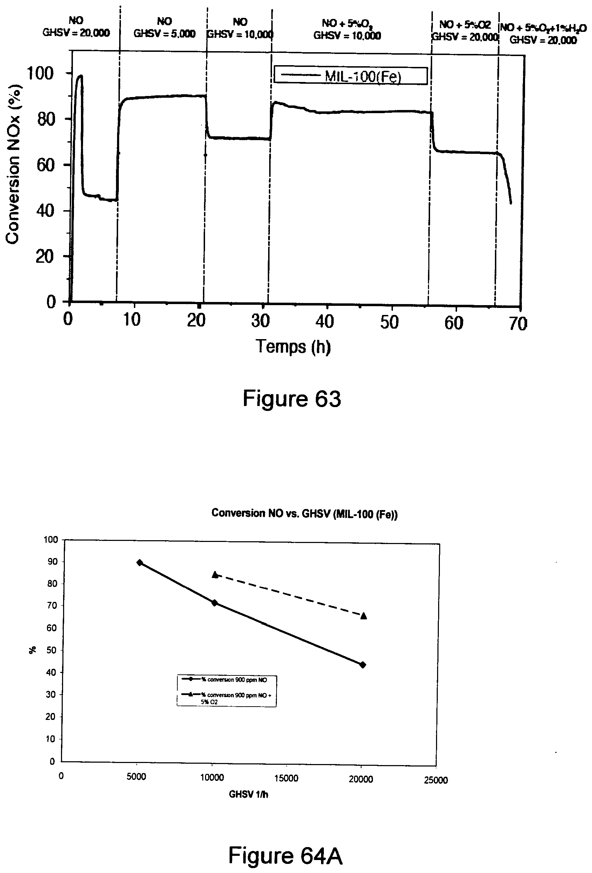

La figure 63 est un graphique montrant des résultats expérimentaux de conversion de 900 ppm de NO à 30°C, après un pré-traitement de l'échantillon à 250°C pendant 6 heures, à des vitesses spatiales comprises entre 5000 et 20000 h⁻¹. Les mêmes expérimentations sont réalisée en présence d'oxygène et eau.

Dans cet exemple, un échantillon de MIL-100 (Fe) d'environ 1,5 g a été introduit dans un réacteur tubulaire reliée à un système d'introduction et analyse des phases gazeuses (par chromatographie en phase gaz et spectrométrie de masse). L'échantillon a été pré-traité par balayage d'un flux d'hélium (100 mL/min) pendant 6h à 250°C. L'expérience a été menée ensuite à 30°C, sous un mélange de 900 ppm de NO et He comme gaz vecteur, à complément de 100 mL/min au total.

Après une phase initiale d'absorption, l'expérience a montré une conversion stable de NO pendant au moins 10 à 20 heures de 90% à 5000 h⁻¹ de vitesse spatiale, de 72% à 10000 h⁻¹ et de 45% à 20000 h⁻¹.

Lors de l'introduction d'un mélange de 900 ppm de NO, 5% O₂ et He comme gaz vecteur, à complément de 100 mL/min au total, la conversion a monté à 85% et 67% pour une vitesse spatiale de 10000 h⁻¹ et de 20000 h⁻¹, respectivement.

Comme montré sur la figure 64A, la conversion de NO varie entre 45% et 90% en fonction de la vitesse spatiale. L'addition de 5% d'oxygène améliore l'activité (comme déjà remarqué dans les expériences précédentes) à vitesse spatiale constante. L'addition ultérieure de 1% d'eau diminue sensiblement la conversion.

Des tests similaires ont été effectués sur deux autres échantillons : le MIL-53 (Fe) obtenu selon le protocole décrit dans T. R. Whitfield et al., Metal-organic frameworks based on iron oxide octahedral chains connected by benzenedicarboxylate dianions, Solid State Sci., 7, 1096-1103, 2005 [94]; et le MIL-102 (Fe) obtenu selon le protocole décrit dans S. Surblé et al, J. Am. Chem. Soc. 128 (2006), 46, 14889 [72].

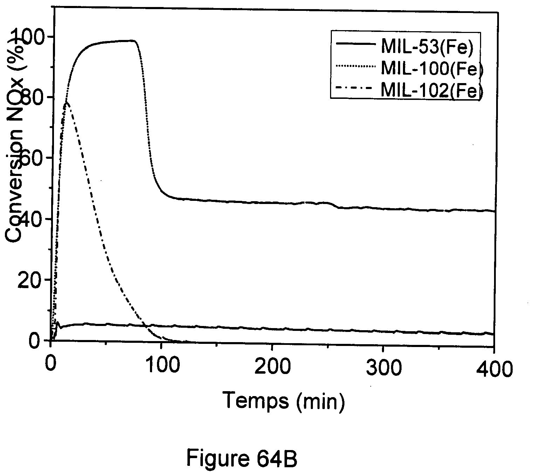

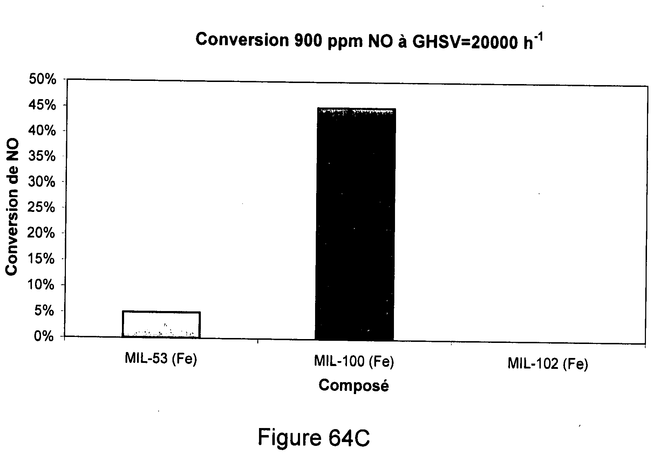

La figure 64 B est un graphique montrant des résultats expérimentaux de conversion de 900 ppm de NO à 30°C, sur différents matériaux après un pré-traitement de l'échantillon à 250°C pendant 6 heures, à la vitesse spatiale de 20000 h⁻¹. Ces résultats sont aussi reportés en figure 64 C sous forme d'histogramme.

On remarque que le MIL-53 présente une activité très limitée (~5%), tandis que le MIL-102 (Fe) montre uniquement des capacités d'adsorption de NO et une activité catalytique de réduction inférieure à 5%, là ou le MIL-100 arrive à dissocier plus de 45% de NO (Figure 64 B et figure 64C).

Ces résultats sont certainement à mettre en relation avec une accessibilité différente des polyèdres de fer dans les structures hybrides.

### Exemple 10: Relation entre activité catalytique et vitesse spatiale pour la réduction des oxydes d'azote selon l'invention

Dans cet exemple, un échantillon de MIL-100 (Fe) fabriqué comme dans ci-dessus d'environ 1,5 g a été introduit dans un réacteur tubulaire reliée à un système d'introduction et analyse des phases gazeuses par chromatographie en phase gaz et spectrométrie de masse.

L'échantillon a été pré-traité par balayage d'un flux d'hélium de 100 mL/min pendant 6h à 250°C.

L'expérience a été menée ensuite à 30°C, sous un mélange de 900 ppm de NO et He comme gaz vecteur, à complément de 100 mL/min au total.

Après une phase initiale d'absorption, l'expérience a montré une conversion stable de NO pendant au moins 20 h de 90% à 5000 h⁻¹ de vitesse spatiale, de 72% à 10000 h⁻¹ et de 45% à 20000 h⁻¹.

Lors de l'introduction d'un mélange de 900 ppm de NO, 5% O₂ et He comme gaz vecteur, à complément de 100 mL/min au total, la conversion a monté à 85% et 67% pour une vitesse spatiale de 10000 h⁻¹ et de 20000 h⁻¹, respectivement.

Les résultats de ces expériences sont montrés sur la figure 64 A qui représente le pourcentage de conversion de NO (disparition de NO) en fonction de la vitesse spatiale en h⁻¹.

### Exemple 11 : Mise en œuvre de la présente invention avec différentes concentrations d'oxyde d'azote

Cet exemple présente une autre méthode de synthèse du trimésate de fer poreux MIL-100 et son activité catalytique pour la conversion des NOx.

Le solide MIL-100(Fe) fluoré ou F-MIL-100(Fe) est obtenu par réaction hydrothermale d'acide trimésique avec fer métallique, HF, acide nitrique et eau. Les proportions du mélange réactionnel sont : 1.0 Fe° : 0.67 1,3,5-BTC : 2.0 HF : 0.6 HNO₃ : 277 H₂O (1,3,5-BTC = acide 1,3,5-benzène tricarboxylique or acide trimésique). Le mélange des réactifs est maintenu à 150°C dans un autoclave téflonné pendant 12 heures. Le pH reste acide tout le long de la synthèse.

Un produit orange clair est récupéré par filtration et lavé avec de l'eau déionisée. Ensuite, le F-MIL-100(Fe) est purifié par un procédé en deux étapes utilisant de l'eau à 80°C pendant 5 h et de l'éthanol à 60°C pendant 3h, obtenant ainsi un composé MIL-100(Fe) très pure. L'échantillon est finalement séché pendant une nuit à moins de 100°C sous une atmosphère d'azote.

De la même manière que dans l'exemple 10, le solide F-MIL-100(Fe) obtenu a été utilisé pour la conversion catalytique de NOx, excepté une concentration différente en NO₂.

Dans cet exemple, 2000 ppm et 500 ppm de NO₂ ont été utilisés pendant la réaction.

Le taux de conversion du NO₂ converti (éliminé) est d'environ 95% à partir d'un taux initial de 2000 ppm en NO₂ tandis que la conversion est de 99% à partir d'une dose initiale de 500 ppm.

### Exemple 12 : Mise en œuvre de la présente invention à différentes températures

Dans les mêmes conditions expérimentales que l'exemple 10, le solide F-MIL-100(Fe) est utilisé pour la conversion catalytique des NOx en faisant varier le paramètre température.

Dans cet exemple, la température de la réaction catalytique est réalisée à différentes températures choisies entre 50 et 150°C.

Le taux de conversion de NO₂ est par exemple de 70% à 70°C et de 60% à 100°C.

### Exemple 13 : Mise en œuvre de la présente invention avec différentes débits d'oxyde d'azote

Dans les mêmes conditions expérimentales que l'exemple 10, le solide F-MIL-100(Fe) est utilisé pour la conversion catalytique des NOx en faisant varier le paramètre débit d'oxyde d'azote.

Dans cet exemple, le débit total de mélange réactif gazeux varie de 150 à 300 ml/min.

Le taux de conversion de NO₂ est de 95% pour un débit de 150 ml/min, c'est-à-dire 1000 ppm NO₂, et de 85% pour un flux de 300 ml/min avec 1000 ppm de NO₂.

### Exemple 14: Mise en œuvre de la présente invention avec un mélange d'oxydes d'azote

Dans les mêmes conditions expérimentales que pour l'exemple 11, le solide F-MIL-100(Fe) est utilisé pour la conversion catalytique des NOx avec cette fois-ci un mélange initial de NO et NO₂.

Dans cet exemple, le mélange introduit contient 810 ppm de NO, 240 ppm NO₂, avec 5 vol% de O₂, et 1 vol% de H₂O, le tout supporté par de l'hélium.

1,5 g de catalyseur est employé avec un flux gazeux total de 100 ml/min.

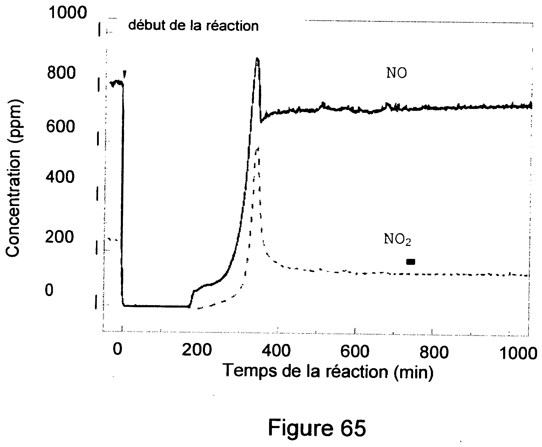

Comme le montre la figure 65, NO et NO₂ ont complètement disparu en sortie de réacteur dès que le mélange réactionnel est introduit dans le réacteur, indiquant ainsi leur adsorption au sein des pores du matériau. L'étape d'adsorption se prolonge jusqu'à une durée de 170 min. en mode flux continu. Après saturation de l'adsorption, de grandes quantités de NO et NO₂ sont libérées de manière soudaine pour donner un maximum de 900 ppm en NO et 590 ppm en NO₂ en sortie de réacteur jusqu'à une durée de 340 min sous flux. Alors, les niveaux de concentration se stabilisent après 450 min sous flux. A l'équilibre, les concentrations en NO et NO₂ sont de 720 ppm de NO, 125 ppm de NO₂, respectivement, correspondant à un taux de conversion de 11% (NO) et 48% (NO₂). Le catalyseur présente une activité stable pendant environ 1000 min. Dans le même temps, la production de N₂ est également visible par chromatographie en phase gazeuse.

### Exemple 15 : Mise en œuvre de la présente invention en présence d'oxygène

Dans cet exemple, le solide F-MIL-100(Fe) est utilisée pour la conversion de NO en présence d'oxygène.

Au préalable, le catalyseur est activé dans un flux d'hélium à 100 ml/min à 250 °C pendant 3 heures. La mixture contient 810 ppm de NO et 10 vol% de O₂, le tout supporté par de l'hélium.

La masse de catalyseur utilisée est de 0,6 g et le flux total gazeux de 100 ml/min.

Le mélange initial est introduit dans un réacteur contenant le catalyseur et le gaz NO disparaît complètement en sortie de réacteur pour une période de temps de l'ordre de 480 min.

Après saturation par adsorption, la concentration en NO remonte à 145 ppm et la plupart du NO est converti en NO₂.

Ce résultat indique notamment que le solide F- MIL-100(Fe) est actif pour l'oxydation de NO en NO₂ en présence d'oxygène. Cette activité d'oxydant est liée au traitement d'activation à 250°C.

### Exemples 16 : Catalyse avec d'autres MOF que ceux des exemples précédents

### Exemple 16 (A)

Cet exemple présente une autre méthode de synthèse du trimésate de fer poreux MIL-100 et son activité catalytique pour la conversion des NOx.

Le solide MIL-100(Fe) non fluoré ou N-MIL-100(Fe) est obtenu sous forme de poudre polycrystalline à partir du mélange réactionnel initial suivant : 1.0 FeNO3.9H2O: 0.66 1,3,5-BTC : 54.5 H₂O (1,3,5-BTC: acide 1,3,5 benzene tricarboxylique ou acide trimésique) le tout maintenu à 160°C dans un autoclave téflonné pendant 12 heures avec une rampe de chauffe initiale de 6 heures et une rampe de refroidissement finale de 12 heures.

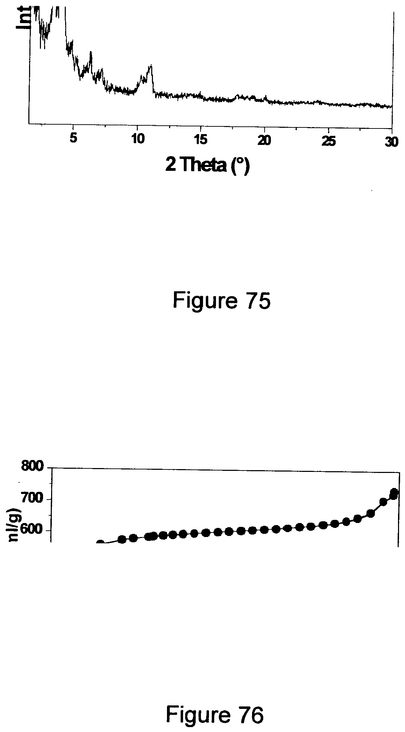

Les résultats de cette expérimentation sont représentés sur la figure 75 (DRX). Cette figure représente un diffractogramme aux rayons X (RX) du solide MIL-100(Fe) non fluoré ou N-MIL-100(Fe).

Un solide orange est récupéré par filtration et lavé avec de l'eau déionisée. Un traitement dans un mélange d'eau déionisée et d'éthanol lui est appliqué pendant 3 heures à 80°C de manière à diminuer la quantité résiduelle d'acide trimésique dans les pores du MOF, suivi par un séchage à température ambiante.

Après ce traitement, il reste de l'acide libre et une étape supplémentaire de purification est réalisée. Le solide est dispersé dans une solution 1 mol/l de solution aqueuse de NH₄F à 70°C pendant 24 heures et immédiatement filtré à chaud et lavé avec de l'eau chaude. Le solide est finalement séché pendant une nuit à 100°C dans un four.

Le catalyseur N-MIL-100(Fe) (voir la figure 76 annexée) présente une surface spécifique BET de 1970 m²/g avec un volume poreux de 1,13 ml/g. La figure 76 représente un isotherme d'adsorption d'azote N₂ du solide MIL-100(Fe) non fluoré ou N-MIL-100(Fe). (P0=1 atmosphère)

N-MIL-100(Fe) est ensuite utilisé pour la conversion catalytique d'un mélange de NOx ( NO et NO₂).

Dans cet exemple, le mélange initial contient 690 ppm de NO et 320 ppm de NO₂, 5 vol% de O₂, et 1 vol% de H₂O, le tout supporté par de l'hélium. La masse de catalyseur utilisée est de 1,5 g et le flux total gazeux de 100 ml/min.

A l'équilibre, les concentrations en NO et NO₂ sont de 650 ppm pour NO et de 150 ppm pour NO₂, respectivement, correspondant à une conversion de 6% de NO et de 53% pour NO₂.

### Exemple 16(B) : MOF (illustratif, n'appartient pas à l'invention)

Dans cet exemple, un autre MOF contenant un cation autre que le fer a été aussi testé dans les même conditions réactionnelles.

Le solide HKUST-1 (Cu₃[(CO₂)₃C₆H₃]₂(H₂O)₃), dont la synthèse est décrite, par exemple, dans S.S.-Y. Chui et al., Science, 283, 1148-1150: A chemically functionalizable material [Cu₃(TMA)₂(H₂O)₃]n [96] a été prétraité à 250°C dans un flux de NO (900 ppm) pendant 6 h, puis soumis au mélange réactionnel comme dans l'exemple 9. Il montre une conversion de NO de 33% à 30°C, pour une vitesse spatiale de 10000 h⁻¹.

### Exemple 17 : Activation d'un solide MOF pour la mise en œuvre de la présente invention

Le solide, déjà mis en forme, est activé soit par pompage sous vide secondaire à environ 10⁻³ Pa (soit environ 10⁻⁵ Torr) à 250°C pendant 3 heures, soit sous flux de gaz inerte sec ou de NO, à 250°C pendant 6 heures.

Cette activation permet d'éliminer toutes ou une partie des impuretés résiduelles provenant du procédé de fabrication du MOF ou de son entreposage. Ces impuretés peuvent être de l'acide, de l'eau, etc.

Cette activation permet également de transformer dans le MOF une partie des sites Fe³⁺ en sites Fe²⁺.

Il paraît clair que la modification de la structure influence les propriétés de décomposition, surtout en présence d'eau et/ou d'autres gaz, tels CO₂, CO, SO₂ et hydrocarbures imbrûlés.

En conclusion, les inventeurs ont démontré qu'une activation appropriée d'un solide MOF permet de manière tout à fait remarquable de catalyser à température ambiante la transformation des NOx, en présence d'oxygène et d'eau sans avoir besoin d'ajout de réducteur.

### Exemple 19 : Exemple de recyclage d'un solide MOF utilisable dans la présente invention

Les composants du solide hybride poreux (MOF) exemplifié ci-dessus sont récupérés après catalyse d'élimination d'oxyde d'azote.

La méthode suivante est utilisée :
Différents tests de suspension de 1 g de MOF dans 50mL de solution aqueuse d'acide chlorhydrique de concentration 1, 2, 3, 4 et 5 mol/L.

Différents tests de chauffage sont réalisés à 50°C sous agitation pendant 1h00 à12h00.

Le métal du MOF passe en solution comme ion Mⁿ⁺(H₂O)x et l'acide carboxylique (exemple trimésique), généralement très peu soluble dans l'eau en conditions acides, précipite.

Les essais sur du MIL-100(Fe) ont par exemple montré ces résultats.

Une filtration permet de récupérer l'acide recristallisé.

Le métal sous forme de chlorure, par exemple de fer lorsque M est du fer, est ensuite concentré par évaporation dans l'eau à l'évaporateur rotatif puis séché sous vide primaire à 50°C pendant 15 heures.

De cette façon les produits de départ sont récupérés et peuvent être utilisés pour synthétiser à nouveau le MOF.

### Exemple 20: Exemple de régénération d'un solide MOF utilisable dans la présente invention

Les solides hybrides poreux (MOF) décrits ci-dessus dans les exemples sont utilisés comme agent deNOx, c'est-à-dire pour la catalyse de l'élimination d'oxyde d'azote.

Dans cet exemple sont mis en œuvre des tests de régénération de ces solides MOF après utilisation. En effet, les inventeurs ont noté qu'après plusieurs cycles d'utilisation du MOF, en fonction des conditions d'application, il pourrait y avoir des espèces comme NO, NO₂, voire des nitrates etc. qui empoisonneraient les sites actifs du MOF.

Le protocole 1 suivants est testé :
▪ Suspension de 1 g du MOF, notamment de MIL-100(Fe), dans 100mL d'éthanol absolu,
▪ Chauffage à 80°C pendant 2 heures, et
▪ Filtration du produit à chaud pour récupérer le MOF régénéré.

Les espèces qui empoisonnent les sites actifs du MOF sont éliminées.

Le protocole 2 suivants est testé :
▪ Faire passer un flux de vapeur d'eau supporté par un gaz inerte, N₂, sur le solide MOF à une température de 80°C pendant 2h00.

Les espèces qui empoisonnent les sites actifs du MOF sont éliminées.

### Exemple 21 : Exemple d'un premier dispositif illustratif n'appartenant pas à l'invention

Un exemple de dispositif (D) illustratif (dispositif « De-NOx ») pour le traitement d'un effluent gazeux ou liquide comprenant de l'oxyde d'azote à éliminer est représenté sur la figure 77.

Sur cette figure, le dispositif comprend un solide MOF (5) appelé aussi « phase active ». Ce dispositif comprend également des moyens de mise en contact (7), (9), (M) dudit solide MOF avec l'oxyde d'azote. Ces moyens comprennent une structure céramique en « nid d'abeille » (M) constituée par une unité de base (3), des canaux longitudinaux de forme carrée (7) avec des parois sur lesquelles est déposé le solide MOF (5), des parois en céramiques (9).

L'effluent à traiter passe à travers les canaux longitudinaux (7) où il est en contact lors de ce passage avec le MOF (5) qui catalyse l'élimination des oxydes d'azote de l'effluent.

Ce dispositif comprend en outre une entrée de l'effluent gazeux ou liquide comprenant de l'oxyde d'azote (E), une sortie (S) de l'effluent traité ne comprenant plus d'oxyde d'azote, un carter en inox (C) protégeant le monolithe céramique (M) supportant le solide MOF.

Sur la Figure 77, une zone (1) est agrandie en coupe transversale du monolithe (M). Cette zone 1 montre bien la structure en « nids d'abeille » du monolithe constitué par une unité de base (3) comprenant les moyens de mise en contact (7) et (9), à savoir des canaux longitudinaux (7), des parois en céramiques (9) et le MOF (5).

Le pot catalytique est constitué ici d'un monolithe (M) en métal ou en céramique, structuré en « nid d'abeilles », qui contient la phase active, le MOF, déposée sur ses parois, et protégé par un carter en inox. Le monolithe est composés de fin canaux longitudinaux séparés par des minces parois. La phase active est déposée sur le support en céramique par imprégnation par la méthode dite d'enduction (« wash-coating ») présentée par exemple dans Handbook of Heterogeneous Catalysis, 2nd Edition, G. Ertl, H. Knözinger, F. Schüth, J. Weitkamp Editors, 2008, ISBN: 978-3-527-31241-2 [95].

Dans un autre exemple, le support est en inox.

La phase active constitue une fine couche d'une épaisseur moyenne d'environ 100 µm sur les parois internes des canaux.

Dans un autre exemple de dispositif de la présente invention, les canaux sont de forme circulaire.

Ce dispositif est aisément intégrable dans un pot catalytique (P) ou un conduit d'évacuation d'un effluent gazeux ou liquide d'une usine, d'un atelier, d'un laboratoire, de produits stockés, de bouches d'aération urbaines.... Il suffit de relier ce dispositif par son entrée (E) à un conduit d'évacuation de l'effluent gazeux à traiter. La catalyse d'élimination est immédiate, même à température ambiante.

Différents dispositifs sont réalisés avec les différents MOF décrits dans les exemples précédents.

### Exemple 22: Exemple d'un deuxième dispositif illustratif n'appartenant pas à l'invention

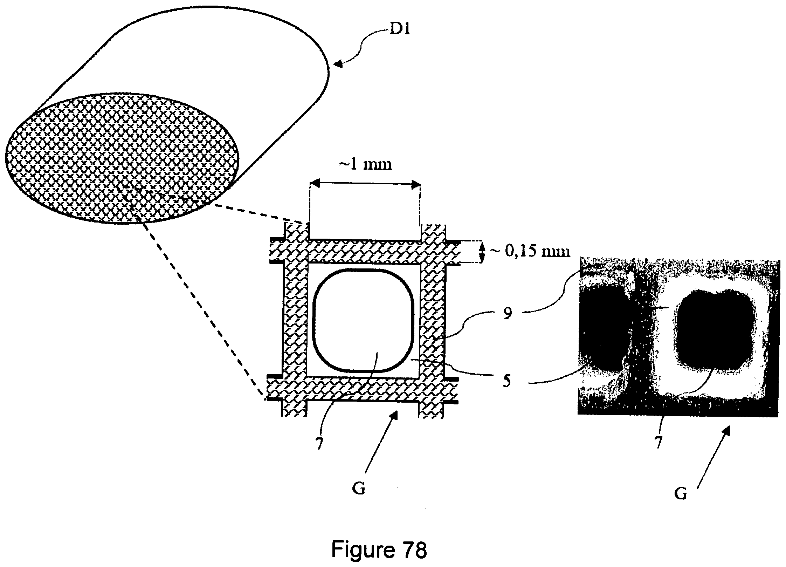

Un autre exemple de dispositif (D1) illustratif pour le traitement d'un effluent gazeux ou liquide comprenant de l'oxyde d'azote à éliminer est représenté sur la figure 78.

Sur cette figure, le dispositif comprend un solide MOF (5). Ce dispositif comprend également des moyens de mise en contact (7), (9), dudit solide MOF avec l'effluent à traiter. Ces moyens comprennent une structure céramique en « nid d'abeille » (M) comprenant des canaux longitudinaux de forme sensiblement circulaire (7) sur les parois (9) desquelles est déposé le solide MOF (5). Ces parois (9) sont en céramique. Dans cet exemple, le monolithe (M) est un monolithe à 60 canaux par cm² (soit 400 cpsi soit 400 canaux par pouce carré ou encore « 400 channels per squared inch »).

Sur la figure 78, une coupe transversale (G) en schéma et en photographie de la structure en « nid d'abeille » est représentée. Cette coupe permet de voir clairement l'unité de base constituant le nid d'abeille qui est un carré. Dans cet exemple non limitatif, ce carré à 1 mm de côté et ses parois ont une épaisseur de 0,15 mm environ. La structure de ces carrés est constituée, dans cet exemple non limitatif par une paroi en céramique appelée aussi support monolithique (9).

Dans d'autres dispositifs, la céramique est remplacée par du carbure de silicium ou de l'inox ou le papier plié ou un autre support adapté.

Les parois sont enduites d'une couche de MOF (5). Le MOF est le catalyseur de décomposition de l'oxyde d'azote selon la présente invention.

Ce dispositif est également, comme celui de l'exemple 25, très facilement intégrable dans un pot catalytique (P) ou à un conduit d'évacuation d'un effluent gazeux ou liquide d'une usine, d'un atelier, d'un laboratoire, de produits stockés, de bouches d'aération urbaines, ou un système de climatisation d'un véhicules, d'un bâtiment....

Ce dispositif permet notamment d'éliminer très efficacement les oxydes d'azotes produits par un moteur thermique ou à explosion d'un véhicule via le passage de l'effluent à traiter par les canaux longitudinaux (7) où il est en contact lors de ce passage avec le MOF (5) qui catalyse l'élimination des oxydes d'azote de l'effluent.

Ce dispositif peut être intégré également dans une ligne d'échappement d'un moteur, par exemple, dans un silencieux.

Différents dispositifs sont réalisés avec les différents MOF décrits dans les exemples précédents.

### Exemple 23: Exemple d'un pot catalytique inséré dans une ligne d'échappement

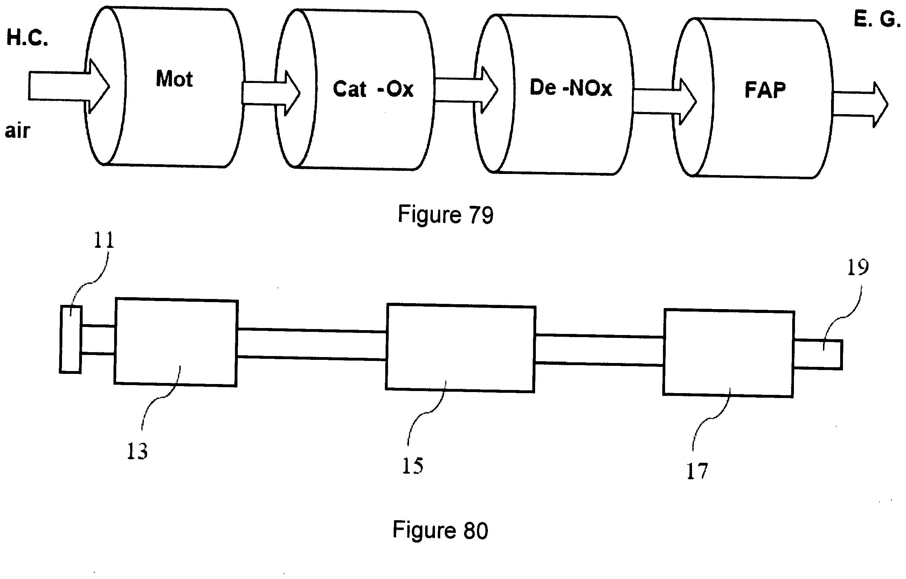

Un autre exemple de dispositif illustratif n'appartenant pas à l'invention est représenté sur la Figure 80. Sur cette figure, il porte la référence (15) et il est inséré dans une ligne d'échappement sous la forme d'un pot catalytique.

Dans cet exemple, une ligne d'échappement est réalisée avec un dispositif décrit dans l'exemple 21 et une ligne d'échappement est réalisée avec un dispositif selon l'invention décrit dans l'exemple 22.

Dans cet exemple, la ligne d'échappement représentée sur cette figure comprend en outre une bride de raccordement au collecteur d'échappement (11), un pot de détente (13), un silencieux arrière (17) et un pot d'échappement (19).

Dans cet exemple, le dispositif de l'invention est disposé sur la ligne d'échappement entre le pot de détente (13) et le silencieux arrière (17).

Différentes lignes d'échappement sont réalisées, dans lesquelles le dispositif est situé à un autre endroit sur la ligne d'échappement, c'est-à-dire entre raccordement au collecteur d'échappement (11) et le pot de détente (13) et entre le silencieux arrière (17) et le pot d'échappement (19).

Le pot catalytique qui exerce plusieurs fonctions et peut être physiquement divisé en plusieurs blocs se trouve généralement entre le collecteur en sortie du moteur et le silencieux. La position exacte est déterminée essentiellement par rapport à la température des gaz d'échappement qu'on souhaite avoir à l'intérieur des catalyseurs.

L'oxyde d'azote est éliminé d'un effluent liquide ou gazeux par simple passage dans le dispositif.

Différents dispositifs sont réalisés avec les différents MOF décrits dans les exemples précédents.

### Exemple 24: Exemple d'un pot catalytique intégré dans un moteur

Dans cet exemple, un pot catalytique (De-NOx) illustratif n'appartenant pas à l'invention est intégré dans une ligne d'échappement d'un moteur (Mot). Le dispositif obtenu est représenté sur la Figure 79. Ce dispositif comprend un dispositif (D) ou (D1) décrits dans l'exemple 21 ou 22 comprenant un solide MOF et des moyens de mise en contact dudit solide MOF avec l'oxyde d'azote correspondant à ceux présentés sur les figures 77 ou 78.

Le dispositif est situé en aval d'une entrée d'air et hydrocarbures (H.C), d'un moteur (Mot) générant du gaz d'échappement comprenant des oxydes d'azote, et d'un dispositif d'oxydation du gaz carbonique (CO) et d'oxydation des hydrocarbures (Cat-Ox). En aval ou en amont du dispositif (De-NOx) selon l'invention, peut être placé un filtre à particules (FAP) permettant l'élimination des suies et un orifice d'échappement du gaz.

Ce dispositif permet d'éliminer les oxydes d'azotes produits par un moteur via le passage de l'effluent à traiter par les canaux longitudinaux (7) où il est en contact, lors de ce passage, avec le MOF (5) qui catalyse l'élimination des oxydes d'azote qu'il contient.

Parmi les différentes fonctions exercées au sein du pot catalytique il y a donc :
1. l'oxydation de CO émis par le moteur du fait de la combustion incomplète des produits carbonés ;
2. l'oxydation des hydrocarbures imbrûlés ;
3. la réduction des oxydes d'azote ;
4. l'élimination des suies.

Ces différentes fonctions peuvent avantageusement être agencées sur un seul système catalytique poly-fonctionnel, ou sur des blocs séparés successifs. L'enchaînement de ces blocs dépend de l'architecture moteur - système de post-combustion choisie par le constructeur. En fonction des émissions du moteur et par rapport aux normes en vigueur, une ou plusieurs de ces fonctions peuvent être aussi absentes.

Selon l'invention, les différents éléments, à savoir le dispositif d'oxydation du gaz carbonique et d'oxydation des hydrocarbures (Cat-Ox) ainsi que le filtre à particules (FAP) peuvent être agencés différemment, c'est à dire dans une position différente de celle représentée.

### Exemple 25: Exemple d'un pot catalytique intégré dans un moteur

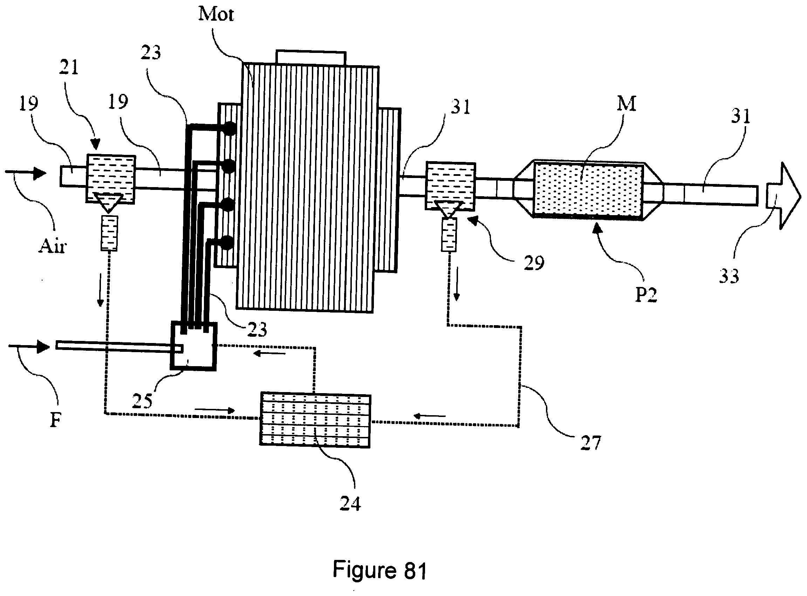

Un autre exemple de pot catalytique (P2) illustratif n'appartenant pas à l'invention est présenté sur la Figure 81.

Différents pots catalytiques (P2) sont réalisés avec un dispositif décrit dans les exemples 21 ou 22.

Le pot catalytique (P2) est relié à un moteur (Mot). Le moteur est régulé au moyen d'un système de contrôle et de post-injection (24, 25, 27, 29).

Le moteur (Mot) est connecté à un tube d'admission d'air (19) et à un tube d'admission de carburant (F).

Le système de post-injection comprend un dispositif de mesure du débit d'air (21) lié à un calculateur (24), un tube d'admission de carburant (F) lié avec un dispositif de régulation du débit du carburant (25), ledit dispositif de régulation du débit du carburant est connecté au calculateur (24) et au moteur (Mot) par des tuyaux et des injecteurs (23). La ligne (27) permet de relier le dispositif de mesure du débit d'air (21) et une sonde (29) permettant de mesurer la richesse en CO et en NO du gaz d'échappement, ladite sonde étant connectée au calculateur (24) par la ligne (27). Ce système permet la régulation du débit d'air et de l'apport de carburant en fonction de la richesse du gaz d'échappement.

Le calculateur (24) règle les débits d'air et de carburant afin d'obtenir une combustion optimale et une composition des gaz d'échappement adaptée au fonctionnement du système catalytique.

Le moteur est également connecté à un tube (31) de sortie du moteur des gaz d'échappement comprenant des oxydes d'azotes.

En aval de la sonde (29) est disposé un pot catalytique (P2) comprenant une structure en céramique « nid d'abeille » (M) conforme à la présente invention comprenant un solide MOF et des moyens de mise en contact dudit solide MOF avec le gaz d'échappement contenant les oxydes d'azote.

Le système d'élimination des NOx décrit dans cet exemple fonctionne également avec une architecture du moteur et/ou des équipements d'immission, émission et contrôle différents.

Lorsque le moteur tourne, le gaz d'échappement passe à travers le pot catalytique (P2) de la présente invention et est ainsi traité par le MOF qui catalyse l'élimination des oxydes d'azote.

Ainsi, Le gaz d'échappement traité (33) ne comporte plus, ou une petite quantité d'oxyde d'azote et le gaz d'échappement traité sort via un tube d'échappement (31).

### LISTE DES REFERENCES

[1] www.senat.fr/rap/r05-125/r05-125.html
[2] www.doctissimo.fr/html/sante/mag_2001/mag0817/dossier/sa_440 4_pollution_effets_sante.htm
[3] P. Degobert, Automobile et Pollution, Editions Technip, Paris (1992).
[4] E. Samoli, E. Aga, G. Touloumi, K. Nisiotis, B. Forsberg, A. Lefranc, J. Pekkanen, B. Wojtyniak, C. Schindler, E. Niciu, R. Brunstein1, M. Dodi Fikfak1, J. Schwartz, K. Katsouyanni, Eur. Respir. J., 27 (2006) 1129.
[5] Peters A; Liu E; Verrier R L; Schwartz J; Gold D R; Mittleman M; Baliff J; Oh J A; Allen G; Monahan K; Dockery D W, Epidemiology (Cambridge, Mass.), (2000 Jan) Vol. 11, No. 1, pp. 11.
[6] C. Arden Pope, III; Richard T. Burnett; George D. Thurston; Michael J. Thun; Eugenia E. Calle; Daniel Krewski; John J. Godleski, Circulation, 109 (2004) 71.
[7] Gouriou F, Morin J-P, Weill M-E, Atmospheric Environment, 38 (2004) 2831.
[8] Son B, Yang WH, Breysse P, Chung TW, Lee YS, Environmental Research, 94 (2004) 291.
[9] Praml G, Schierl R, International Archives of Occupational and Environmental Health, 73 (2000) 209.
[10] www.ademe.fr
[11] Miyata H, Konishi S, Ohno T, Hatayama F, J. Chem. Soc., Faraday Trans., 91 (1995) 149.
[12] Shelef M, McCabe R.W, Catal. Today, 62 (2000) 35.
[13] Farrauto R.J, Heck R.M, Catal. Today, 51 (1999) 351.
[14] Jobson E, Top. Catal., 28 (2004) 191.
[15] Pârvulescu V.I, Grange P, Delmont B, Catal. Today, 46 (1998) 233.
[16] Shelef M, Gandhi H. S, Ind. Eng. Chem. Prod. Res. Dev., 13 (1974) 80.
[17] Burch R, Coleman M. D, Appl. Catal. B, 23 (1999) 115.
[18] Held W, König A, Richter T, Puppe L, SAE paper n° 900496, (1990).
[19] Iwamoto M, Proc. Meet. Catal. Technol. Renoval of NO, Tokyo, (1990) 17.
[20] Resini C, Montanari T, Nappil L, Bagnasco G,Turco M, Busca G, Bregani F, Notaro M, Rocchini G, J. Catal., 214 (2003) 179.
[21] Montanari T, Marie O, Daturi M, Busca G, Appl. Catal. B : Environ., 71 (2007) 216.
[22] Sato S, Yu-U Y, Yahiro H, Mizuno N, Iwamoto M, Appl. Catal., 70 (1991) L1.
[23] Hirabayashi H, Yahiro H, Mizuno N, Iwamoto M, Chem. Lett., (1992) 2235.
[24] Hamada H, Kintaichi Y, Sasaki M, Ito T, Appl.Catal., 64 (1990) L1.
[25] Kintaichi Y, Hamada H, Tabata M, Sasaki M, Ito T, Catal. Lett., 6 (1990) 239.
[26] Burch R, Millington J, Walker A. P, Appl. Catal. B, 4 (1994) 65.
[27] Burch R, Watling T. C, Appl. Catal. B, 11 (1997) 207.
[28] Obuchi A, Ohi A, Nakamura M, Ogata A, Mizuno K, Ohuchi H, App. Catal. B: Environ., 2 (1993) 71.
[29] Bamwenda G.R, Ogata A, Obuchi A, Oi J, Mizuno K, Skrzypek J, Appl. Catal. B : Environ., 6 (1995) 311.
[30] Bourges P, Lunatti S, Mabilon G, Catalysis and automotive Pollution Control IV, Stud. Surf. Sci. Catal., 116 (1998) 213.
[31] Burch R, Ottery D, Appl. Catal. B, 9 (1996) L19.
[32] Tanaka T, Okuhara T, Misono M, Appl. Catal. B : Environ., 4 (1994) L1.
[33] Torikai Y, Yahiro H, Mizuno N, Iwamoto M, Catal. Lett., 9 (1991) 91.
[34] Hamada H, Kintaichi Y, Sasaki M, Ito T, Tabata M, Appl.Catal., 75 (1991) L1.
[35] Inaba M, Kintaichi Y, Hamada H, Proc. 1st Int. Cong. On Environ. Catal., (1995) 327.
[36] Miyadera T, Appl. Catal. B, 2 (1993) 199.
[37] Shimizu K, Satsuma A, Hattori T, Appl. Catal. B: Environ., 25 (2000) 239.
[38] Hamada H, Kintaichi Y, Sasaki M, Ito T, Yoshinari T, Appl. Catal. A : General, 88 (1992) L1.
[39] Haneda M, Kintaichi Y, Hamada H, Catal. Lett., 55 (1998) 47.
[40] Busca G, Lietti L, Ramis G, Berti F, Appl. Catal. B: Environ., 18 (1998) 1.
[41] Busca G, Larrubia M.A, Arrighi L, Ramis G, Catal. Today, 107-108 (2005) 139.
[42] Heck R. M, Catal. Today, 53 (1999) 519.
[43] Koebel M, Madia G, Elsener M, Catal. Today, 53 (1999) 519.
[44] Richter M, Trunschke A, Bentrup U, Brzezinka K.W, Schreier E, Schneider M, Pohl M.-M, Fricke R, J. Catal., 206 (2002) 98.
[45] Kato A, Matsuda S, Kamo T, Nakajima F, Kuroda H, Narita T, J. Phys. Chem., 85 (1981) 4099.
[46] Satterfield C. H, "Heterogenous Catalysis in Industrial Practice" Second edition. McGraw-Hill (1991).
[47] Toyota Patent EP 573 672A1 (1992).
[48] Myioshi N, Matsumoto S, Katoh K, Tanaka T, Harada K, Takahashi N, Yokota K, Sugiura M, Kasahara K, SAE Technical Papers Series No. 950809, 1995.
[49] Krutzsch B, Wenninger G, Weibel M, Stapf P, Funk D.E, Webster E, Chaize E, Kasemo B, Martens J, Kienneman A, SAE Technical Papers Series N° 982592 (1998).
[50] Brevet Allemand N°4319 294 (1994).
[51] Glick H, Klein J.J, Squire W, J. Chem. Eng. Prog. Ser., 27 (1971) 850.
[52] Fritz A, Pitchon V, Appl. Catal. B, 13 (1997) 1.
[53] Gomez-Garcia M.A, Pitchon V, Kiennemann A, Environment International 31 (2005) 445.
[54] Iwamoto M, Hamada M, Catal. Today, 10 (1991) 57.
[55] Brevet Français n°98 05363.
[56] Hamada H, Kintaichi Y, Sasaki M, Ito T, Chem. Lett., 1991, 1069.
[57] Winter E. R. S, J. Catal., 22 (1971) 158.
[58] Amirnazmi A, Benson J.E, Boudart M, J. Catal., 30 (1973) 55.
[59] Sato M, Surf. Sci., 95 (1980) 269.
[60] Sica A.M, Dos Santos J.H.Z, Baibich I.M, Gigola C.E, J. Mol. Cat. A: Chem., 137 (1999) 287.
[61] Neyertz C, Volpe M.A, Gigola C, Catal. Today, 57 (2000) 255.
[62] Iwamoto M, Yokoo S, Sakai K, Kagawa S, J. Chem. Soc., Faraday Trans. 1, 77 (1981) 1629.
[63] Iwamoto M, Maruyama K, Yamasoe N, Seiyama T, J. Chem. Soc., Chem. Commun., (1972) 615.
[64] Lesage T, Verrier C, Bazin P, Saussey J, Daturi M, Phys. Chem. Chem. Phys., 5 (2003) 4435.
[65] Daturi M, Bion N, Saussey J, Lavalley J-C, Hedouin C, Seguelong T, Blanchard G, Phys. Chem. Chem. Phys., 3 (2001) 252.
[66] Bazin P, Marie O, Daturi M, Stud. Surf. Sci. Catal., 171 (2007) 97.
[67] C. Serre, F. Millange, S. Surblé, G. Férey Angew. Chem. Int. Ed. 2004, 43, 6286: A new route to the synthesis of trivalent transition metals porous carboxylates with trimeric SBU.
[68] Suzy Surblé, Christian Serre, Caroline Mellot-Draznieks, Franck Millange, and Gérard Férey: Chem. Comm. 2006, 284-286 : A new isoreticular class of Metal-Organic-Frameworks with the MIL-88 topology.
[69] Thierry Loiseau, Ludovic Lecroq, Christophe Volkringer, Jérôme Marrot, Gérard Férey, Mohamed Haouas, Francis Taulelle, Sandrine Bourrelly, Philip L. Llewellyn and Michel Latroche: J. Am. Chem. Soc. 2006, 128, 10223 : MIL-96, a Porous Aluminum Trimesate 3D Structure Constructed from a Hexagonal Network of 18-Membered Rings and í3-Oxo-Centered Trinuclear Units.
[70] Patricia Horcajada, Suzy Surblé, Christian Serre, Do-Young Hong, You-Kyong Seo, Jong-San Chang, Jean-Marc Grenèche, Irene Margiolaki and Gérard Férey, Chem Comm, 2007, 2820 : Synthesis and catalytic properties of MIL-100(Fe), an iron(III) carboxylate with large pore.
[71] Gérard Férey, Caroline Mellot-Draznieks, Christian Serre, Franck Millange, Julien Dutour, Suzy Surblé, Irena Margiolaki: Science 2005 309, 2040 : A Chromium Terephthalate-Based Solid with Unusually Large Pore Volumes and Surface Area.
[72] S. Surblé, F. Millange, C. Serre, T. Düren, M. Latroche, S. Bourrelly, P.L. Llewellyn and G. Férey J. Am. Chem. Soc. 128 (2006), 46, 14889. MIL-102: A Chromium Carboxylate Metal Organic Framework with Gas Sorption Analysis.
[73] K. Byrapsa, M. Yoshimura, « Handbook of hydrothermal technology », Noyes Publications, Parkridge, New Jersey USA, William Andrew Publishing, LLC, Norwich NY USA, 2001
[74] G. Tompsett, W. C. Conner, K. S. Yngvesson, ChemPhysChem. 2006, 7, 296
[75] S.-E. Park, J.-S. Chang, Y. K. Hwang, D. S. Kim, S. H. Jhung, J.-S. Hwang, Catal. Survey Asia 2004, 8, 91
[76] C. S. Cundy, Collect. Czech. Chem. Commum. 1998, 63, 1699
[77] S. H. Jhung, J.-H. Lee, J.-S. Chang, Bull. Kor. Chem. Soc. 2005, 26, 880
[78] A. Pichon, Cryst. Eng. Comm. 8, 2006, 211-214
[79] D. Braga, Angew. Chem. Int. Ed. 45, 2006, 142-246
[80] D. Braga, Dalton Trans., 2006, 1249-1263.
[81] Sabine Balthasar, Kerstin Michaelis, Norbert Dinauer, Hagen von Briesen, Jörg Kreuter and Klaus Langer, "Preparation and characterisation of antibody modified gelatin nanoparticles as drug carrier system for uptake in lymphocytes", Biomaterials, 2005, 26, 15, 2723-2732.
[82] Ruxandra Gref, Patrick Couvreur, Gillian Barratt and Evgueni Mysiakine, "Surface-engineered nanoparticles for multiple ligand coupling", Biomaterials, 2003, 24, 24, 4529-4537.
[83] Gérard Férey, Christian Serre, Caroline Mellot-Draznieks, Franck Millange, Suzy Surblé, Julien Dutour, Irena Margiolaki Angew. Chem. Int. Ed. 2004, 43,6296 : Access to a giant pores hybrid solid (>380,000Å3) by combination of mastered chemistry, simulation and powder diffraction.
[84] A. Vimont, J.-M. Goupil, J.-C. Lavalley, and M. Daturi, S. Surblé, C. Serre, F. Millange, G. Férey, N. Audebrand, J. Am. Chem. Soc. , 2006, 128, 3218-3227*:* First characterization of acid sites in a new chromium(III) dicarboxylate with giant pores.
[85] J. Chatt and L. A. Duncanson, J. Chem. Soc., 1953, 2939-2947: Olefin co-ordination compounds. Part III. Infra-red spectra and structure: attempted preparation of acetylene complexes.
[86] A. Vimont, H. Leclerc, F. Mauge, M. Daturi, J. C. Lavalley, S. Surblé, C. Serre et G. Férey, , Journal of Physical Chemistry C, 111 (2007), 383-388: Creation of Controlled Bronsted Acidity on a Zeotypic Mesoporous Chromium(III) Carboxylate by Grafting Water and Alcohol Molecules.
[87] C. T. Dziobkowski, T. J. Wrobleski, D. B. Brown, Inorg. Chem. 1982, 20, 671.
[88] S. Ameerunisha et al., J. Chem. Soc. Perkin Trans. 21995, 1679.
[89] Y. Liu, J.F. Eubank, A.J. Cairns, J. Eckert, V.Ch. Kravtsov, R. Luebke, M. Eddaoudi, Angew. Chem. Int. Ed. 2007, 46, 3278-3283.
[90] Shiotani Akinori, Z. Naturforsch. 1994, 49, 12, 1731-1736.
[91] Serre et al., Science, 2007, 315, 1828.
[92] C. Serre et al. J. Am. Chem. Soc., 2005, 127, 16273-16278.
[93] B.N. Shelimov, N.N. Tolkachev, O.P. Tkachenko, G.N. Baeva, K.V. Klementiev, A.Yu. Stakheev, V.B. Kazansky, Journal of Photochemistry and Photobiology A-Chemistry, 195 (2008) 81.
[94] T. R. Whitfield, X. Wang, L. Liu, A. J. Jacobson Metal-organic frameworks based on iron oxide octahedral chains connected by benzenedicarboxylate dianions, Solid State Sci., 7, 1096-1103, 2005.
[95] Handbook of Heterogeneous Catalysis, 2nd Edition, G. Ertl, H. Knözinger, F. Schüth, J. Weitkamp Editors, 2008, ISBN: 978-3-7-31241-2.
[96] S.S.-Y. Chui et al., Science, 283, 1148-1150: A chemically functionalizable material [Cu₃(TMA)₂(H₂O)₃]ₙ.
[97] P.G.M Wuts & T.W. Greene, « Greene's Protective Groups in organic Synthesis », fourth edition, 2007, Editions John Wiley & Son.

## Revendications

1. Utilisation d'un solide MOF cristallin poreux constitué d'une succession tridimensionnelle de motifs choisis dans le groupe comprenant :
-
Fe₃OX[C₆H₃-(CO₂)₃]₂ et
-
Fe₆O₂X₂[C₁₂H₆N₂-(CO₂)₄]₃
dans laquelle :
• X est un anion choisi dans le groupe comprenant OH⁻, Cl⁻, F⁻, comme catalyseur de réduction d'oxyde d'azote,
ledit solide MOF cristallin poreux ayant des pores dont la taille est de 0,4 à 6 nm,
ladite réduction d'oxyde d'azote étant effectuée sans utilisation d'un réducteur.

2. Utilisation selon la revendication 1, comprenant un pourcentage massique de fer en phase sèche de 5 à 50%.

3. Utilisation selon l'une quelconque des revendications 1 ou 2, dans laquelle le solide a une capacité de charge en gaz de 0,5 à 50 mmol de gaz par gramme de solide sec.

4. Utilisation selon l'une quelconque des revendications 1 à 3, dans laquelle au moins 1 à 5 mmol de gaz par gramme de solide sec se coordine avec le fer.

5. Utilisation selon l'une quelconque des revendications 1 à 4, dans laquelle ledit solide a une structure rigide qui se gonfle ou se contracte avec une amplitude allant de 0 à 10%.

6. Utilisation selon l'une quelconque des revendications 1 à 5, dans laquelle le solide a un volume poreux de 0,5 à 4 cm³/g.

7. Utilisation selon l'une quelconque des revendications 1 à 6, dans laquelle ledit solide Fe₃OX[C₆H₃-(CO₂)₃]₂ est de structure rigide, une structure rigide étant une structure qui se gonfle ou se contracte avec une amplitude allant de 0 à 10%.

8. Utilisation selon l'une quelconque des revendications précédentes, dans laquelle l'oxyde d'azote est sous forme NO ou NO₂ ou N₂O ou d'un mélange de deux ou des trois de ceux-ci.

9. Utilisation selon l'une quelconque des revendications précédentes, comprenant une étape de mise en contact dudit solide MOF avec l'oxyde d'azote à réduire.

10. Utilisation selon la revendication 9, comprenant avant l'étape de mise en contact, une étape d'activation du solide MOF par chauffage sous vide ou sous atmosphère réductible ou neutre.

11. Utilisation selon la revendication 10, dans laquelle dans l'étape d'activation le chauffage est réalisé à une température de 150 à 280°C.

12. Utilisation selon la revendication 9, 10 ou 11, dans laquelle la mise en contact est réalisée en présente d'oxygène et/ou d'eau.

13. Utilisation selon l'une quelconque des revendications précédentes, dans un procédé d'élimination d'oxyde d'azote d'un milieu.

14. Utilisation selon la revendication 13, dans laquelle le milieu est un effluent liquide ou gazeux.

15. Utilisation selon la revendication 14, dans laquelle l'effluent provient d'une combustion d'hydrocarbures ou de l'oxydation de composés azotés.

16. Utilisation selon la revendication 15, dans laquelle l'effluent est choisi parmi un effluent d'un véhicule, d'un bateau, d'une usine, d'un atelier, d'un laboratoire, de produits stockés, de bouches d'aération urbaines.

17. Utilisation selon l'une quelconque des revendications 1 à 16, dans laquelle le solide MOF est sous une forme choisie parmi des nanoparticules, une poudre, des galets, des granules, un revêtement.

## Patentansprüche

1. Verwendung eines porösen kristallinen MOF-Feststoffs, der aus einer dreidimensionalen Abfolge von Einheiten besteht, die aus der Gruppe ausgewählt sind, die umfasst:
Fe₃OX[C₆H₃-(CO₂)₃]₂ und
Fe₆O₂X₂[C₁₂H₆N₂-(CO₂)₄]₃
wobei:
• X ist ein Anion, ausgewählt aus der Gruppe bestehend aus OH⁻, Cl⁻, F⁻,
als Katalysator für die Stickoxidreduktion,
wobei der poröse kristalline MOF-Feststoff eine Porengröße von 0,4 bis 6 nm aufweist,
die Reduktion der Stickoxide erfolgt ohne den Einsatz eines Reduktionsmittels.

2. Verwendung nach Anspruch 1, umfassend einen Gewichtsprozentsatz an Eisen in der Trockenphase von 5 bis 50 %..

3. Verwendung nach einem der Ansprüche 1 oder 2, wobei der Feststoff eine Gasbeladungskapazität von 0,5 bis 50 mmol Gas pro Gramm trockenem Feststoff aufweist.

4. Verwendung nach einem der Ansprüche 1 bis 3, wobei mindestens 1 bis 5 mmol Gas pro Gramm trockener Feststoffkoordinaten mit Eisen.

5. Verwendung nach einem der Ansprüche 1 bis 4, **dadurch gekennzeichnet, dass** der Feststoff eine starre Struktur aufweist, die mit einer Amplitude von 0 bis 10 % quillt oder sich zusammenzieht.

6. Verwendung nach einem der Ansprüche 1 bis 5, wobei der Feststoff ein Porenvolumen von 0,5 bis 4 cm³/g aufweist.

7. Verwendung nach einem der Ansprüche 1 bis 6, wobei der Fe₃OX[C₆H₃-(CO₂)₃]₂ -Feststoff eine starre Struktur aufweist, eine starre Struktur ist eine Struktur, die sich mit einer Amplitude von 0 bis 10 % ausdehnt oder zusammenzieht.

8. Verwendung nach einem der vorhergehenden Ansprüche, wobei das Stickoxid in Form von NO oder NO₂ oder N₂O oder einer Mischung aus zwei oder allen drei dieser Stoffe vorliegt.

9. Verwendung nach einem der vorhergehenden Ansprüche, umfassend einen Schritt des Kontakts des MOF-Feststoffs mit dem zu reduzierenden Stickoxid.

10. Verwendung nach Anspruch 9, umfassend vor dem Kontaktierungsschritt einen Schritt der Aktivierung des MOF-Feststoffs durch Erhitzen unter Vakuum oder unter einer reduzierbaren oder neutralen Atmosphäre.

11. Verwendung nach Anspruch 10, wobei in der Aktivierungsstufe das Erhitzen bei einer Temperatur von 150 bis 280°C durchgeführt wird.

12. Verwendung nach Anspruch 9, 10 oder 11, wobei die Kontaktierung in Gegenwart von Sauerstoff und/oder Wasser durchgeführt wird.

13. Verwendung nach einem der vorhergehenden Ansprüche in einem Verfahren zur Entfernung von Stickoxiden aus einem Medium.

14. Verwendung nach Anspruch 13, wobei das Medium ein flüssiger oder gasförmiger Ausfluss ist.

15. Verwendung nach Anspruch 14, wobei der Abfluss aus der Verbrennung von Kohlenwasserstoffen oder der Oxidation von Stickstoffverbindungen stammt.

16. Verwendung nach Anspruch 15, wobei das Abwasser ausgewählt ist aus dem Abwasser eines Fahrzeugs, eines Schiffs, einer Fabrik, einer Werkstatt, eines Labors, gelagerter Produkte, städtischer Lüftungsanlagen.

17. Verwendung nach einem der Ansprüche 1 bis 16, wobei der MOF-Feststoff in einer Form vorliegt, die ausgewählt ist aus Nanopartikeln, Pulver, Kieselsteinen, Granulat, Beschichtung.

## Claims

1. A use of a porous crystalline MOF solid consisting of a three-dimensional succession of units selected from the group comprising:
-
Fe₃OX[C₆H₃-(CO₂)₃]₂
and
-
Fe₆O₂X₂[C₁₂H₆N₂-(CO₂)₄]₃
in which:
• X is an anion selected from the group comprising OH⁻, Cl⁻, F⁻, as catalyst for reduction of nitrogen oxide,
said porous crystalline MOF solid having a pore size of from 0.4 to 6 nm,
said reduction of nitrogen oxide being carried out without the use of a reducing agent.

2. The use according to claim 1, comprising a percentage by weight of iron in the dry phase of from 5 to 50%.

3. The use according to anyone of claims 1 or 2, in which the solid has a gas loading capacity of from 0.5 to 50 mmol of gas per gram of dry solid.

4. The use according to anyone of claims 1 to 3, in which at least 1 to 5 mmol of gas per gram of dry solid coordinates with iron.

5. The use according to anyone of claims 1 to 4, in which said solid has a rigid structure that swells or shrinks with an amplitude in the range from 0 to 10%.

6. The use according to anyone of claims 1 to 5, in which the solid has a pore volume of from 0.5 to 4 cm³/g.

7. The use according to anyone of claims 1 to 6, in which said solid Fe₃OX[C₆H₃-(C0₂)₃)₂ is of rigid structure, a rigid structure being a structure that swells or shrinks with an amplitude in the range from 0 to 10%.

8. The use according to anyone of the preceding claims, in which the nitrogen oxide is in the form of NO or NO₂ or N₂O or of a mixture of two or three of the latter.

9. The use according to anyone of the preceding claims, comprising a step of contacting said MOF solid with the nitrogen oxide to be reduced.

10. The use according to claim 9, comprising before the contacting step, a step of activation of the MOF solid by heating under vacuum or under a reducible or neutral atmosphere.

11. The use according to claim 10, in which in the activation step, heating is carried out at a temperature of from 150 to 280°C.

12. The use according to claim 9, 10 or 11, in which the contacting is carried out in the presence of oxygen and/or water.

13. The use according to anyone of the preceding claims, in a method for removing nitrogen oxide from a medium.

14. The use according to claim 13, in which the medium is a liquid or gaseous effluent.

15. The use according to claim 14, in which the effluent comes from combustion of hydrocarbons or from oxidation of nitrogen compounds.

16. The use according to claim 15, in which the effluent is selected from an effluent from a vehicle, a boat, a factory, a workshop, a laboratory, stored products, urban air vents.

17. The use according to anyone of claims 1 to 16, in which the MOF solid is in a form selected from nanoparticles, a powder, pebbles, granules, a coating.
